(19) Europäisches Patentamt
European Patent Office
Office européen des brevets

(11) EP 2 982 715 B1

(12) **EUROPEAN PATENT SPECIFICATION**

(45) Date of publication and mention of the grant of the patent:
**22.08.2018 Bulletin 2018/34**

(21) Application number: **14731509.7**

(22) Date of filing: **04.04.2014**

(51) Int Cl.:
***C08L 69/00*** *(2006.01)* ***C08F 6/14*** *(2006.01)*
***C08L 51/04*** *(2006.01)* ***C08F 265/06*** *(2006.01)*
***C08F 6/22*** *(2006.01)* ***C08F 279/02*** *(2006.01)*

(86) International application number:
**PCT/JP2014/059955**

(87) International publication number:
**WO 2014/098269 (26.06.2014 Gazette 2014/26)**

(54) **TOUGHENING AGENT FOR POLYCARBONATE RESIN, POLYCARBONATE RESIN COMPOSITION, AND MOLDED ARTICLE**

POLYCARBONATHARZ-HÄRTUNGSMITTEL, POLYCARBONATHARZZUSAMMENSETZUNG UND FORMARTIKEL DARAUS

AGENT DE DURCISSEMENT POUR RÉSINE DE POLYCARBONATE, COMPOSITION DE RÉSINE DE POLYCARBONATE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2013 JP 2013079689**

(43) Date of publication of application:
**10.02.2016 Bulletin 2016/06**

(73) Proprietor: **Mitsubishi Chemical Corporation**
**Tokyo (JP)**

(72) Inventors:
- **FUJIKAWA, Yuichiro**
  **Tokyo 100-8251 (JP)**
- **MATSUOKA, Shinji**
  **Tokyo 100-8251 (JP)**
- **NODONO, Mitsufumi**
  **Tokyo 100-8251 (JP)**
- **OTONARI, Hiroaki**
  **Tokyo 100-8251 (JP)**
- **SASAKI, Haruo**
  **Tokyo 100-8251 (JP)**

(74) Representative: **Ter Meer Steinmeister & Partner Patentanwälte mbB**
**Nymphenburger Straße 4**
**80335 München (DE)**

(56) References cited:
**EP-A1- 1 245 597** **EP-A2- 0 900 827**
**WO-A2-02/32999** **JP-A- H0 570 657**
**JP-A- H0 953 009** **JP-A- H11 343 380**
**JP-A- H11 343 380** **JP-A- 2008 024 919**
**JP-A- 2011 231 280** **JP-A- 2012 067 230**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a reinforcing agent for polycarbonate resin, and a polycarbonate resin composition containing the reinforcing agent for polycarbonate resin and a polycarbonate resin. The invention also relates to a molded article obtained by molding this polycarbonate resin composition.

### BACKGROUND ART

Polycarbonate resins exhibit excellent transparency, impact resistance, heat resistance, dimensional stability, and the like as a general-purpose engineering plastic, and thus they are industrially widely used as a material in the motor vehicle field, the OA equipment field such as a printer, and the electric and electronic field such as a mobile phone for their excellent properties. In recent years, these materials have been thinned year after year particularly for the purpose of achieving small size, light weight, higher function, and the like. Hence, a resin material which exhibits favorable mechanical properties such as sufficient impact resistance and exerts excellent resistance to thermal coloration and resistance to moist heat is desired for a thinned and lightweight molded body as well.
Hitherto, aromatic polycarbonate resins have been widely used in various applications such as a motor vehicle and the OA equipment field as an engineering plastic exhibiting excellent heat resistance, impact resistance, and transparency. Meanwhile, aromatic polycarbonate resins are generally produced using raw materials obtained from petroleum resources, but it is desired to provide plastic molded articles using raw materials derived from biomass resources such as plants in consideration of the recent situation that the depletion of petroleum resources is concerned. In addition, it is desired to develop molded articles or material parts from plastics using plant-derived monomers which are carbon-neutral even when being disposed after use as a raw material since the fact that the global warming caused by the increase and accumulation of carbon dioxide emission brings about the climate change is also concerned, and the demand is strong particularly in the field of large-sized molded articles.
Hence, various polycarbonate resins obtained using plant-derived monomers as a raw material hitherto have been developed. For example, it is proposed that a polycarbonate resin is obtained through transesterification of isosorbide as a plant-derived monomer with diphenyl carbonate (Patent Document 1). In addition, a polycarbonate resin obtained by copolymerizing bisphenol A is proposed as a copolycarbonate of isosorbide with another dihydroxy compound (Patent Document 2), and further it is attempted to improve the rigidity of a homopolycarbonate resin composed of isosorbide by copolymerizing isosorbide with an aliphatic diol (Patent Document 3).
Meanwhile, a polycarbonate resin obtained by polymerizing 1,4-cyclohexanedimethanol that is an alicyclic dihydroxy compound (Patent Documents 4 and 5) or a polycarbonate resin composition prepared by adding a rubber-like polymer to a polycarbonate resin obtained through transesterification of isosorbide with diphenyl carbonate (Patent Document 6) is proposed. Furthermore, a polycarbonate resin composition prepared by adding a styrene-based resin to a polycarbonate resin obtained through transesterification of isosorbide with diphenyl carbonate is proposed (Patent Document 7). In addition, a polycarbonate resin composition prepared by adding an impact strength modifier to a polycarbonate resin obtained through transesterification of isosorbide with diphenyl carbonate is proposed (Patent Document 8).
As a polycarbonate resin composition prepared by adding an impact strength modifier, an aromatic carbonate polymer composition that is composed of an aromatic carbonate polymer such as polycarbonate or a polycarbonate/polyester blend and an impact resistance modifier which does not contain an alkaline substance to catalytically deteriorate the polycarbonate and exhibits improved thermal stability is proposed (Patent Document 9). This impact resistance modifier is a material that is prepared by an emulsion polymerization process and has a pH of about from 3 to 8, and a preferred emulsifier used in the emulsion polymerization process is an alkyl sulfonate salt having an alkyl group having from 6 to 18 carbon atoms.
In addition, a thermoplastic resin composition that is a resin composition prepared by blending an aromatic polycarbonate resin, an aromatic polyester resin, talc, and a carbon fiber together, has a small coefficient of linear expansion, high rigidity, and mechanical properties, forms a molded article exhibiting an excellent surface appearance, and is suitable for motor vehicle exterior parts and the like, and a molded article of the thermoplastic resin composition are proposed in Patent Document 10. JPH11343380 discloses polycarbonate resin compositions comprising a diene rubber graft copolymer as reinforcing agent.

CITATION LIST

PATENT DOCUMENT

Patent Document 1: U.K. Patent No. 1,079,686
Patent Document 2: JP 56-55425 A
Patent Document 3: WO 04/111106 A
Patent Document 4: JP 6-145336 A
Patent Document 5: JP 63-12896 B
Patent Document 6: WO 08/146719 A
Patent Document 7: JP 2007-70438 A
Patent Document 8: WO 2012/008344 A
Patent Document 9: JP 11-158365 A
Patent Document 10: JP 2010-275449 A

SUMMARY OF THE INVENTION

PROBLEM TO BE SOLVED BY THE INVENTION

However, the polycarbonate resin that is described above and obtained through transesterification of isosorbide as a plant-derived monomer with diphenyl carbonate is brown and thus is not satisfactory from the viewpoint of transparency. In addition, the polycarbonate resin that is described above and obtained by polymerizing 1,4-cyclohexanedimethanol of an alicyclic dihydroxy compound has a low molecular weight of about 4000 at most and a low glass transition temperature in many cases.

In addition, the polycarbonate resin composition obtained by adding a rubber-like polymer to a polycarbonate resin obtained through transesterification of isosorbide with diphenyl carbonate has a high glass transition temperature. Hence, in the case of trying to obtain a polycarbonate resin composition having a molecular weight enough to exhibit a practical strength, the melt viscosity increases too high, and thus there is a problem that not only the polymerization by an industrial method is difficult but also molding of the polycarbonate resin composition obtained is difficult due to insufficient fluidity or coloration of the polycarbonate resin, a decrease in molecular weight, and the generation of gas by decomposition are caused when the molding temperature is raised in order to secure the fluidity. On the other hand, only a polycarbonate resin that is inferior in strength such as impact resistance is obtained when the molecular weight is lowered in order to secure the fluidity of the polycarbonate resin, and the effect obtained by the addition of a rubber-like polymer is limited. In addition, the polycarbonate resin composition prepared by adding a styrene-based resin is not satisfactory from the viewpoint of transparency, and the polycarbonate resin composition prepared by adding an impact strength modifier is required to be improved in the YI value, the total light transmittance, and the haze value.

As described above, various polycarbonate resins obtained using a raw material obtained from biomass resources such as plants hitherto have been proposed, but there has not been polycarbonate resin that can be satisfactorily used in the building material field, the electric and electronic field, the motor vehicle field, the optical part field, and the like in which both transparency and strength are required.

The polycarbonate resin is required to have both transparency and strength particularly in applications such as a switch protective transparent cover, an automatic shut off lighting switch, a resinous shield, a front screen of motorcycle, a transparent building material for daylighting, and a roof of car port. However, those which are sufficiently suitable for these applications hitherto have not been obtained in polycarbonate resins obtained using a raw material obtained from biomass resources.

In addition, the present inventors have paid attention to the following problems in the background art described above. In other words, in the case of the aromatic polycarbonate resin that has been widely used hitherto, the resin itself exhibits excellent impact resistance but the polycarbonate resin obtained using isosorbide as a dihydroxy compound of a raw material is inferior in impact resistance as compared to an aromatic polycarbonate resin of the prior art and thus is required to be improved. In order to cope with this problem, as described above, the polycarbonate resin composition containing a polycarbonate resin having a high glass transition temperature and a rubber-like polymer is proposed as one which can improve the impact resistance (Patent Document 6 above).

However, the polycarbonate resin composition that is clearly described in Patent Document 6 is one prepared using a homopolymer of isosorbide or a polycarbonate resin obtained by copolymerizing isosorbide with a small amount of 1,3-propanediol, 1,1-bis(4-hydroxyphenyl)decane, or the like. In the case of the polycarbonate resin composition prepared using these polycarbonate resins, the impact resistance, namely, the impact resistant value as a general

physical property value is improved, but a problem has been found out that the effect of improving the surface impact resistance, namely, the surface impact resistant value and the ductile fracture rate that is the evaluation closer to practical physical properties is small, and thus the polycarbonate resin composition is not suitable for the applications such as the OA (Office Automation) equipment, the electronic and electric parts, the casing of precision instrument parts, and interior and exterior parts for motor vehicle.

In addition, a polycarbonate resin obtained using isosorbide hitherto has been proposed as described in Patent Documents 1 to 5, but the current situation is that a resin which exhibits satisfactory heat resistance and impact resistance so as to be applied in large-sized molded articles has not yet been provided. Moreover, only the glass transition temperature and the basic mechanical properties are disclosed in these documents, but the impact resistance that is important for the large-sized molded articles described above is not sufficiently disclosed.

Hence, in order to solve such a problem, a resin composition prepared by blending an addition polymerization type polymer at a proportion of from 25 to 400 parts by mass with respect to 100 parts by mass of a polycarbonate resin containing isosorbide is disclosed in Patent Document 7 described above. In addition, a resin composition prepared by blending a rubber-like polymer at a proportion of from 1 to 30 parts by mass with respect to 100 parts by mass of a polycarbonate resin containing isosorbide is disclosed in Patent Document 6 described above.

However, the polycarbonate resin obtained by the technique disclosed in Patent Document 1 is brown, and thus it does not have the appearance that can withstand use in a wide range of fields. In addition, the polycarbonate resins obtained by the techniques disclosed in Patent Document 2 and Patent Document 3 are inferior in a mechanical strength, particularly impact resistance, and thus they are insufficient for use in a wide range of fields. In addition, the number average molecular weight of the polycarbonate resins disclosed in Patent Document 4 and Patent Document 5 is about 4,000 to be lower as compared to a general aromatic polycarbonate resin, and thus the polycarbonate resins are often inferior in impact resistance and heat resistance.

Furthermore, in the technique disclosed in Patent Document 7, an improvement in impact resistance is aimed by blending an acrylonitrile-butadiene-styrene graft copolymer (hereinafter, referred to as the "ABS resin" in some cases) with a polycarbonate containing isosorbide, but a sufficient effect of improving the impact resistance is not acknowledged. Moreover, it is difficult to use the polycarbonate resin in a wide range of fields since the transparency thereof decreases as the ABS resin is blended. In addition, in the technique disclosed in Patent Document 6, the effect of improving the impact resistance by a rubber-like polymer is greater as compared to the ABS resin, but a decrease in transparency of the polycarbonate resin is unavoidable, and thus the application thereof is limited as in Patent Document 1.

In addition, in the technique disclosed in Patent Document 9, an emulsifier composed of an alkyl sulfonate salt (a salt of a strong acid and a base) is used, the molded article obtained exhibits excellent moisture resistance but low resistance to thermal coloration. In the technique disclosed in Patent Document 10, calcium chloride (a salt of a strong acid and a strong base) is used as a coagulant at the time of collecting the rubber-like graft polymer, and the molded article obtained exhibits excellent resistance to moist heat but low resistance to thermal coloration. In addition, the resistance to metal corrosion at the time of molding is poor since a great number of chlorine (halide) elements is contained.

As described above, in the prior art, it has been significantly difficult to provide a polycarbonate resin composition that is excellent in all of impact resistance including transparency, resistance to thermal coloration, heat resistance, moist-heat resistant property, and surface impact resistance.

An object of the invention is to solve the above problem and to provide a reinforcing agent for polycarbonate resin which can impart impact resistance, resistance to thermal coloration, and resistance to moist heat to a polycarbonate resin.

In addition, an object of the invention is to solve the above problem and to provide a polycarbonate resin composition which have both excellent transparency and strength and can be suitably used in the building material field, the OA equipment field such as a printer, the electric and electronic field such as a mobile phone, the motor vehicle field, the optical part field, and the like and a polycarbonate resin molded article.

In addition, another object of the invention is to provide a polycarbonate resin composition which exhibits excellent surface impact resistance, impact resistance, and the like and a polycarbonate resin molded article thereof, and further a polycarbonate resin composition which exhibits various excellent physical properties such as hue, heat resistance, light resistance, moldability, and a mechanical strength and a polycarbonate resin molded article.

Furthermore, another object of the invention is to provide a polycarbonate resin composition which has all of transparency, heat resistance, and impact resistance and a polycarbonate resin molded article.

MEANS FOR SOLVING PROBLEM

The present inventors have found out that a reinforcing agent for polycarbonate resin composed of a specific rubber-like graft polymer, as defined in the claims, can solve the above problem, thereby completing the invention.

In addition, the present inventors have found out that a polycarbonate resin composition containing a polycarbonate resin which contains a structural unit derived from a dihydroxy compound having a specific moiety and has a

glass transition temperature lower than a predetermined value and a reinforcing agent for polycarbonate resin composed of a specific rubber-like graft polymer can solve the above problem, thereby completing the invention.

In other words, the gist of the invention is the following [1] to [24].

[1] A reinforcing agent for polycarbonate resin including a rubber-like graft polymer, in which a ΔYI value of a test piece fabricated by molding a polycarbonate resin composition containing the rubber-like graft polymer at 3 parts by mass and an aromatic polycarbonate resin (Iupilon S-2000F manufactured by Mitsubishi Engineering-Plastics Corporation) having a viscosity average molecular weight of 24,000 at 97 parts by mass under the following conditions is 36 or less and a ΔMFR value of a pellet of the polycarbonate resin composition is 3 or less.

"Condition 1" condition for fabricating pellet and test piece:

The polycarbonate resin composition is kneaded using a devolatilization type extruder (PCM-30 manufactured by Ikegai Corp.) heated to have a barrel temperature of 280°C under a condition of a screw rotation speed of 150 rpm to obtain a pellet. This pellet is molded using a 100 t injection molding machine (SE-100DU manufactured by Sumitomo Heavy Industries, Ltd.) under a condition of a cylinder temperature of 280°C and a mold temperature of 90°C to obtain a test piece (length: 100 mm, width: 50 mm, thickness: 2 mm) having a flat plate shape.

"Condition 2" condition for measuring ΔYI value:

A YI value of the test piece is measured in conformity with JIS K7105 by a reflected light measuring method using a spectral color difference meter (model name "SE2000" manufactured by NIPPON DENSHOKU INDUSTRIES Co., LTD.) under a condition of a C light source and a 2 degree field of view. First, a YI value ($YI_B$) of the test piece before being heat aged is measured. Subsequently, a YI value ($YI_A$) of the test piece after being heat aged for 12 hours at a temperature of 140°C using a high temperature oven (model name "PMS-B" manufactured by ESPEC CORP.) is measured. A ΔYI value is calculated by the following Equation.

$$\Delta YI = YI_A - YI_B$$

"Condition 3" condition for measuring ΔMFR value:

A melt mass flow rate (MFR) value of the pellet is measured at a cylinder temperature of 300°C and a load of 1.2 kg in conformity with ISO1133 using a melt indexer (model name "S-111" manufactured by TOYO SEIKI SEISAKU-SHO LTD.). First, a MFR value ($MFR_B$) of a pellet before being heat aged is measured. Subsequently, a MFR value ($MFR_A$) of another pellet after being heat aged for 60 hours under a condition of a temperature of 120°C and a relative humidity of 100% using a pressure cooker (model name "unsaturated type highly accelerated life test equipment PC-422R" manufactured by HIRAYAMA MANUFACTURING CORPORATION). A ΔMFR value is calculated by the following Equation.

$$\Delta MFR = MFR_A - MFR_B$$

[2] The reinforcing agent for polycarbonate resin according to [1], in which a total amount (g/g) of a sulfate ion ($SO_4^{2-}$) and a sulfite ion ($SO_3^{2-}$) that are contained in the rubber-like graft polymer and measured through the following extraction treatment by hot water is 3.5 ppm or less.

Condition for hot water extraction:

into a pressure proof glass vessel, 20.0 g of the rubber-like graft polymer is weighed and introduced, 200 ml of deionized water is added to this, and an extraction treatment by hot water is conducted for 20 hours at 95°C in a gear oven.

[3] The reinforcing agent for polycarbonate resin according to [1] or [2], in which a content (g/g) of a chlorine ion ($Cl^-$) contained in the rubber-like graft polymer is 150 ppm or less.

[4] The reinforcing agent for polycarbonate resin according to any one of [1] to [3], in which the rubber-like graft polymer contains a thioether-based antioxidant having a molecular weight of 700 or more.

[5] The reinforcing agent for polycarbonate resin according to any one of [1] to [4], in which a rubber part of the rubber-like graft polymer contains a butadiene structural unit.

[6] The reinforcing agent for polycarbonate resin according to any one of [1] to [5], in which a rubber part of the rubber-like graft polymer contains a butadiene structural unit at 70% by mass or more.

[7] The reinforcing agent for polycarbonate resin according to any one of [1] to [6], in which a graft part of the rubber-like graft polymer contains a methyl methacrylate structural unit.

[8] A polycarbonate resin composition including the reinforcing agent for polycarbonate resin according to any one of [1] to [7] and a polycarbonate resin.

[9] The polycarbonate resin composition according to [8], in which the polycarbonate resin is a polycarbonate resin

containing a structural unit derived from a dihydroxy compound having a moiety represented by the following Formula (1) at a part of the structure.
[Chem. 1]

$$-(CH_2\text{-}O)- \qquad (1)$$

However, a case in which the moiety represented by Formula (1) above is a part of $-CH_2\text{-}O\text{-}H$ is excluded.
[10] The polycarbonate resin composition according to [8] or [9], in which the polycarbonate resin composition further includes a thioether-based antioxidant having a molecular weight of 700 or more.
[11] A molded article obtained by molding the polycarbonate resin composition according to any one of [8] to [10].
[12] A method for producing a reinforcing agent for polycarbonate resin containing a rubber-like graft polymer, the method including the following step (1) and step (2).
Step (1): a step of obtaining a rubber-like graft polymer latex through emulsion polymerization of a vinyl monomer (g) in the presence of a rubber latex containing an emulsifier of a salt of a weak acid and a strong base.
Step (2): a step of spray collecting the rubber-like graft polymer latex or coagulating and collecting the rubber-like graft polymer latex using a coagulant of a salt of a weak acid and a strong base.
[13] The method according to [12], in which a volume average particle size of rubber particles in the rubber latex is from 0.01 to 1 μm.
[14] A polycarbonate resin composition including a polycarbonate resin containing a structural unit derived from a dihydroxy compound having a moiety represented by the following Formula (1) at a part of the structure and has a glass transition temperature of lower than 145°C, and a rubber-like graft polymer, in which a difference between a refractive index of the rubber-like graft polymer and a refractive index of the polycarbonate resin is 0.005 or less, and a rubber part of the rubber-like graft polymer has a butadiene structural unit and an alkyl acrylate structural unit.
[Chem. 2]

$$-(CH_2\text{-}O)- \qquad (1)$$

A case in which the moiety represented by Formula (1) above is a part of $-CH_2\text{-}O\text{-}H$ is excluded.
[15] The polycarbonate resin composition according to [14], in which a glass transition temperature of the polycarbonate resin is lower than 145°C.
[16] The polycarbonate resin composition according to [14] or [15], in which the polycarbonate resin has any structural unit selected from the group consisting of structural units derived from dihydroxy compounds represented by the following Formulas (2) to (5).
[Chem. 3]

$$HO\text{-}R^1\text{-}OH \qquad (2)$$

$$HO\text{-}CH_2\text{-}R^2\text{-}CH_2\text{-}OH \qquad (3)$$

$$H\text{-}(O\text{-}R^3)_p\text{-}OH \qquad (4)$$

$$HO\text{-}R^4\text{-}OH \qquad (5)$$

However, in Formula (2), $R^1$ represents a substituted or unsubstituted cycloalkylene group having from 4 to 20 carbon atoms. In Formula (3), $R^2$ represents a substituted or unsubstituted cycloalkylene group having from 4 to 20 carbon atoms. In Formula (4), $R^3$ represents a substituted or unsubstituted alkylene group having from 2 to 10 carbon atoms, and p is an integer from 2 to 100. In Formula (5), $R^4$ represents a substituted or unsubstituted alkylene group having from 2 to 20 carbon atoms or a group having a substituted or unsubstituted acetal ring.
[17] The polycarbonate resin composition according to any one of [14] to [16], in which the rubber-like graft polymer is contained at 1 part by mass or more and 20 parts by mass or less with respect to 100 parts by mass of the polycarbonate resin.
[18] The polycarbonate resin composition according to any one of [14] to [17], in which the rubber-like graft polymer is a polymer obtained by coagulating and collecting a rubber-like graft polymer latex obtained through emulsion polymerization using an aliphatic emulsifier using an alkaline earth metal salt.
[19] The polycarbonate resin composition according to [18], in which the rubber-like graft polymer latex is one obtained by polymerizing a vinyl monomer (g') in the presence of a rubber latex, and the vinyl monomer (g') contains a vinyl monomer (p) having a polar group.
[20] The polycarbonate resin composition according to [19], in which a volume average particle size of rubber

particles in the rubber latex is from 0.1 to 1 μm.

[21] A polycarbonate resin molded article obtained by molding the polycarbonate resin composition according to any one of [14] to [20].

[22] The polycarbonate resin molded article according to [21], in which the polycarbonate resin molded article is obtained through molding by an injection molding method.

[23] A method for producing the reinforcing agent for polycarbonate resin according to any one of [1] to [7] containing a rubber-like graft polymer, the method including the following step (1) and step (2).

Step (1): a step of obtaining a rubber-like graft polymer latex through emulsion polymerization of a vinyl monomer (g) in the presence of a rubber latex containing an emulsifier of a salt of a weak acid and a strong base.

Step (2): a step of spray collecting the rubber-like graft polymer latex or coagulating and collecting the rubber-like graft polymer latex using a coagulant of a salt of a weak acid and a strong base.

[24] The method according to [23], in which a volume average particle size of rubber particles in the rubber latex is from 0.01 to 1 μm.

EFFECT OF THE INVENTION

According to the invention, it is possible to provide a reinforcing agent for polycarbonate resin which can impart impact resistance, resistance to thermal coloration, and resistance to moist heat to a polycarbonate resin.

According to the invention, it is possible to provide a polycarbonate resin composition which has both excellent transparency and strength and can be suitably used in the building material field, the OA equipment field such as a printer, the electric and electronic field such as a mobile phone, the motor vehicle field, the optical part field, and the like and a polycarbonate resin molded article.

In addition, according to the invention, it is possible to provide a polycarbonate resin composition which exhibits excellent surface impact resistance and impact resistance and a polycarbonate resin molded article. Furthermore, in a preferred aspect of the invention, it is possible to provide a polycarbonate resin composition which exhibits various excellent physical properties such as hue, heat resistance, light resistance, moldability, and a mechanical strength and a polycarbonate resin molded article.

Furthermore, according to the invention, it is possible to provide a polycarbonate resin composition which has all of transparency, heat resistance, and impact resistance and a polycarbonate resin molded article.

MODE(S) FOR CARRYING OUT THE INVENTION

Hereinafter, the polycarbonate resin used in the invention, the reinforcing agent for polycarbonate resin composed of a rubber-like graft polymer of the as defined in the claims, and the polycarbonate resin composition of the invention will be sequentially described. Incidentally, the invention is not limited to the following embodiments, but the invention can be carried out in various modifications within the scope of its gist.

[Polycarbonate resin]

In the invention, as the polycarbonate resin, an arbitrary polycarbonate resin that is known in the prior art can be used. In other words, in the invention, it is possible to use an aromatic polycarbonate resin, an aliphatic polycarbonate resin, an aromatic-aliphatic polycarbonate resin as the polycarbonate resin.

A polycarbonate resin (hereinafter, referred to as the "PC resin" in some cases.) is a polymer obtained by a phosgene method to react various dihydroxy diaryl compounds with phosgene, a transesterification method to react a dihydroxy diaryl compound with an ester of carbonic acid such as diphenyl carbonate, or the like. Typical examples thereof may include a polycarbonate produced from 2,2-bis(4-hydroxyphenyl)propane (bisphenol A).

Examples of the dihydroxy diaryl compound may include the following ones in addition to bisphenol A. Bis(4-hydroxyphenyl)methane, 1,1-bis(4-hydroxyphenyl)ethane, 2,2-bis(4-hydroxyphenyl)butane, bis(4-hydroxyphenyl)phenylmethane, and the like. These may be used singly or two or more kinds thereof may be used in combination.

In the invention, the viscosity average molecular weight of the polycarbonate resin is preferably from 10,000 to 40,000 and more preferably from 15,000 to 30,000. A decrease in molecular weight hardly occurs when a molded body is molded at high temperature and excellent impact strength retention and excellent resistance to thermal coloration are exhibited when the viscosity average molecular weight of the polycarbonate resin is 10,000 or more. In addition, the polycarbonate resin composition obtained exhibits excellent melt fluidity when the viscosity average molecular weight is 40,000 or less. Incidentally, the "viscosity average molecular weight" is a molecular weight that is obtained by converting by the solution viscosity measured at a temperature of 25°C using methylene chloride as a solvent.

In the invention, as the polycarbonate resin, a polycarbonate resin (hereinafter, referred to as the "PC resin (B)" in some cases) containing a structural unit derived from a dihydroxy compound having a moiety represented by the

following Formula (1) at a part of the structure is preferable and a polycarbonate resin which contains a structural unit derived from a dihydroxy compound having a moiety represented by the following Formula (1) at a part of the structure and has a glass transition temperature of less than 145°C is more preferable.
[Chem. 4]

$$\{CH_2\text{-}O\} \qquad (1)$$

However, a case in which the moiety represented by Formula (1) above is a part of $-CH_2\text{-}O\text{-}H$ is excluded.

<Dihydroxy compound having moiety represented by Formula (1)>

The PC resin (B) of the invention has at least a structural unit (hereinafter, referred to as the "structural unit (1)" in some cases) derived from a dihydroxy compound having a moiety represented by Formula (1) above at a part of the structure.

In the PC resin (B), the content of the structural unit (1) is preferably 1% by mole or more and less than 90% by mole with respect to the structural units derived from the entire dihydroxy compounds contained in the polycarbonate resin. It is concerned that the heat resistance of the resin is insufficient and thus the molded article is deformed by heat in a case in which the content of the structural unit (1) is less than the range described above. On the other hand, it is concerned that it is difficult to produce a polycarbonate resin having a high molecular weight and thus the impact resistance of the resin is insufficient and the molded article is fractured at the time of use in a case in which the content is greater than the range described above. The content of the structural unit (1) in the PC resin (B) is more preferably 30% by mole or more and even more preferably 50% by mole or more with respect to the structural units derived from the entire dihydroxy compounds contained in the polycarbonate resin. In addition, the content of the structural unit (1) in the PC resin (B) is more preferably less than 80% by mole, even more preferably less than 70% by mole, even more preferably less than 65% by mole, and most preferably less than 60% by mole with respect to the structural units derived from the entire dihydroxy compounds contained in the polycarbonate resin.

The dihydroxy compound (hereinafter, referred to as the "dihydroxy compound (1)" in some cases) having a moiety represented by Formula (1) above at a part of the structure is not particularly limited as long as it contains a moiety represented by Formula (1) above at a part of the molecular structure, but specific examples thereof may include the following ones. An oxyalkylene glycol such as diethylene glycol, triethylene glycol, or tetraethylene glycol, and a dihydroxy compound which has an aromatic group in a side chain and a moiety represented by Formula (1) above as the ether group of the main chain such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene, or 9,9-bis(4-(3-hydroxy-2,2-dimethylpropoxy)phenyl)fluorene.

In addition, an anhydrous sugar alcohol represented by a dihydroxy compound represented by the following Formula (1A), and a dihydroxy compound having a moiety represented by Formula (1) above as a part of the heterocyclic group such as compounds having a cyclic ether structure including spiroglycol represented by the following Formula (IB) are exemplified.

[Chem. 5]

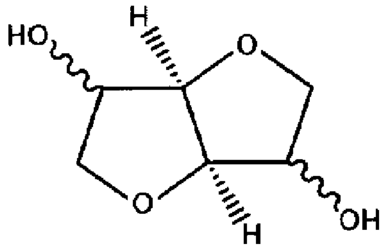

(1A)

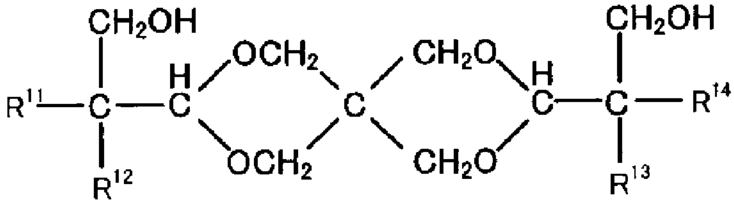

(1B)

In Formula (IB) above, $R^{11}$ to $R^{14}$ each independently represent an alkyl group having from 1 to 3 carbon atoms.

Examples of the dihydroxy compound represented by Formula (1A) above may include isosorbide, isomannide, and isoidide which are in a stereoisomeric relation. In addition, examples of the dihydroxy compound represented by Formula (1B) above may include the following ones. 3,9-bis(1,1-dimethyl-2-hydroxyethyl)-2,4,8,10-tetraoxaspiro(5.5)undecane (common name: spiroglycol), 3,9-bis(1,1-diethyl-2-hydroxyethyl)-2,4,8,10-tetraoxaspiro(5 .5)undecane, 3,9-bis(1,1-dipropyl-2-hydroxyethyl)-2,4,8,10-tetraoxaspiro(5.5)undecane, dioxane glycol, and the like.

One kind of these dihydroxy compounds (1) may be used singly or two or more kinds thereof may be used in combination.

Among these dihydroxy compounds (1), a compound having a heterocyclic group is more preferable and a dihydroxy compound represented by Formula (1A) above is even more preferable from the viewpoint of being abundantly present as a resource and easily available. Moreover, isosorbide obtained by dehydration condensation of sorbitol produced from various kinds of starch is most preferable from the viewpoint of ease of availability and production, the optical properties, and moldability.

Incidentally, the dihydroxy compound (1) having a cyclic ether structure, such as isosorbide, is prone to be gradually oxidized by oxygen. Hence, it is required to ensure that moisture is not mixed into the dihydroxy compound when it is stored or handled at the time of production in order to prevent decomposition by oxygen. Moreover, it is preferable to use an oxygen scavenger or to handle in a nitrogen atmosphere. Decomposition products including formic acid are generated when isosorbide is oxidized. For example, when a polycarbonate resin is produced using isosorbide containing these decomposition products, coloration of the polycarbonate resin to be obtained occurs or significant deterioration in physical properties of the polycarbonate resin is caused. In addition, these decomposition products are not preferable since they affect the polymerization reaction and thus a polymer having a high molecular weight is not obtained in some cases.

Accordingly, it is preferable to use a stabilizer in the dihydroxy compound (1). As the stabilizer, it is preferable to use a stabilizer such as a reductant, an antacid, an antioxidant, an oxygen scavenger, a light stabilizer, a pH stabilizer, or a heat stabilizer, and it is preferable to use a basic stabilizer since the dihydroxy compound (1) is easily degraded particularly under an acidic condition. Among these, examples of the reductant may include sodium borohydride and lithium borohydride, and examples of the antacid may include an alkali such as sodium hydroxide. However, upon the addition of such an alkali metal salt, the alkali metal added serves as a polymerization catalyst at the time of producing the polycarbonate resin in some cases, and thus it is not preferable to excessively add such an alkali metal salt since it is not possible to control the polymerization reaction.

Examples of the basic stabilizer may include the following ones. A hydroxide, a carbonate salt, a phosphate salt, a phosphite salt, a hypophosphite salt, a borate, and a fatty acid salt of a metal of group 1 or group 2 in the long form of the periodic table (Nomenclature of Inorganic Chemistry IUPAC Recommendations 2005), or a basic ammonium compound such as tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, or butyltriphenylammonium hydroxide, and an amine-based compound such as 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, or aminoquinoline. Among them, a phosphate salt and a phosphite salt of sodium or potassium are preferable and disodium hydrogen phosphate or disodium hydrogen phosphite is preferable among them from the viewpoint of an effect thereof and ease of removal thereof by distillation to be described later.

The content of these basic stabilizers in the dihydroxy compound (1) is not particularly limited, but it is usually from 0.0001 to 1% by mass and preferably from 0.001 to 0.1% by mass with respect to the dihydroxy compound (1). There is a possibility that the effect of preventing the degradation of the dihydroxy compound (1) is not obtained when this content is too low, and the denaturation of the dihydroxy compound (1) may be caused when this content is too high.

There is a case in which coloration of the polycarbonate resin to be obtained occurs or the physical properties thereof significantly deteriorate depending on the kind of the stabilizer when the dihydroxy compound (1) to which these stabilizers are added is used as a raw material for a polycarbonate resin. For example, when the dihydroxy compound (1) containing the above basic stabilizer is used as a raw material for the production of a polycarbonate resin, not only the basic stabilizer itself serves as a polymerization catalyst to make it difficult to control the polymerization rate or the quality but also the initial hue of the polycarbonate resin is worsened and the light resistance of the polycarbonate resin molded article to be obtained is worsened as a result. Hence, it is preferable to remove the stabilizer such as a basic stabilizer by using an ion-exchange resin, by distillation, or the like before using the dihydroxy compound (1) as a raw material for the production of a polycarbonate resin.

In addition, as described above, when the dihydroxy compound (1) containing the oxidative decomposition product of the dihydroxy compound (1) is used as a raw material for the production of a polycarbonate resin, there is a possibility that coloration of the polycarbonate resin to be obtained is caused, and not only the physical properties of the polycarbonate resin to be obtained significantly deteriorate but also the oxidative decomposition product affect the polymerization reaction and a polymer having a high molecular weight is not obtained in some cases. Hence, it is preferable to purify the dihydroxy compound (1) by distillation in order to obtain the dihydroxy compound (1) which does not contain the oxidative decomposition product and in order to remove the basic stabilizers described above. The distillation in this case is not particularly limited, and it may be a simple distillation or a continuous distillation. As the condition of the distillation, it is preferable to carry out the distillation in an inert gas atmosphere such as argon or nitrogen under reduced pressure, and it is preferable to conduct the distillation under the condition of 250°C or lower, preferably 200°C or lower, and particularly 180°C or lower in order to suppress the denaturation by heat.

It is possible to produce a polycarbonate resin which exhibits excellent hue or thermal stability without impairing the polymerization reactivity at the time of producing the polycarbonate resin by controlling the content of the oxidative decomposition product, for example, formic acid in the dihydroxy compound (1) to 20 ppm by mass or less, preferably 10 ppm by mass or less, and particularly preferably 5 ppm by mass or less through such a purification by distillation.

Incidentally, the measurement of the "content of formic acid" in the dihydroxy compound (1) is conducted by ion chromatography according to the following procedure. In the following procedure, isosorbide is exemplified as a typical dihydroxy compound (1).

About 0.5 g of isosorbide is accurately weighed, introduced into a 50 ml volumetric flask, and is diluted with pure water to the fixed volume. An aqueous solution of sodium formate is used as a standard sample, a peak which has the same retention time as the standard sample is denoted as formic acid, and the quantity of isosorbide is determined from the peak area by the absolute calibration curve method. As the ion chromatograph, the Model DX-500 manufactured by Thermo Fisher Scientific, Inc. is used, and an electric conductivity detector is used as a detector. As the measuring column, AG-15 and AS-15 manufactured by Thermo Fisher Scientific, Inc. are used as the guard column and the separation column, respectively. Into the sample loop, 100 μl of the sample for measurement is injected, and the measurement is conducted at a flow rate of 1.2 ml/min and a temperature of the thermostatic chamber of 35°C using 10 mM NaOH as the eluent. As the suppressor, a membrane suppressor is used, and a 12.5 mM aqueous solution of $H_2SO_4$ is used as the regenerating solution.

<Dihydroxy compound other than dihydroxy compound (1)>

It is preferable that the PC resin (B) has any structural unit selected from the group consisting of structural units derived from dihydroxy compounds represented by the following Formulas (2) to (5) at a part of the structure in addition to the structural unit (1).

Hereinafter, the dihydroxy compounds represented by Formulas (2), (3), (4), and (5) are respectively referred to as the "dihydroxy compound (2)", the "dihydroxy compound (3)", the "dihydroxy compound (4)", and the "dihydroxy compound (5)" in some cases. In addition, the structural units derived from the dihydroxy compounds (2), (3), (4), and (5) are respectively referred to as the "structural unit (2)", the "structural unit (3)", the "structural unit (4)", and the "structural unit (5)" in some cases.

[Chem. 6]

HO-R'-OH (2)

$HO-CH_2-R^2-CH_2-OH$ (3)

$H-(O-R^3)_p-OH$ (4)

$HO-R^4-OH$ (5)

In Formula (2), $R^1$ represents a substituted or unsubstituted cycloalkylene group having from 4 to 20 carbon atoms. In Formula (3), $R^2$ represents a substituted or unsubstituted cycloalkylene group having from 4 to 20 carbon atoms. In Formula (4), $R^3$ represents a substituted or unsubstituted alkylene group having from 2 to 10 carbon atoms, and p is an integer from 2 to 100. In Formula (5), $R^4$ represents a substituted or unsubstituted alkylene group having from 2 to 20 carbon atoms or a group having a substituted or unsubstituted acetal ring.

Among the above dihydroxy compounds (2) to (5), it is preferable to contain particularly a structural unit derived from an aliphatic dihydroxy compound, and among them, it is preferable to contain a structural unit derived from an alicyclic dihydroxy compound, and in this case, it is possible to impart flexibility to the polycarbonate resin to be obtained.

(Aliphatic dihydroxy compound)

Examples of the aliphatic dihydroxy compound may include an aliphatic dihydroxy compound in which $R^4$ is a substituted or unsubstituted alkylene group having from 2 to 20 carbon atoms among the dihydroxy compounds represented by Formula (5) above, and examples of such an aliphatic dihydroxy compound may include the following ones. 1,4-butanediol, 1,5-pentanediol, neopentyl glycol, 1,6-hexanediol, 1,7-heptanediol, 1,8-octanediol, 2-ethyl-1,6-hexanediol, 2,2,4-trimethyl-1,6-hexanediol, 1,10-decanediol, hydrogenated dilinoleyl glycol, hydrogenated dioleyl glycol, and the like.

Incidentally, the compounds exemplified above are an example of an aliphatic dihydroxy compound which can be used in the invention, but the aliphatic dihydroxy compound is not limited thereto in any way. One kind of these aliphatic dihydroxy compounds may be used singly or two or more kinds thereof may be used in combination.

(Alicyclic dihydroxy compound)

The alicyclic dihydroxy compound is not particularly limited, but examples thereof usually include a compound having a 5-membered ring structure or a 6-membered ring structure. There is a possibility that heat resistance of the polycarbonate resin to be obtained increases as the alicyclic dihydroxy compound has a 5-membered ring structure or a 6-membered ring structure. The 6-membered ring structure may be fixed in a chair form or a boat form by a covalent bond. The number of carbon atoms contained in the alicyclic dihydroxy compound is usually 70 or less, preferably 50 or less, and more preferably 30 or less. There is a tendency that the heat resistance of the resin increases but the synthesis thereof is difficult, the purification thereof is difficult, or the cost thereof is expensive as the number of carbon atoms of the alicyclic dihydroxy compound is greater. There is a tendency that the alicyclic dihydroxy compound is easily purified and easily available as the number of carbon atoms thereof is smaller.

Specific examples of the alicyclic dihydroxy compound containing a 5-membered ring structure or a 6-membered ring structure may include the dihydroxy compounds (2) and (3).

Cyclohexanedimethanol that is an alicyclic dihydroxy compound represented by Formula (3) above includes various isomers in which $R^2$ in Formula (3) above is represented by the following Formula (3a) (in Formula, $R^5$ represents a hydrogen atom or a substituted or unsubstituted alkyl group having from 1 to 12 carbon atoms). Specific examples of such a compound may include 1,2-cyclohexanedimethanol, 1,3-cyclohexanedimethanol, and 1,4-cyclohexanedimethanol.

[Chem. 7]

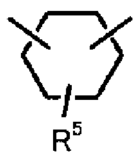

(3a)

Tricyclodecanedimethanol and pentacyclopentadecanedimethanol that are alicyclic dihydroxy compounds represented by Formula (3) above include various isomers in which $R^2$ in Formula (3) above is represented by the following Formula (3b) (in Formula, n represents 0 or 1.).

[Chem. 8]

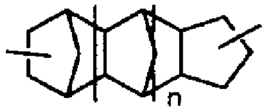

(3b)

Decalindimethanol or tricyclotetradecanedimethanol that is an alicyclic dihydroxy compound represented by Formula (3) above includes various isomers in which $R^2$ in Formula (3) above is represented by the following Formula (3c) (in Formula, m represents 0 or 1.). Specific examples of such a compound may include 2,6-decalindimethanol, 1,5-decalindimethanol, and 2,3-decalindimethanol.

[Chem. 9]

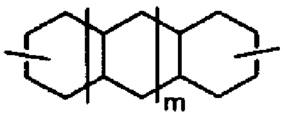

(3c)

In addition, norbornanedimethanol that is an alicyclic dihydroxy compound represented by Formula (3) above includes various isomers in which $R^2$ in Formula (3) above is represented by the following Formula (3d). Specific examples of such a compound may include 2,3-norbornanemethanol and 2,5-norbornanedimethanol.

[Chem. 10]

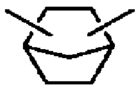

(3d)

Adamantanedimethanol that is an alicyclic dihydroxy compound represented by Formula (3) above includes various isomers in which $R^2$ in Formula (3) above is represented by the following Formula (3e). Specific examples of such a compound may include 1,3-adamantanedimethanol.

[Chem. 11]

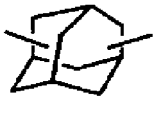

(3e)

Cyclohexanediol that is an alicyclic dihydroxy compound represented by Formula (2) above includes various isomers in which $R^1$ in Formula (2) above is represented by the following Formula (2a) (in Formula, $R^5$ represents a hydrogen atom or a substituted or unsubstituted alkyl group having from 1 to 12 carbon atoms.). Specific examples of such a compound may include 1,2-cyclohexanediol, 1,3-cyclohexanediol, 1,4-cyclohexanediol, and 2-methyl-1,4-cyclohexanediol.

[Chem. 12]

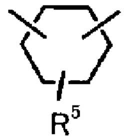

(2a)

Tricyclodecanediol and pentacyclopentadecanediol that are alicyclic dihydroxy compounds represented by Formula (2) above includes various isomers in which $R^1$ in Formula (2) above is represented by the following Formula (2b) (in Formula, n represents 0 or 1.).

[Chem. 13]

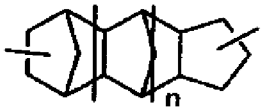

(2b)

Decalindiol or tricyclotetradecanediol that is an alicyclic dihydroxy compound represented by Formula (2) above includes various isomers in which $R^1$ in Formula (2) above is represented by the following Formula (2c) (in Formula, m represents 0 or 1.). Specifically, 2,6-decalindiol, 1,5-decalindiol, 2,3-decalindiol, and the like are used as such a compound.

[Chem.14]

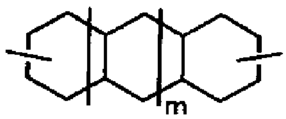

(2c)

Norbornanediol that is an alicyclic dihydroxy compound represented by Formula (2) above includes various isomers in which $R^1$ in Formula (2) above is represented by the following Formula (2d). Specifically, 2,3-norbornanediol 2,5-norbornanediol, and the like are used as such a compound.

[Chem. 15]

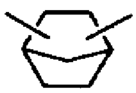

(2d)

Adamantanediol that is an alicyclic dihydroxy compound represented by Formula (2) above includes various isomers in which $R^1$ in Formula (2) above is represented by the following Formula (2e). Specifically, 1,3-adamantanediol and the like are used as such a compound.

[Chem. 16]

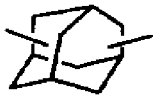

(2e)

Among specific examples of the alicyclic dihydroxy compounds described above, a cyclohexanedimethanol, a tricyclodecanedimethanol, an adamantanediol, and a pentacyclopentadecanedimethanol are preferable. Moreover, 1,4-cyclohexanedimethanol, 1,3-cyclohexanedimethanol, 1,2-cyclohexanedimethanol, and tricyclodecanedimethanol are particularly preferable from the viewpoint of ease of availability and ease of handling.

Incidentally, the compounds exemplified above are an example of an alicyclic dihydroxy compound which can be used in the invention, but the alicyclic dihydroxy compound is not limited thereto in any way. One kind of these alicyclic dihydroxy compounds may be used singly or two or more kinds thereof may be used in combination.

(Polyoxyalkylene dihydroxy compound)

The polyoxyalkylene dihydroxy compound that is a dihydroxy compound represented by Formula (4) is compound in which $R^3$ is a substituted or unsubstituted alkylene group having from 2 to 10 carbon atoms and preferably from 2 to 5 carbon atoms. p is an integer from 2 to 100, preferably from 2 to 50, more preferably from 6 to 30, and particularly preferably from 12 to 15. Specific examples of the polyoxyalkylene dihydroxy compound that is a dihydroxy compound represented by Formula (4) above may include diethylene glycol, triethylene glycol, and a polyethylene glycol (molecular weight: 150 to 4,000), but the polyoxyalkylene dihydroxy compound is not limited thereto in any way. As the compound of Formula (4) above, a polyethylene glycol having a molecular weight of from 300 to 2000 is preferable, and among them, a polyethylene glycol having a molecular number of from 600 to 1500 is preferable. One kind of these may be used singly or two or more kinds thereof may be used in combination according to the performance required for the polycarbonate copolymer to be obtained.

Incidentally, the compounds exemplified are an example of a polyoxyalkylene dihydroxy compound which can be used in the invention, but the polyoxyalkylene dihydroxy compound is not limited thereto in any way. One kind of these polyoxyalkylene dihydroxy compounds may be used singly or two or more kinds thereof may be used in combination.

(Dihydroxy compound having an alkylene group or a group having an acetal ring)

The dihydroxy compound represented by Formula (5) (hereinafter, abbreviated as the "compound of Formula (5)" in some cases.) is a dihydroxy compound in which $R^4$ is a substituted or unsubstituted alkylene group having from 2 to 20 carbon atoms and preferably from 2 to 10 carbon atoms or a group having a substituted or unsubstituted acetal ring. In a case in which the alkylene group of $R^4$ has a substituent, and examples of the substituent may include an alkyl group having from 1 to 5 carbon atoms. In addition, in a case in which the group having an acetal ring of $R^4$ has a substituent, examples of the substituent may include an alkyl group having from 1 to 3 carbon atoms.

Among the compounds of Formula (5) above, examples of the dihydroxy compound in which $R^4$ is a substituted or unsubstituted alkylene group having from 2 to 20 carbon atoms may include a propanediol such as 1,3-propanediol, or 1,2-propanedioldiol, a butanediol such as 1,4-butanediol or 1,3-butanediol, a heptane diol such as 1,5-heptanediol, and a hexanediol such as 1,6-hexanediol, but it is not limited thereto in any way. Among these, a hexanediol is preferable.

Meanwhile, the dihydroxy compound in which $R^4$ is a group having a substituted or unsubstituted acetal ring is not particularly limited, but among them, dihydroxy compounds having a spiro structure as represented by the following Formula (8) and Formula (9) are preferable, and in particular a dihydroxy compound having a plurality of ring structures as represented by the following Formula (8) is preferable.

[Chem. 17]

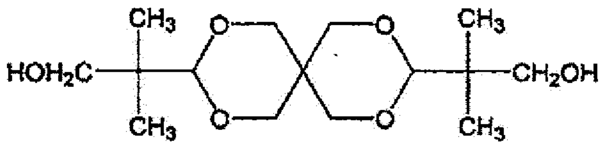 (8)

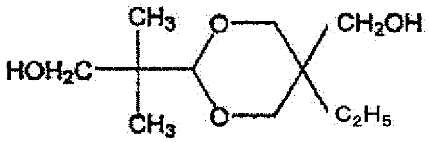 (9)

Among these dihydroxy compounds, 1,3-propanediol and 1,6-hexanediol are preferable from the viewpoint of ease of availability, ease of handling, high reactivity at the time of polymerization, and the hue of the polycarbonate copolymer to be obtained. In addition, a dihydroxy compound having a group having an acetal ring is preferable and in particular those having a plurality of ring structures as represented by Formula (8) above are preferable from the viewpoint of heat resistance of the resin. These may be used singly or two or more kinds thereof may be used in combination according to the performance required for the polycarbonate copolymer to be obtained.

In a case in which the PC resin (B) has a structural unit derived from an alicyclic dihydroxy compound, the molar ratio of the structural unit derived from the dihydroxy compounds (2) to (5) described above to the structural unit (1) in the PC resin (B) may be selected in an arbitrary proportion, but it is possible to improve the impact strength (for example, Charpy notched impact strength) and further to impart a desired glass transition temperature to the polycarbonate resin by adjusting the molar ratio.

The molar ratio of the structural unit derived from the dihydroxy compounds (2) to (5) to the structural unit (1) in the PC resin (B) is preferably from 30 : 70 to 99 : 1, more preferably from 40 : 60 to 90 : 10, and particularly preferably from 50 : 50 to 20 : 80. It is possible to obtain a polycarbonate resin of which the coloration is decreased and which has a high molecular weight, a high impact strength, and a high glass transition temperature when the molar ratio is within the above preferred range.

(Another dihydroxy compound)

In the PC resin (B), a structural unit derived from another dihydroxy compound can be further contained in addition to the structural unit (1) and the structural units (2) to (5). Examples of another dihydroxy compound may include an aromatic dihydroxy compound.

Examples of the aromatic dihydroxy compound may include a substituted or unsubstituted bisphenol compound, and specific examples thereof may include the following ones. A bisphenol compound which does not have a substituent on the aromatic ring such as bis(4-hydroxyphenyl)methane, 1,1-bis(4-hydroxyphenyl)ethane, 1,1-bis(4-hydroxyphenyl)propane, 2,2-bis(4-hydroxyphenyl)propane, 1,1-bis(4-hydroxyphenyl)butane, 2,2-bis(4-hydroxyphenyl)butane, 1,1-bis(4-hydroxyphenyl)pentane, 2,2-bis(4-hydroxyphenyl)pentane, 3,3-bis(4-hydroxyphenyl)pentane, 2,2-bis(4-hydroxyphenyl)-3-methylbutane, 1,1-bis(4-hydroxyphenyl)hexane, 2,2-bis(4-hydroxyphenyl)hexane, 3,3-bis(4-hydroxyphenyl)hexane, 2,2-bis(4-hydroxyphenyl)-4-methylpentane, 1,1-bis(4-hydroxyphenyl)cyclopentane, or 1,1-bis(4-hydroxyphenyl)cyclohexane; a bisphenol compound having an aryl group as a substituent on the aromatic ring such as bis(3-phenyl-4-hydroxyphenyl)methane, 1,1-bis(3 -phenyl-4-hydroxyphenyl)ethane, 1,1-bis(3 - phenyl-4-hydroxyphenyl)propane, or 2,2-bis(3-phenyl-4-hydroxyphenyl)propane; a bisphenol compound having an alkyl group as a substituent on the aromatic ring such as bis(4-hydroxy-3-methylphenyl)methane, 1,1-bis(4-hydroxy-3-methylphenyl)ethane, 1,1-bis(4-hydroxy-3-methylphenyl)propane, 2,2-bis(4-hydroxy-3-methylphenyl)propane, 1,1-bis(4-hydroxy-3-methylphenyl)cyclohexane, bis(4-hydroxy-3-ethylphenyl)methane, 1,1-bis(4-hydroxy-3 -ethylphenyl)ethane, 1,1-bis(4-hydroxy-3 - ethylphenyl)propane, 2,2-bis(4-hydroxy-3-ethylphenyl)propane, 1,1-bis(4-hydroxy-3-ethylphenyl) cyclohexane, 2,2-bis(4-hydroxy-3-isopropylphenyl)propane, 2,2-bis(4-hydroxy-3-(sec-butyl)phenyl)propane, bis(4-hydroxy-3,5-dimethylphenyl)methane, 1,1-bis(4-hydroxy-3,5-dimethylphenyl)ethane, 2,2-bis(4-hydroxy-3,5-dimethylphenyl)propane, 1,1-bis(4-hydroxy 3,5-dimethylphenyl)cyclohexane, bis(4-hydroxy-3,6-dimethylphenyl)methane, 1,1-bis(4-hydroxy-3,6-dimethylphenyl)ethane, 2,2-bis(4-hydroxy-3,6-dimethylphenyl)propane, bis(4-hydroxy-2,3,5-trimethylphenyl)methane, 1,1-bis(4-hydroxy-2,3,5-trimethylphenyl)ethane, 2,2-bis(4-hydroxy-2,3,5-trimethylphenyl)propane, bis(4-hydroxy-2,3,5-trimethylphenyl)phenylmethane, 1,1-bis(4-hydroxy-2,3,5-trimethylphenyl)phenylethane, or 1,1-bis(4-hydroxy-2,3,5-trimethylphenyl)cyclohexane; a bisphenol compound having an aryl group as a substituent of a divalent group linking the aromatic rings such as bis(4-hydroxyphenyl)phenylmethane, 1,1-bis(4-hydroxyphenyl)-1-phenylethane, 1,1-bis(4-hydroxyphenyl)-1-phenylpropane, bis(4-hydroxyphenyl)dophenylmethane, or bis(4-hydroxyphenyl)dibenzylmethane; a bisphenol compound having aromatic rings linked by an ether bond such as 4,4'-dihydroxydiphenyl ether or 3,3',5,5'-tetramethyl-4,4'-dihydroxydiphenyl ether; a bisphenol compound having aromatic rings linked by a sulfone bond such as 4,4'-dihydroxydiphenyl sulfone or 3,3',5,5'-tetramethyl-4,4'-dihydroxydiphenyl sulfone; a bisphenol compound having aromatic rings linked by a sulfide bond such as 4,4'-dihydroxydiphenyl sulfide or 3,3',5,5'-tetramethyl-4,4'-dihydroxydiphenyl sulfide, and the like. Preferred examples thereof may include 2,2-bis(4-hydroxyphenyl)propane (hereinafter, abbreviated as "bisphenol A" in some cases.).

In the PC resin (B), the content of the structural unit derived from an aromatic dihydroxy compound described above is preferably 0% by mole or more and less than 1% by mole, more preferably 0% by mole or more and less than 0.8% by mole, and even more preferably 0% by mole or more and less than 0.5% by mole with respect to the structural units derived from the entire dihydroxy compounds contained in the PC resin (B). An improvement in heat resistance, surface impact resistance, and molding processability can be expected as the polycarbonate resin contains a structural unit derived from an aromatic dihydroxy compound, but it is concerned that the coloration of the polycarbonate resin is remarkable in a case in which the content of the structural unit derived from an aromatic dihydroxy compound is too high.

One kind of another hydroxy compound described above may be used singly or two or more kinds thereof may be used in combination.

<Diester of carbonic acid>

The PC resin (B) can be produced by a generally used polymerization method, and the polymerization method may be either method of an interfacial polymerization method using phosgene or a melt polymerization method in which a transesterification reaction with a diester of carbonic acid is conducted. However, a melt polymerization method in which a dihydroxy compound is reacted with a diester of carbonic acid that is less toxic to the environment in the presence of a polymerization catalyst is preferable.

In this case, the PC resin (B) can be obtained by a melt polymerization method in which a transesterification reaction between a dihydroxy compound containing the dihydroxy compound (1) described above and a diester of carbonic acid is conducted. Examples of the diester of carbonic acid used usually include those represented by the following Formula (6). One kind of these diesters of carbonic acid may be used singly or two or more kinds thereof may be used in combination.

[Chem. 18]

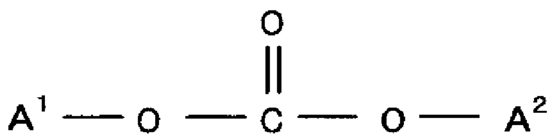

(6)

In Formula (6) above, $A^1$ and $A^2$ are each independently a substituted or unsubstituted aliphatic group having from 1 to 18 carbon atoms or a substituted or unsubstituted aromatic group.

Examples of the diester of carbonic acid represented by Formula (6) above may include a substituted diphenyl carbonate such as diphenyl carbonate or ditolyl carbonate, dimethyl carbonate, diethyl carbonate, and di-t-butyl carbonate. Diphenyl carbonate and a substituted diphenyl carbonate are preferable and diphenyl carbonate is particularly preferable. Incidentally, a diester of carbonic acid contains impurities such as a chloride ion in some cases, and these impurities inhibits the polymerization reaction or worsen the hue of the polycarbonate resin to be obtained in some cases, and thus it is preferable to use those purified by distillation or the like if necessary.

The diester of carbonic acid is used preferably at a molar ratio of from 0.90 to 1.20, and more preferably at a molar ratio from 0.95 to 1.10, even more preferably at a molar ratio of from 0.96 to 1.10, and particularly preferably at a molar ratio of from 0.98 to 1.04 with respect to the entire dihydroxy compounds used for melt polymerization. There is a possibility that the terminal hydroxyl groups of the polycarbonate resin produced increase and the thermal stability of the polymer is worsened and thus coloration is caused at the time of molding the polycarbonate resin composition, the speed of the transesterification reaction decreases, or a desired high molecular weight substance is not obtained when this molar ratio is less than 0.90. In addition, it is not preferable that this molar ratio is greater than 1.20 since there is a case in which not only the speed of the transesterification reaction decreases under the same conditions and the production of a polycarbonate resin having a desired molecular weight is difficult but also the amount of the residual diester of carbonic acid in the polycarbonate resin produced increases and this residual diester of carbonic acid becomes a cause of odor during molding or a cause of odor of the molded article. Moreover, there is a possibility that the thermal history at the time of the polymerization reaction increases and thus the hue or weather resistance of the polycarbonate resin obtained is worsened as a result when this molar ratio is greater than 1.20.

Furthermore, it is not preferable that the molar ratio of the diester of carbonic acid with respect to the entire dihydroxy compounds increases since the amount of the residual diester of carbonic acid in the polycarbonate resin to ne obtained increases and this residual diester of carbonic acid absorbs ultraviolet light to worsen the light resistance of the polycarbonate resin. The concentration of the diester of carbonic acid remaining in the PC resin (B) is preferably 200 ppm by mass or less, even more preferably 100 ppm by mass or less, and even more preferably 60 ppm by mass or less, and it is suitably 30 ppm by mass or less among them. However, the polycarbonate resin realistically contains the unreacted diester of carbonic acid in some cases, and the lower limit value of the concentration of the unreacted diester of carbonic acid in the polycarbonate resin is usually 1 ppm by mass.

<Catalyst for transesterification reaction>

The PC resin (B) can be produced through the transesterification reaction of a dihydroxy compound containing the dihydroxy compound (1) and a diester of carbonic acid represented by Formula (6) as described above. In more detail, the PC resin (B) is obtained by conducting the transesterification reaction and removing a monohydroxy compound and the like as byproducts from the reaction system. In this case, the melt polymerization is usually conducted through a transesterification reaction in the presence of a catalyst for the transesterification reaction.

Examples of the catalyst for transesterification reaction (hereinafter, simply referred to as the "catalyst" in some cases.) which can be used at the time of the production of the PC resin (B) may include a compound of a metal of group 1 or group 2 (hereinafter, simply denoted as the "group 1" or "group 2".) in the long form of the periodic table (Nomenclature of Inorganic Chemistry IUPAC Recommendations 2005) and a basic compound such as a basic boron compound, a basic phosphorus compound, a basic ammonium compound, or an amine-based compound. Among these, a compound of a group 1 metal and/or a compound of a group 2 metal are preferably used.

It is also possible to concurrently use a basic compound such as a basic boron compound, a basic phosphorus compound, a basic ammonium compound, or an amine-based compound as an auxiliary together with the compound of a group 1 metal and/or the compound of a group 2 metal, but it is particularly preferable to use only the compound of a group 1 metal and/or the compound of a group 2 metal. In addition, as the form of the compound of a group 1 metal and/or the compound of a group 2 metal, the compound is usually used in the form of a hydroxide or a salt such as a carbonate salt, a carboxylate salt, or a phenol salt, but a hydroxide, a carbonate salt, and an acetate salt are preferable from the viewpoint of ease of availability and ease of handling, and an acetate salt is preferable from the viewpoint of the hue of the polycarbonate resin and the polymerization activity.

Examples of the compound of a group 1 metal may include the following ones. Sodium hydroxide, potassium hydroxide, lithium hydroxide, cesium hydroxide, sodium hydrogen carbonate, potassium hydrogen carbonate, lithium hydrogen carbonate, cesium hydrogen carbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium borohydride, potassium borohydride, lithium borohydride, cesium borohydride, sodium tetraphenylborate, potassium tetraphenylborate, lithium tetraphenylborate, cesium tetraphenylborate, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium phenyl phosphate, dipotassium phenyl phosphate, dilithium phenyl phosphate, dicesium phenyl phosphate, an alcoholate and a phenolate of sodium, potassium, lithium, and cesium, a disodium salt, a dipotassium salt, a dilithium salt, and a dicesium salt of bisphenol A, and the like. Among them, a cesium compound and a lithium compound are preferable.

Examples of the compound of a group 2 metal may include the following ones. Calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium acetate, barium acetate, magnesium acetate, strontium acetate, calcium stearate, barium stearate, magnesium stearate, strontium stearate, and the like. Among them, a magnesium compound, a calcium compound, and a barium compound are preferable and a magnesium compound and/or a calcium compound are even more preferable.

Examples of the basic boron compound may include the following ones. A sodium salt, a potassium salt, a lithium salt, a calcium salt, a barium salt, a magnesium salt, a strontium salt, or the like of tetramethylboron, tetraethylboron, tetrapropylboron, tetrabutylboron, trimethylethylboron, trimethylbenzylboron, trimethylphenylboron, triethylmethyl boron, triethylbenzylboron, triethylphenylboron, tributylbenzylboron, tributylphenylboron, tetraphenylboron, benzyltriphenylboron, methyltriphenylboron, butyltriphenylboron, and the like.

Examples of the basic phosphorus compound may include the following ones. Triethylphosphine, tri-n-propylphosphine, triisopropylphosphine, tri-n-butylphosphine, triphenylphosphine, tributylphosphine, a quaternary phosphonium salt, or the like.

Examples of the basic ammonium compound may include the following ones. Tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, butyltriphenylammonium hydroxide, and the like.

Examples of the amine-based compound may include the following ones. 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, aminoquinoline, and the like.

Among the above ones, it is preferable to use at least one kind of metal compound selected from the group consisting of the compound of a group 2 metal and a lithium compound as the catalyst in order to obtain a polycarbonate resin which exhibits excellent various physical properties such as transparency, hue, and light resistance. Moreover, it is preferable to use at least one kind of metal compound selected from the group consisting of a magnesium compound and a calcium compound as the catalyst in order to obtain a polycarbonate resin which exhibits particularly excellent transparency, hue, and light resistance.

The amount of the catalyst used is in a range of preferably from 0.1 to 300 $\mu$mol, more preferably from 0.1 to 100 $\mu$mol, even more preferably from 0.5 to 50 $\mu$mol, and even more preferably from 1 to 25 $\mu$mol in terms of metal with respect to 1 mole of the entire dihydroxy compounds subjected to the reaction in the case of the compound of a group 1 metal and/or the compound of a group 2 metal.

The amount of the catalyst used is preferably 0.1 $\mu$mol or more, more preferably 0.5 $\mu$mol or more, and particularly preferably 0.7 $\mu$mol or more in terms of metal per 1 mole of the entire dihydroxy compounds subjected to the reaction in the case of using a compound containing at least one kind of metal selected from the group consisting of lithium and a group 2 metal and particularly in the case of using a magnesium compound and/or a calcium compound among the above ones. In addition, the upper limit of the amount of catalyst used is preferably 20 $\mu$mol, more preferably 10 $\mu$mol, particularly preferably 3 $\mu$mol, and most preferably 2.0 $\mu$mol.

There is a possibility that the polymerization activity required for the production of a polycarbonate resin having a desired molecular weight is not obtained and sufficient fracture energy is not obtained when the amount of the catalyst used is too little. On the other hand, when the amount of the catalyst used is too much, not only the hue of the polycarbonate resin to be obtained is worsened but also a byproduct is generated and thus a decrease in fluidity or gelation often occurs, which causes brittle fracture in some cases and there is a possibility that the production of a polycarbonate resin having intended quality is difficult.

<Method for producing polycarbonate resin>

The PC resin (B) is obtained through melt polymerization by the transesterification reaction between a dihydroxy compound containing the dihydroxy compound (1) and a diester of carbonic acid, but it is preferable to uniformly mix the dihydroxy compound and the diester of carbonic acid as the raw materials before the transesterification reaction. The temperature for mixing is usually 80°C or higher and preferably 90°C or higher, and the upper limit thereof is usually 250°C or lower, preferably 200°C or lower, and even more preferably 150°C or lower. Among them, the temperature is suitably 100°C or higher and 120°C or lower. There is a possibility that the rate of dissolution is slow or the solubility is insufficient when the temperature for mixing is too low, and thus a trouble such as solidification is often caused. On the other hand, thermal deterioration of the dihydroxy compound is caused in some cases when the temperature for mixing is too high, and thus there is a possibility that the hue of the polycarbonate resin to be obtained is worsened as a result and the light resistance thereof is adversely affected.

In addition, it is preferable to conduct the operation to mix the dihydroxy compound and the diester of carbonic acid in an atmosphere in which the concentration of oxygen is 10% by volume or less and further from 0.0001 to 10% by volume, and among them, from 0.0001 to 5% by volume and particularly 0.0001 to 1% by volume from the viewpoint of preventing the hue of the polycarbonate resin to be obtained from worsening.

It is preferable to produce the PC resin (B) using a catalyst and by conducting melt polymerization in multiple stages using a plurality of reactors. The reason for carrying out the melt polymerization in a plurality of reactors is because it is important to suppress the volatilization of the monomer while maintaining a required polymerization rate since the amount of the monomer contained in the reaction solution is great in the early stage of the melt polymerization reaction, and meanwhile, it is important to sufficiently distill off the monohydroxy compound of a byproduct in order to shift the equilibrium to the polymerization side in the later stage of the melt polymerization reaction. Hence, it is preferable to use a plurality of reactors disposed in series in order to differently set the conditions of the polymerization reaction from the viewpoint of production efficiency. The reactors may be two or more as described above, but the reactors are three or more, preferably three to five, and even more preferably four from the viewpoint of production efficiency.

The reaction type may be any method of a batch type, a continuous type, or a combination of a batch type and a continuous type.

Furthermore, it is effective to equip the polymerization reactor with a reflux condenser in order to suppress the amount of monomer to be distilled, and the effect is great particularly in the reactor that is used in the early stage of the polymerization and thus contains a great amount of unreacted monomer component. The temperature of the refrigerant introduced into the reflux condenser can be appropriately selected depending on the monomer to be used, but the temperature of the refrigerant introduced into the reflux condenser is usually from 45 to 180°C, preferably from 80 to 150°C, and particularly preferably from 100 to 130°C at the inlet of the reflux condenser. The reflux volume decreases and thus the effect decreases when the temperature of the refrigerant introduced into the reflux condenser is too high, and the distillation efficiency of the monohydroxy compound that is supposed to be originally distilled off tends to decrease when the temperature of the refrigerant is too low. As the refrigerant, warm water, steam, heat medium oil, and the like are used, and steam and heat medium oil are preferable.

The selection of the kind and amount of the catalyst described above is important in order not to impair the hue or thermal stability, light resistance, and the like of the polycarbonate resin to be finally obtained while properly maintaining the polymerization rate and suppressing the distillation of monomer.

Upon the production of the PC resin (B), it is possible to further equip the reactors with a plurality of reaction stages having different conditions and also to continuously change the temperature and the pressure when the reactors are two or more.

In the production of the PC resin (B), the catalyst can be added to the raw material preparation tank and the raw material storage tank, or it can be directly added to the reactor. It is preferable to mount a catalyst supply line in the middle of the supply line for the raw material before being supplied into the reactor and it is preferable to supply the catalyst as an aqueous solution from the viewpoint of stability of the catalyst supply and the control of melt polymerization.

As the polymerization condition, it is preferable to obtain a prepolymer at a relatively low temperature and in a relatively low vacuum in the early stage of polymerization and to increase the molecular weight to a predetermined value at a relatively high temperature and in a relatively high vacuum in the later stage of polymerization. It is important to properly select the jacket temperature, the internal temperature, and the pressure in the reaction system in each stage from the early stage of polymerization to the later stage of polymerization from the viewpoint of the hue or light resistance of the polycarbonate resin to be obtained. For example, when either of the temperature or the pressure is too quickly changed before the operating condition at the time of starting the polymerization reaction is achieved, there is a possibility that the unreacted monomer is distilled from the reaction vessel, the molar ratio of the dihydroxy compound to the diester of carbonic acid in the reaction vessel is disturbed, thus a decrease in polymerization rate is caused or a polymer having a predetermined molecular weight or a predetermined terminal group is not obtained, and the object of the invention cannot be achieved as a result.

A decrease in productivity or a decrease in heat aging resistance of the product is caused when the temperature for the transesterification reaction is too low, and there is a possibility that not only the volatilization of the monomer is caused but also the decomposition or coloration of the polycarbonate resin is promoted when the temperature is too high.

In the production of the polycarbonate resin of the invention, the method for conducting the transesterification reaction of a dihydroxy compound containing the dihydroxy compound (1) and a diester of carbonic acid in the presence of a catalyst is usually carried out by a multistage process including two or more stages. Specifically, the temperature (hereinafter, referred to as the "internal temperature" in some cases.) for the first stage transesterification reaction is preferably 140°C or higher, more preferably 150°C or higher, even more preferably 180°C or higher, and even more preferably 200°C or higher. In addition, the temperature for the first stage transesterification reaction is preferably 270°C or lower, more preferably 240°C or lower, even more preferably 230°C or lower, and even more preferably 220°C or lower. The retention time in the first stage transesterification reaction is usually from 0.1 to 10 hours and preferably from 0.5 to 3 hours, and the first stage transesterification reaction is carried out while distilling off the monohydroxy compound generated to the outside of the reaction system. In the transesterification reaction of the second stage and later stages, the reaction temperature is raised, and the transesterification reaction is conducted usually at a temperature of from 210 to 270°C and preferably from 220 to 250°C. At the same time, the reaction is conducted usually for from 0.1 to 10 hours, preferably from 0.5 to 6 hours, and particularly preferably from 1 to 3 hours while removing the monohydroxy compound generated to the outside of the reaction system and gradually decreasing the pressure of the reaction system from the pressure for the first stage transesterification reaction so that the pressure of the reaction system finally reaches 200 Pa or less.

There is a possibility that a molded article formed from the polycarbonate resin obtained has a worsened hue and is easily brittle fractured when the temperature for the transesterification reaction is excessively high. There is a case in which the molecular weight of the polycarbonate resin does not increase to the intended value, also the distribution of molecular weight is widened, and the impact strength deteriorates when the temperature for the transesterification reaction is excessively low. In addition, the polycarbonate resin to be obtained is easily brittle fractured in some cases when the retention time of the transesterification reaction is excessively long. The molecular weight of the polycarbonate resin does not increase to the intended value and the impact strength is inferior in some cases when the retention time is excessively short.

It is preferable to reuse the monohydroxy compound of a byproduct as a raw material for a diester of carbonic acid or various kinds of bisphenol compounds after purification if necessary from the viewpoint of effective use of resources.

It is preferable that the highest temperature of the internal temperature of reactor in all reaction stages is less than 255°C, more preferably 250°C or lower, and even more preferably from 225 to 245°C particularly in order to suppress coloration, thermal deterioration, or resin burning of the polycarbonate resin and to obtain a favorable polycarbonate resin having a high impact strength. In addition, it is preferable to use a horizontal reactor exhibiting excellent plug flow properties and interface renewability in the final stage of the reaction in order to inhibit a decrease in polymerization rate in the second half of the polymerization reaction and to minimize thermal deterioration of the polycarbonate resin.

In addition, there is a case in which a polycarbonate resin having a high impact strength is designed and thus the polymerization temperature and the polymerization time are increased as possible in order to obtain a polycarbonate resin having a high molecular weight, but in this case, there is a tendency that a foreign substance is generated or resin burning occurs in the polycarbonate resin and thus the polycarbonate resin is easily brittle fractured. Hence, it is preferable to keep the polymerization temperature low, to use a high activity catalyst for shortening the polymerization time, and to perform an adjustment such as adequate pressure setting of the reaction system in order to satisfy both of an increase in impact strength and rare occurrence of brittle fracture. Moreover, it is also preferable to remove the foreign substance, resin burnt substance, or the like generated in the reaction system using a filter or the like in the middle of the reaction or the final stage of the reaction in order to decrease brittle fracture.

Incidentally, it is unavoidable that phenol and substituted phenol are produced as byproducts and remain in the polycarbonate resin in the case of producing a polycarbonate resin using a substituted diphenyl carbonate such as diphenyl carbonate or ditolyl carbonate as the diester of carbonic acid represented by Formula (6) above. Phenol and substituted phenol absorb ultraviolet light as they also have an aromatic ring, and thus not only worsening of light resistance of the polycarbonate is caused but also an odor at the time of molding resin is caused in some cases. In the polycarbonate resin, an aromatic monohydroxy compound having an aromatic ring such as phenol of a byproduct is contained at 1000 ppm by mass or more after a usual batch reaction, but it is preferable to remove the aromatic monohydroxy compound by using a horizontal reactor exhibiting excellent devolatilization performance or an extruder with a vacuum vent from the viewpoint of light resistance or odor abatement. The content of the aromatic monohydroxy compound in the polycarbonate resin is set to preferably 700 ppm by mass or less, even more preferably 500 ppm by mass or less, and even more preferably 300 ppm by mass or less. However, it is difficult to industrially completely remove the aromatic monohydroxy compound, and the lower limit of the content of the aromatic monohydroxy compound in the polycarbonate resin is usually 1 ppm by mass. Incidentally, these aromatic monohydroxy compounds may have a substituent as a matter of course depending on the raw material used, and for example, they may have an alkyl group having 5 or less carbon atoms.

In addition, there is a case in which the group 1 metals, among them, lithium, sodium, potassium, and cesium, and particularly sodium, potassium, and cesium are mixed into the polycarbonate resin not only from the catalyst but also from the raw material or the reactor. There is a possibility that the hue of the polycarbonate resin is adversely affected when a great amount of these metals are contained in the polycarbonate resin, and thus it is more preferable as the total content of the compounds of these in the polycarbonate resin of the invention is lower, and it is usually 1 ppm by mass or less, preferably 0.8 ppm by mass or less, and more preferably 0.7 ppm by mass as the amount of metal in the polycarbonate resin.

Incidentally, The amount of metal in the polycarbonate resin can be measured by various methods known in the prior art, but it can be measured using a method such as atomic emission, atomic absorption, ICP (Inductively Coupled and Plasma) after recovering the metal in the polycarbonate resin by a method such as wet ashing.

The polycarbonate resin of the invention is usually cooled and solidified after the melt polymerization as described above and pelletized by a rotary cutter or the like. A method for pelletizing is not limited, but examples thereof may include (1) a method in which the polycarbonate resin is withdrawn from the final polymerization reactor in a molten state, is cooled and solidified in the form of a strand, and pelletized, (2) a method in which the resin is supplied from the final polymerization reactor to a uniaxial or biaxial extruder in the molten state, melt extruded, then cooled and solidified, and pelletized, or (3) a method in which the polycarbonate resin is withdrawn from the final polymerization reactor in a molten state, cooled and solidified in the form of a strand, and once pelletized, and then the resin is supplied again to a uniaxial or biaxial extruder, melt extruded, then cooled and solidified, and pelletized.

At that time, the residual monomer can be vacuum devolatilized in the extruder. In addition, it is also possible to add a thermal stabilizer, a neutralizing agent, a ultraviolet absorber, a mold releasing agent, a colorant, an antistatic agent, a glidant, a lubricant, a plasticizer, a compatibilizing agent, and a flame retardant that are usually known into the extruder and to knead them.

The melt-kneading temperature in the extruder is dependent on the glass transition temperature or molecular weight of the polycarbonate resin, but it is usually from 150 to 300°, preferably from 200 to 270°C, and even more preferably from 230 to 260°C. The melt viscosity of the polycarbonate resin is high, the load applied to the extruder

increases, and the productivity decreases when the melt-kneading temperature is lower than 150°C. The thermal deterioration of the polycarbonate resin is intensified and a decrease in mechanical strength due to a decrease in molecular weight, the coloration, the generation of gas, the generation of foreign substance, and further the occurrence of resin burning are caused when the melt-kneading temperature is higher than 300°C. It is preferable to mount a filter for the removal of the foreign substance or the resin burnt substance in the extruder or at the exit of the extruder.

The size (sieve opening) of the filter for the removal of foreign substance is set so as to achieve the goal of filtration precision of removing 99% or more of foreign substance, and it is usually 400 μm or less, preferably 200 μm or less, and particularly preferably 100 μm or less. There is a case in which the foreign substance or resin burnt substance cannot be removed by the filter when the sieve opening of the filter is excessively large, and thus there is a possibility that brittle fracture of the molded article is caused when the polycarbonate resin is molded. In addition, the sieve opening of the filter can be adjusted according to the application of the polycarbonate resin composition of the invention. For example, in the case of applying the polycarbonate resin composition to a film application, the sieve opening of the filter is preferably 40 μm or less and more preferably 10 μm or less for the requirement to eliminate the defect.

Furthermore, a plurality of the filters may be mounted in series and used, or a filtering device fabricated by stacking a plurality of leaf disc-type polymer filters may be used.

In addition, it is preferable to use a cooling method such as air cooling or water cooling when the melt-extruded polycarbonate resin is cooled and pelletized. As the air to be used when air cooling, it is desirable to use the air obtained by removing the foreign substance in the air using a HEPA filter (a filter defined in JIS Z8112 is preferable.) in advance and to prevent reattachment of the foreign substance in the air. It is preferable to carry out the removal of foreign substance in a clean room having a cleanliness factor higher than more preferably the class 7 and even more preferably the class 6 defined in JIS B 9920 (2002). It is desirable to use water obtained by removing the metallic substance in water using an ion-exchange resin and further removing the foreign substance in water using a filter when using water cooling. The sieve opening of the filter to be used is various, but a filter having a sieve opening of from 0.01 to 0.45 μm is preferable.

When producing the polycarbonate resin of the invention by the melt polymerization method, it is possible to add one kind or two or more kinds of a phosphoric acid compound and a phosphorous acid compound at the time of the polymerization for the purpose of preventing coloration.

As the phosphoric acid compound, one kind or two or more kinds of trialkyl phosphates such as trimethyl phosphate and triethyl phosphate are suitably used. These are added at preferably 0.0001% by mole or more and 0.005% by mole or less and more preferably 0.0003% by mole or more and 0.003% by mole or less with respect to the entire hydroxy compounds subjected to the reaction. The effect of preventing the coloration of the polycarbonate resin is small when the amount of the phosphorus compound added is less than the lower limit, and the transparency of the polycarbonate resin decreases, the coloration thereof is rather promoted, or the heat resistance thereof decreases when the amount is more than the upper limit.

In addition, as the phosphorous acid compound, it is possible to arbitrarily select and use the heat stabilizer described below. In particular, it is possible to suitably use one kind or two or more kinds of trimethyl phosphite, triethyl phosphite, tris(nonylphenyl) phosphite, trimethyl phosphate, tris(2,4-di-tert-butylphenyl) phosphite, and bis(2,4-di-tert-butylphenyl)pentaerythritol diphosphite. These phosphorous acid compounds are added at preferably 0.0001% by mole or more and 0.005% by mole or less and more preferably 0.0003% by mole or more and 0.003% by mole or less with respect to the entire hydroxy compounds subjected to the reaction. The effect of preventing the coloration of the polycarbonate resin is small when the amount of the phosphorous acid compound added is less than the lower limit, and transparency of the polycarbonate resin decreases, the coloration thereof is rather promoted, or the heat resistance thereof decreases when the amount is more than the upper limit.

The phosphoric acid compound and phosphorous acid compound described above can be added concurrently, and the amount added in this case is set to preferably 0.0001% by mole or more and 0.005% by mole or less and even more preferably 0.0003% by mole or more and 0.003% by mole or less as the total amount of the phosphoric acid compound and the phosphorous acid compound with respect to the entire hydroxy compounds subjected to the reaction. The effect of preventing the coloration of the polycarbonate resin is small when this added amount is less than the lower limit, and transparency of the polycarbonate resin decreases, the coloration thereof is rather promoted, or the heat resistance thereof decreases when this added amount is more than the upper limit.

In addition, one kind or two or more kinds of thermal stabilizers may be blended into the polycarbonate resin thus produced in order to prevent a decrease in molecular weight or worsening of the hue at the time of molding or the like.

Examples of such a thermal stabilizer may include phosphorous acid, phosphoric acid, phosphonous acid, phosphonic acid, and any ester of these, and specific examples thereof may include the following ones. Triphenyl phosphite, tris(nonylphenyl) phosphite, tris(2,4-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl) pentaerythritol diphosphite, 2,2-methylene bis(4,6-di-tert-butylphenyl)octyl phosphite, bis(nonylphenyl) pentaerythritol diphosphite, bis(2,4-di-tert-butylphenyl) pentaerythritol diphosphite, distearyl pentaerythritol diphosphite, tributyl phosphate, triethyl phosphate, trimethyl phosphate, triphenyl phosphate, diphenyl mono-o-xenyl phosphate, dibutyl phosphate, dioctyl phosphate, diisopropyl phosphate, tetrakis(2,4-di-tert-butylphenyl) 4,4'-biphenylenediphosphinate, dimethyl benzenephosphonate, diethyl benzenephosphonate, dipropyl benzenephosphonate, and the like. Among them, tris(nonylphenyl) phosphite, trimethyl phosphate, tris(2,4-di-tert-butylphenyl) phosphite, bis(2,4-di-tert-butylphenyl) pentaerythritol diphosphite, bis(2,6-di-tert-butyl-4-methylphenyl) pentaerythritol diphosphite, and dimethyl benzenephosphonate are preferably used.

Such thermal stabilizers can be additionally added at the time of molding or the like as well as are added at the time of the melt polymerization. In other words, as a proper amount of the phosphorous acid compound or the phosphoric acid compound is blended into the raw material for polymerization to obtain a polycarbonate resin and then the phosphorous acid compound is further added at the time of molding or the like by the blending method to be described later, a decrease in transparency, coloration, and a decrease in heat resistance of the resin at the time of the polymerization are avoided, a great amount of heat stabilizers can be blended into the molded article, and it the is possible to prevent worsening of hue.

The content of these thermal stabilizers is preferably from 0.0001 to 1 part by mass, more preferably from 0.0005 to 0.5 part by mass, and even more preferably from 0.001 to 0.2 part by mass with respect to 100 parts by mass of the polycarbonate resin.

<Physical properties of polycarbonate resin>

Preferred physical properties of the PC resin (B) will be described below.

(Glass transition temperature)

The glass transition temperature (Tg) of the PC resin (B) is preferably less than 145°C. It is concerned that the polycarbonate resin is easily colored and it is difficult to improve the impact strength thereof when the glass transition temperature of the polycarbonate resin is higher than this temperature. In addition, in this case, it is required to set the temperature of the mold high when transferring the shape on the mold surface to the molded article at the time of molding. Hence, it is concerned that the temperature controller that can be selected is limited or the transferability of the mold surface is worsened.

The glass transition temperature of the PC resin (B) is more preferably less than 140°C and more preferably less than 135°C. In addition, the glass transition temperature of the PC resin (B) is usually 90°C or higher and preferably 95°C or higher.

Examples of the method for setting the glass transition temperature of the polycarbonate resin of the invention to less than 145°C may include [1] a method to decrease the proportion of structural unit (1) in the polycarbonate resin, [2] a method to select an alicyclic dihydroxy compound exhibiting low heat resistance as the dihydroxy compound used in the production of the polycarbonate resin, and [3] a method to lower the proportion of the structural unit derived from an aromatic dihydroxy compound such as a bisphenol compound in the polycarbonate resin. Incidentally, the method for measuring the glass transition temperature of the polycarbonate resin will be described later.

(Reduced viscosity)

It is preferable that the "reduced viscosity" that is an indicator of the polymerization degree of the PC resin (B) is 0.40 dl/g or more and 2.0 dl/g or less. The "Reduced viscosity" in the invention is a value measured at a temperature of 30.0°C ± 0.1°C by dissolving 1.00 g of the polycarbonate resin in 100 ml of a mixed solvent prepared by mixing phenol and 1,1,2,2-tetrachloroethane at a mass ratio of 1 : 1 as the solvent. The lower limit of this reduced viscosity is even more preferably 0.42 dl/g or more and particularly preferably 0.45 dl/g or more, but there is a case in which the polycarbonate resin having a reduced viscosity of 0.60 dl/g or more and further 0.85 dl/g or more is suitably used depending on the application of the polycarbonate resin composition of the invention. In addition, the upper limit of this reduced viscosity is even more preferably 1.7 dl/g or less and particularly preferably 1.4 dl/g or less. There is a case in which the mechanical strength is weakened when the reduced viscosity of the polycarbonate resin is excessively low, and there is a tendency that the fluidity at the time of molding decreases, the recyclability decreases, the strain of the molded article increase, and the molded article is easily deformed by heat when the reduced viscosity of the polycarbonate resin is excessively high.

[Reinforcing agent for polycarbonate resin]

The reinforcing agent for polycarbonate resin composed of a rubber-like graft polymer of the invention is characterized in that the ΔYI value of a test piece prepared by molding a polycarbonate resin composition composed of 3 parts by mass of the rubber-like graft polymer and 97 parts by mass of an aromatic polycarbonate resin (Iupilon S-2000F manufactured by Mitsubishi Engineering-Plastics Corporation) having a viscosity average molecular weight of 24,000 under the following conditions is 36 or less and the ΔMFR value of a pellet of the polycarbonate resin composition is 3 or less.

"Condition 1" condition for fabricating pellet and test piece:

The polycarbonate resin composition is kneaded using a devolatilization type extruder (PCM-30 manufactured by Ikegai Corp.) heated to have a barrel temperature of 280°C under a condition of a screw rotation speed of 150 rpm to obtain a pellet. This pellet is molded using a 100 t injection molding machine (SE-100DU manufactured by Sumitomo Heavy Industries, Ltd.) under a condition of a cylinder temperature of 280°C and a mold temperature of 90°C to obtain a test piece (length: 100 mm, width: 50 mm, thickness: 2 mm) having a flat plate shape.

"Condition 2" condition for measuring ΔYI value:

The YI value of the test piece is measured in conformity with JIS K7105 by a reflected light measuring method using a spectral color difference meter (model name "SE2000" manufactured by NIPPON DENSHOKU INDUSTRIES Co., LTD.) under a condition of a C light source and a 2 degree field of view. First, the YI value ($YI_B$) of the test piece before being heat aged is measured. Subsequently, the YI value ($YI_A$) of the test piece after being heat aged for 12 hours at a temperature of 140°C using a high temperature oven (model name "PMS-B" manufactured by ESPEC CORP.) is measured. The ΔYI value is calculated by the following Equation.

$$\Delta YI = YI_A - YI_B.$$

"Condition 3" condition for measuring ΔMFR value:

The melt mass flow rate (MFR) value of the pellet is measured at a cylinder temperature of 300°C and a load of 1.2 kg in conformity with ISO1133 using a melt indexer (model name "S-111" manufactured by TOYO SEIKI SEISAKU-SHO LTD.). First, the MFR value ($MFR_B$) of a pellet before being heat aged is measured. Subsequently, the MFR value ($MFR_A$) of another pellet after being heat aged for 60 hours under a condition of a temperature of 120°C and a relative humidity of 100% using a pressure cooker (model name "unsaturated type highly accelerated life test equipment PC-422R" manufactured by HIRAYAMA MANUFACTURING CORPORATION). The ΔMFR value is calculated by the following Equation.

$$\Delta MFR = MFR_A - MFR_B$$

[Rubber-like graft polymer]

The rubber-like graft polymer (hereinafter, referred to as the "rubber polymer (A)".) of the invention having the ΔYI value and the ΔMFR value described above exhibits the effect of suppressing a decrease in resistance to thermal coloration and resistance to moist heat of the polycarbonate resin in the polycarbonate resin composition containing this rubber polymer (A) and a polycarbonate resin. The rubber polymer (A) can be obtained by selecting the emulsifier used in the polymerization and the coagulant used in collection of powder.

In a case in which an emulsifier that is a salt of a strong acid and a strong base is used when polymerizing the monomer for rubber particles or at the time of graft polymerization or a case in which a coagulant that is a strong acid or a salt of a strong acid and a strong base is used when coagulating the rubber-like graft polymer latex and collecting the rubber-like graft polymer, the strong acid or salt derived from the emulsifier or the coagulant remains in the rubber-like graft polymer in a trace amount. It is not preferable since the butadiene rubber contained in the rubber part of the rubber-like graft polymer is subjected to the oxidative deterioration by the strongly acidic ion released from the strong acid or salt. In addition, the strongly acidic ion released decomposes the polycarbonate resin when this rubber-like graft copolymer is blended into the polycarbonate resin, and thus the resistance to thermal coloration and resistance to moist heat of the polycarbonate resin decrease, and this is not preferable. Hence, it is possible to improve the drawbacks described above and to achieve an improvement in ΔYI value and ΔMFR value as an emulsifier that is a salt of a weak acid and a strong base and a coagulant that is a salt of a weak acid and a strong base are used in the production of the rubber-like graft polymer of the invention. It can also be achieved as an emulsifier that is a salt of a weak acid and a

strong base is used in the graft polymerization and then the rubber-like graft polymer is collected through spray collection of the rubber-like graft polymer latex thus obtained. This is because a strong acid or a coagulant that is a salt of a strong acid and a strong base is not used in the case of spray collection. Moreover, as the rubber-like graft polymer of the invention is combined with a thioether-based antioxidant having a molecular weight of 700 or more, it is possible to synergistically improve the ΔYI value as compared to the polycarbonate resin to which these are not added.

<ΔYI>

It is required that the molded article obtained from a polycarbonate resin composition containing the rubber-like graft polymer of the invention has a ΔYI value of 36 or less. The polycarbonate resin composition containing the rubber-like graft polymer exhibits excellent resistance to thermal coloration when the ΔYI value is 36 or less. An emulsifier that is a salt of a weak acid and a strong base or a coagulant that is a salt of a weak acid and a strong base may be used in order to set the ΔYI value to 36 or less. Alternatively, the rubber-like graft polymer may be collected through spray collection. In addition, the resistance to thermal coloration of the polycarbonate resin composition obtained by concurrently using a thioether-based antioxidant having a molecular weight of 700 or more and the rubber-like graft polymer is further improved to be excellent. This ΔYI value is preferably 30 or less, more preferably 25 or less, and even more preferably 20 or less in consideration of the applicability to the motor vehicle field, the OA equipment field such as a printer, and the electric and electronic field such as a mobile phone.

<ΔMFR>

It is required that the molded article obtained from a polycarbonate resin composition containing the rubber-like graft polymer of the invention has a ΔMFR value of 3 or less. The polycarbonate resin composition containing the rubber-like graft polymer exhibits excellent resistance to moist heat when the ΔMFR value is 3 or less. An emulsifier that is a salt of a weak acid and a strong base or a coagulant that is a salt of a weak acid and a strong base may be used in order to set the ΔMFR value to 3 or less. Alternatively, the rubber-like graft polymer may be collected through spray collection. This ΔMFR value is preferably 2.6 or less, more preferably 2.3 or less, and even more preferably 2 or less in consideration of the applicability to the motor vehicle field and the like.

<Method for producing rubber-like graft polymer>

In the invention, the rubber-like graft polymer is obtained by polymerizing a vinyl monomer in the presence of a rubber latex. Examples of the rubber-like graft polymer of the invention may include the rubber polymer (A)) and the rubber polymer (A') to be described later.

[Rubber part]

As the rubber part of the rubber polymer (A), it is preferable to use an elastomer, and it is preferable to use a thermoplastic elastomer among them. As the thermoplastic elastomer, various kinds of copolymer resins are used, but the glass transition temperature thereof is usually -20°C or lower, and among them, those having a glass transition temperature of -30°C or lower are preferable, those having a glass transition temperature of -50°C or lower are more preferable, and those having a glass transition temperature of -70°C or lower are even more preferable.

The rubber part of the rubber polymer (A) is a polymer having a structural unit with a glass transition temperature of -20°C or lower such as a diene structural unit, an alkyl (meth)acrylate structural unit, and an organosiloxane structural unit, and one kind of the structural unit of the rubber part can be used singly or two or more kinds thereof can be used in combination. The rubber part of the rubber polymer (A) contains preferably a diene structural unit and more preferably a butadiene structural unit from the viewpoint of impact strength developing property of the polycarbonate resin composition containing the rubber-like graft polymer at low temperature or the color developing property.

The monomer to be a raw material for the diene structural unit is not particularly limited, but examples thereof may include a diene monomer such as butadiene, isoprene, and for example 1,3-butadiene.

The rubber part of the rubber polymer (A) contains a butadiene structural unit at preferably 70% by mass or more, more preferably 80% by mass or more, and even more preferably 90% by mass or more with respect to 100% by mass of the rubber part. The molded article obtained from the polycarbonate resin composition containing the rubber-like graft polymer exhibits an excellent impact strength at low temperature when the rubber part contains the butadiene structural unit at 70% by mass or more.

The monomer to be a raw material for the alkyl (meth)acrylate structural unit is not particularly limited, but examples thereof may include methyl acrylate, ethyl acrylate, butyl acrylate, 2-ethylhexyl acrylate, lauryl acrylate, stearyl acrylate, and t-butyl acrylate. One kind of these monomers can be used singly or two or more kinds thereof can be used

in combination. An alkyl acrylate having from 2 to 8 carbon atoms is preferable, an alkyl acrylate having from 3 to 6 carbon atoms is more preferable, and butyl acrylate is particularly preferable as the alkyl acrylate monomer from the viewpoint of polymerization stability in emulsion polymerization.

The monomer to be a raw material for the organosiloxane structural unit is not particularly limited, but examples thereof may include an organosiloxane, a siloxanes having a vinyl polymerizable functional group, and if necessary, a siloxane-based crosslinking agent, and a siloxane having a terminal blocking group. Examples of the organosiloxane may include hexamethylcyclotrisiloxane and octamethylcyclotetrasiloxane. Examples of the siloxane having a vinyl polymerizable functional group may include β-(meth)acryloyloxyethyldimethoxymethylsilane and γ-(meth)acryloyloxypropyldimethoxymethylsilane. Examples of the siloxane-based crosslinking agent may include tetramethoxysilane and tetraethoxysilane. Examples of the siloxane having a terminal blocking group may include hexamethyldisiloxane and 1,3-bis(3-glycidoxypropyl)tetramethyldisiloxane. One kind of these monomers can be used singly or two or more kinds thereof can be used in combination.

The rubber-like graft polymer of the invention is preferably a rubber-like graft polymer (hereinafter, referred to as the "rubber polymer (A')" in some cases.) in which the rubber part has a butadiene structural unit and an alkyl acrylate structural unit. The rubber polymer (A') is preferably obtained by coagulating the rubber-like graft polymer latex obtained through emulsion polymerization using an aliphatic emulsifier using an alkaline earth metal salt and collecting the coagulate thus formed. This rubber-like graft polymer latex is preferably obtained by polymerizing a vinyl monomer (g') and preferably a vinyl monomer (g') containing a vinyl monomer (p) having a polar group in the presence of a rubber latex having a butadiene structural unit and an alkyl acrylate structural unit.

It is preferable to use an elastomer and it is preferable to use a thermoplastic elastomer among them as the rubber latex to be a raw material for the "rubber polymer (A')". As the thermoplastic elastomer, various kinds of copolymer resins are used, but the glass transition temperature thereof is usually -20°C or lower, and among them, those having a glass transition temperature of -30°C or lower are preferable, those having a glass transition temperature of -50°C or lower are more preferable, and those having a glass transition temperature of -70°C or lower are even more preferable.

It is preferable that the rubber latex that is a raw material for the "rubber polymer (A')" and has a butadiene structural unit and an alkyl acrylate structural unit has the butadiene structural unit at from 1 to 99% by mass, the alkyl acrylate structural unit at from 99 to 1% by mass, and a structural unit of another vinyl monomer at from 0 to 30% by mass (provided that the total solid content in the rubber latex is set to 100% by mass). In addition, it is more preferable to have the butadiene structural unit at from 1 to 99% by mass, the alkyl acrylate structural unit at from 99 to 1% by mass, and the structural unit of another vinyl monomer at from 0 to 10% by mass. It is preferable that the content of the butadiene structural unit in the rubber latex is 1% by mass or more from the viewpoint of impact resistance, and it is preferable that the content is 99% by mass or less from the viewpoint of the YI value (heat coloring property). It is preferable that the structural unit of another vinyl monomer is 30% by mass or less since a difference in refractive index between the rubber-like graft polymer of the invention and the polycarbonate resin of the invention decreases.

Incidentally, here, the butadiene structural unit means a structural unit derived from a butadiene monomer used in the production of the rubber latex, the alkyl acrylate structural unit means a structural unit derived from an alkyl acrylate monomer used in the production of the rubber latex, and the structural unit of vinyl monomer means a structural unit derived from another vinyl monomer used in the production of the rubber latex if necessary.

The rubber latex is obtained by polymerizing the butadiene monomer, the alkyl acrylate monomer, and "another vinyl monomer" used if necessary.

The butadiene monomer is not particularly limited, but examples thereof may include a diene monomer such as butadiene and isoprene, and for example 1,3-butadiene. The alkyl acrylate monomer is not particularly limited, but examples thereof may include methyl acrylate, ethyl acrylate, butyl acrylate, 2-ethylhexyl acrylate, lauryl acrylate, stearyl acrylate, and t-butyl acrylate. One kind of these monomers can be used singly or two or more kinds thereof can be used in combination.

For the reason of polymerization stability in emulsion polymerization, an alkyl acrylate having from 2 to 8 carbon atoms is preferable, an alkyl acrylate having from 3 to 6 carbon atoms is more preferable, and butyl acrylate is particularly preferable as the alkyl acrylate monomer.

As "another vinyl monomer", it is possible to use a monofunctional or polyfunctional vinyl monomer that is copolymerizable with the butadiene monomer or the alkyl acrylate monomer, and examples thereof may include the following ones. A monofunctional monomer typified by acrylonitrile or an alkyl methacrylate; and a polyfunctional monomer such as divinyl benzene, ethylene glycol dimethacrylate, butylene glycol diacrylate, triallyl cyanurate, triallyl isocyanurate, trimethylolpropane triacrylate, or pentaerythritol tetraacrylate. One kind of these monomers can also be used singly or two or more kinds thereof can be used in combination.

The polymerization method when producing the rubber particles to be a raw material for the "rubber polymer (A)" and the "rubber polymer (A')" is not particularly limited, but examples thereof may include emulsion polymerization or suspension polymerization in an aqueous system and solution polymerization in a solution system. The emulsion polymerization is preferable for the reason of controlling the particle size of the rubber particles and easily obtaining the

rubber particles having a core and shell structure.

The polymerization initiator used in the polymerization is not particularly limited, and it is possible to use, for example, an azo-based initiator and a peroxide-based initiator. One kind of these polymerization initiators may be used singly or two or more kinds thereof may be used in combination. It is preferable that the amount of the polymerization initiator used is set to usually from 0.05 to 1.0 part by mass and particularly about from 0.1 to 0.3 part by mass with respect to 100 parts by mass of the monomer.

<Emulsifier>

In a case in which the rubber-like graft polymer is the "rubber polymer (A)", the emulsifier used in the polymerization when producing the rubber particles to be a raw material is preferably an emulsifier that is a salt of a weak acid and a strong base, and at least one or more kinds of emulsifiers selected from a carboxylic acid-based emulsifier, a phosphoric acid-based emulsifier, or a nonionic emulsifier are used. A trace amount of the emulsifier remains in the rubber-like graft polymer in the form of an acid, a base, or a salt when the rubber-like graft polymer latex containing a rubber latex is coagulated, and thus it is concerned that the butadiene rubber contained in the rubber part is subjected to the oxidative deterioration by the ion released from these salts and the like. In addition, it is concerned that this released ion decomposes the polycarbonate resin when the rubber-like graft polymer is blended into the polycarbonate resin. Hence, a phosphoric acid-based emulsifier or a carboxylic acid-based emulsifier which has a low acidity when an ion is released therefrom or a nonionic emulsifier which does not generate an ion is preferable. In addition, a sulfonic acid-based emulsifier is not preferable.

Examples of the carboxylic acid-based emulsifier may include the following ones. A metal salt of a saturated/unsaturated fatty acid having an alkyl group having from 8 to 28 carbon atoms such as caprylic acid, pelargonic acid, capric acid, lauric acid, myristic acid, palmitic acid, margaric acid, stearic acid, arachidic acid, behenic acid, lignoceric acid, cerotic acid, montanic acid, myristoleic acid, palmitoleic acid, oleic acid, elaidic acid, vaccenic acid, ricinoleic acid, gadoleic acid, eicosenoic acid, erucic acid, nervonic acid, linoleic acid, eicosadienoic acid, docosadienoic acid, linolenic acid, pinolenic acid, eleostearic acid, mead acid, eicosatrienoic acid, stearidonic acid, arachidonic acid, eicosatetraenoic acid, adrenic acid, bosseopentaenoic acid, eicosapentaenoic acid, osbond acid, sardine acid, tetracosapentaenoic acid, docosahexaenoic acid, or nisinic acid; a metal salt of an oligocarboxylic acid compound such as alkenylsuccinic acid; and a metal salt of a sarcosine derivative such as N-lauroyl sarcosine or N-cocoyl sarcosine.

Examples of the commercially available carboxylic acid-based emulsifier may include the "NS soap", "SS-40N", "FR-14", "FR-25", and "LATEMUL ASK" manufactured by Kao Corporation, and the "DIPUROJIN K-25" and "NEOSCOPE SLN-100" manufactured by TOHO Chemical Industry Co., Ltd..

Examples of the phosphoric acid-based emulsifier may include polyoxyethylene phenyl ether phosphoric acid, polyoxyethylene alkyl phenyl ether phosphoric acid, polyoxyethylene alkyl ether phosphoric acid, and alkyl phosphoric acid. These phosphoric acid-based emulsifiers may be in an acid form or a salt form such as a sodium salt or a potassium salt.

Examples of the commercially available phosphoric acid-based emulsifier may include the "PHOSPHANOL ML-200", "PHOSPHANOL GF-199", "PHOSPHANOL RA-600", "PHOSPHANOL RS-610NA", "PHOSPHANOL SC-6103", and "PHOSPHANOL LP-700" manufactured by TOHO Chemical Industry Co., Ltd.

Examples of the nonionic emulsifier may include the following ones. Polyoxyalkylene alkyl ether, polyoxyethylene alkylene alkyl ether, polyoxyethylene distyrenated phenyl ether, polyoxyethylene tribenzyl phenyl ether, sorbitan fatty acid ester, polyoxyethylene sorbitan fatty acid ester, polyoxyethylene fatty acid ester, and the like.

Examples of the commercially available nonionic emulsifier may include the "EMULGEN 120", "EMULGEN LS-114", "EMULGEN A-90", "RHEODOL SP-L10", "RHEODOL TW-L120", and "EMANON 1112" manufactured by Kao Corporation.

The carboxylic acid-based emulsifier, the phosphoric acid-based emulsifier, and the nonionic emulsifier described above may be used singly or two or more kinds thereof may be used in combination. In addition, it is preferable to contain at least one kind of emulsifier selected from the carboxylic acid-based emulsifier and phosphoric acid-based emulsifier among the above emulsifiers in order to easily conduct the coagulation.

The amount of the emulsifier used is not particularly limited, but it is preferably from 0.1 to 20.0 parts by mass, more preferably from 0.1 to 15.0 parts by mass, even more preferably from 0.1 to 10.0 parts by mass, particularly preferably from 0.1 to 8.0 parts by mass, and most preferably from 1.5 to 8.0 parts by mass with respect to 100 parts by mass of the resin solid content in the rubber latex. The emulsion stability is excellent when the amount of the emulsifier used is 0.1 part by mass or more, and the coagulation of the rubber-like graft polymer latex is facilitated when the amount is 20.0 parts by mass or less.

In a case in which the rubber-like graft polymer is the "rubber polymer (A')" described above, it is possible to use an anionic emulsifier, a nonionic emulsifier, a cationic emulsifier, and a nonionic and anionic emulsifier as the emulsifier used in the polymerization when producing the rubber particles to be a raw material. One kind of these

polymerization initiators may be used singly or two or more kinds thereof may be used concurrently. It is preferable to use an aliphatic emulsifier such as sodium N-lauroyl sarcosinate and potassium oleate as the emulsifier from the viewpoint of a decrease in thermal coloration of the polycarbonate resin. It is preferable to set the amount of the emulsifier such as an aliphatic emulsifier used to usually from 0.05 to 3 parts by mass and particularly from 0.1 to 2 parts by mass with respect to 100 parts by mass of the monomer.

(Volume average particle size of rubber particles)

The "volume average particle size" of the rubber particles in the rubber latex to be a raw material for the rubber-like graft polymer of the invention is preferably from 0.1 to 1 μm, more preferably 0.15 μm or more. In addition, the volume average particle size of the rubber particles in the rubber latex is more preferably 0.7 μm or less and more preferably 0.5 μm or less. It is possible to improve the impact resistance of the polycarbonate resin composition of the invention prepared by adding the rubber-like graft polymer to the polycarbonate resin at low temperature when the volume average particle size of the rubber particles in the rubber latex is 0.1 μm or more. In addition, cullet is hardly generated at the time of producing the rubber polymer (A) when the volume average particle size of the rubber particles is 1 μm or less. Here, the "volume average particle size" of the rubber particles in the rubber latex means the 50% volume average particle size of the rubber particles in the rubber latex measured using a light scattering particle analyzer. The measuring method will be described later.

(Enlargement of rubber particles)

The volume average particle size of the rubber particles in the rubber latex obtained through usual emulsion polymerization is about 0.1 μm. A method in which the rubber particles in the rubber latex are enlarged by an enlarging agent is used in order to set the volume average particle size thereof to from 0.1 to 1 μm. The enlargement of the rubber particles can be performed by adding an enlarging agent to the rubber latex. The enlarging agent can be arbitrarily selected from known ones, but it is preferable to use an acid group-containing copolymer (K) and/or an oxyate salt (M).

The acid group-containing copolymer (K) is preferably a polymer obtained by polymerizing an unsaturated acid, an alkyl acrylate, and "another copolymerizable monomer" used if necessary.

Examples of the unsaturated acid may include acrylic acid, methacrylic acid, itaconic acid, crotonic acid, maleic acid, fumaric acid, cinnamic acid, sorbic acid, and p-styrenesulfonic acid. Among them, acrylic acid and methacrylic acid are preferable from the viewpoint of ease of availability and ease of handling. One kind of these unsaturated acids can be used singly or two or more kinds thereof can be used in combination.

As the alkyl acrylate, an alkyl acrylate having from 1 to 12 carbon atoms in the alkyl group is preferable, and examples thereof may include methyl acrylate, ethyl acrylate, propyl acrylate, butyl acrylate, isopropyl acrylate, hexyl acrylate, 2-ethylhexyl acrylate, and stearyl acrylate. One kind of these alkyl acrylates may be used singly or two or more kinds thereof may be used currently.

Examples of "another copolymerizable monomer" may include a styrene derivative such as styrene or α-methylstyrene, alkyl methacrylate, and acrylonitrile. One kind of these other copolymerizable monomers can be used singly or two or more kinds thereof can be used in combination.

As the proportion of the monomer mixture used in the acid group-containing copolymer (K), it is preferable that the unsaturated acid is from 3 to 40% by mass, the alkyl acrylate is from 97 to 35% by mass, and "another copolymerizable monomer" is from 0 to 40% by mass, and it is more preferable that the unsaturated acid is from 5 to 35% by mass, the alkyl acrylate is from 95 to 40% by mass, and "another copolymerizable monomer" is from 0 to 35% by mass. As the composition is within the above range, the stability of the latex when performing the enlargement is excellent and it is easy to control the rubber particle size of the rubber latex obtained through the enlargement.

The acid group-containing copolymer (K) can be obtained by polymerizing a monomer mixture having the composition described above by a known emulsion polymerization method. The polymerization may be conducted in one stage or multiple stages. It is possible to obtain the acid group-containing copolymer (K) having a multilayer structure constituted by two or more layers by conducting the polymerization in multiple stages.

It is possible to use an oxyate salt (M) when enlarging the rubber particles in a range in which the performance of the rubber-like graft polymer is not interfered.

The oxyate salt (M) is at least one kind of oxyate salt (M) selected from among an alkali metal salt or an alkaline earth metal salt of an oxygen acid, or a zinc salt, a nickel salt, and an aluminum salt of an oxygen acid is preferable. Examples of such an oxyate salt (M) may include salts of sulfuric acid, nitric acid, and phosphoric acid and potassium, sodium, magnesium, calcium, nickel, and aluminum. The oxyate salt (M) is preferably potassium sulfate, sodium sulfate, magnesium sulfate, aluminum sulfate, sodium phosphate, magnesium phosphate, and the like from the viewpoint of ease of particle size control when performing the enlargement, ease of availability, and ease of handling.

One kind of these acid group-containing copolymers (K) and these oxyate salts (M) can be used singly or two

or more kinds thereof can be used in combination, respectively. In the case of using these acid group-containing copolymers (K) and these oxyate salts (M) singly, respectively, the amount of the acid group-containing copolymer (K) added is from 0.1 to 5 parts by mass, more preferably from 0.5 to 4 parts by mass, and even more preferably from 0.5 to 3 parts by mass as the polymer solid content per 100 parts by mass of the solid content of the rubber latex. In addition, the amount of the oxyate salt (M) added is from 0.1 to 5 parts by mass and more preferably from 0.1 to 4 parts by mass per 100 parts by mass of the solid content of the rubber latex. The enlargement of the rubber particles in the rubber latex is more efficiently performed and the stability of the enlarged rubber latex to be obtained is also significantly improved as the acid group-containing copolymer (K) and the oxyate salt (M) are added within these ranges.

Incidentally, it is preferable that the pH of the rubber latex is 7 or more in the case of performing the enlarging treatment using the acid group-containing copolymer (K). There is a case in which the enlargement efficiency is low although the acid group-containing copolymer (K) is added when the pH is in the acidic side. The adjustment of the pH of the rubber latex may be performed during the production of the rubber latex or may be separately performed before the enlarging treatment.

[Graft part]

The rubber-like graft polymer of the invention is a polymer obtained by polymerizing a vinyl monomer in the presence of a rubber latex containing rubber particles composed of a rubber part. The vinyl monomer to be polymerized in the presence of a rubber latex is a graft monomer component and at least one kind of monomer selected from a (meth)acrylate, an aromatic vinyl monomer, and a vinyl cyanide monomer. It is preferable that at least a part of the graft monomer component is grafted onto the rubber part to form a graft polymer in a case in which the rubber-like graft polymer of the invention is the rubber polymer (A).

The (meth)acrylate for grafting is not particularly limited, but examples thereof may include the following ones. Methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, and 2-ethylhexyl (meth)acrylate. One kind of these can be used singly or two or more kinds thereof can be used in combination.

Examples of the aromatic vinyl monomer for grafting may include styrene, α-methylstyrene, vinyltoluene, and chlorostyrene. One kind of these can be used singly or two or more kinds thereof can be used in combination. Examples of the vinyl cyanide monomer for grafting may include acrylonitrile and methacrylonitrile. One kind of these can be used singly or two or more kinds thereof can be used in combination.

It is preferable that the graft part contains a methyl methacrylate structural unit in a case in which the rubber-like graft polymer of the invention is the rubber polymer (A). The proportion of methyl methacrylate in 100% by mass of the vinyl monomer (g) for grafting is preferably from 0.1 to 99.9% by mass and more preferably from 20 to 80% by mass. It is possible to uniformly disperse the rubber polymer (A) in the polycarbonate resin when the vinyl monomer (g) contains methyl methacrylate at 0.1% by mass or more.

The rubber-like graft polymer latex is obtained by graft-polymerizing a vinyl monomer (g') onto the rubber latex in a case in which the rubber-like graft polymer of the invention is the rubber polymer (A'). It is preferable to use a component so that the glass transition temperature of the polymer obtained by polymerizing the component is from 70 to 120°C as the vinyl monomer (g') from the viewpoint of controlling the particle size or bulk density of the powder when coagulating the rubber-like graft polymer latex and collecting the coagulate as a powder.

Examples of the vinyl monomer (g') may include the following ones as a vinyl monomer which does not have a polar group. Methyl (meth)acrylate, ethyl (meth)acrylate, butyl (meth)acrylate, 2-ethylhexyl (meth)acrylate, lauryl (meth)acrylate, stearyl (meth)acrylate, cyclohexyl (meth)acrylate, benzyl (meth)acrylate, t-butyl (meth)acrylate, isobornyl (meth)acrylate, t-butylcyclohexyl (meth)acrylate, phenyl (meth)acrylate, 4-t-butylphenyl (meth)acrylate, styrene, α-methylstyrene, p-methylstyrene, p-t-butylstyrene, 2,4-dimethylstyrene, chlorostyrene, bromostyrene, vinyltoluene, vinylnaphthalene, vinylanthracene, vinyl benzoate, vinyl acetate, and the like. Incidentally, here, the "(meth)acrylate" means either or both of the "methacrylate" and the "acrylate". One kind of these monomers can be used singly or two or more kinds thereof can be used in combination.

It is preferable that the vinyl monomer (g') contains the vinyl monomer (p) having a polar group. It is possible to uniformly disperse the rubber-like graft polymer of the invention in the polycarbonate resin of the invention as the vinyl monomer (g') contains the vinyl monomer (p) having a polar group. In addition, it also makes it possible to improve the impact resistance of the polycarbonate resin composition to be obtained.

Examples of the vinyl monomer (p) having a polar group may include the following ones. 2-hydroxyethyl (meth)acrylate, 2-hydroxypropyl (meth)acrylate, (meth)acrylic acid, dimethylacrylamide, dimethylaminoethyl acrylate methyl chloride quaternary salt, acryloylmorpholine, dimethylaminopropylacrylamide, dimethylaminopropylacrylamide methyl chloride quaternary salt, isopropylacrylamide, diethylacrylamide, bromophenyl (meth)acrylate, dibromophenyl (meth)acrylate, 2,4,6-tri-bromophenyl (meth)acrylate, monophenyl (meth)acrylate, dichlorophenyl (meth)acrylate, trichlorophenyl (meth)acrylate, 2-vinyl-2-oxazoline, p-methoxystyrene, o-methoxystyrene, anhydrous maleic acid, N-phenylmaleimide, and cyclohexylmaleimide. From the viewpoint of ease of emulsion polymerization (the production of cullet is lowered, excellent copolymerizability with another grafting monomer is exhibited, and the like), 2-hydroxyethyl methacrylate and 2-hydroxypropyl methacrylate are preferable. One kind of these monomers can be used singly or two or more kinds thereof can be used in combination.

The proportion of the vinyl monomer (p) having a polar group in 100% by mass of the vinyl monomer (g') can be arbitrarily set, but it is preferably from 0.1 to 20% by mass and more preferably from 0.5 to 5% by. It is possible to uniformly disperse the rubber polymer (A') in the polycarbonate resin as the vinyl monomer (g') contains the vinyl monomer (p) having a polar group at 0.1% by mass or more. Meanwhile, it is preferable that the vinyl monomer (g') contains the vinyl monomer (p) having a polar group at 20% by mass or less from the viewpoint of decreasing a difference in refractive index between the polycarbonate resin and the rubber polymer (A') or decreasing the amount of cullet during the polymerization.

The proportion of the rubber particles in 100% by mass of the rubber-like graft polymer can be arbitrarily set, but it is preferably from 50 to 90% by mass. It is preferable that this value is 50% by mass or more from the viewpoint of strength development. In addition, it is preferable that this value is 90% by mass or less from the viewpoint of dispersibility in the polycarbonate resin of the invention and the coagulation and collection of the rubber-like graft polymer.

The graft polymerization method of the vinyl monomer onto the rubber latex is not particularly limited, but emulsion polymerization is preferable for the reason of controlling the particle size and being able to easily form a core and shell structure. As the emulsion polymerization method, it is possible to employ a generally known emulsion polymerization method such as the batch addition and polymerization of monomer, the continuous addition and polymerization of monomer, or the multistage polymerization. The same method as that for the addition of monomer can be employed for the addition of emulsifier.

The graft layer may be one layer or two or more layers. There is a case in which the butadiene rubber and styrene are copolymerized when a vinyl monomer that is highly hydrophobic and low polymerizable, for example, styrene is copolymerized to the rubber having a butadiene structural unit, and thus the rubber is hard or the refractive index of the rubber-like graft polymer is likely to fluctuate. Hence, in the graft polymerization, it is preferable that a monomer containing a monomer that is highly hydrophilic and highly polymerizable and has a high a glass transition temperature, for example, methyl methacrylate as a main component is graft-polymerized and then a vinyl monomer that is highly hydrophobic, such as styrene is polymerized.

It is possible to use the same ones as the polymerization initiator used when polymerizing the rubber latex can be used as the polymerization initiator used in the polymerization of the rubber-like graft polymer latex, and the used amount thereof is preferably set to usually from 0.05 to 1.0 part by mass and particularly about from 0.1 to 0.3 part by mass with respect to 100 parts by mass of the monomer. In addition, it is possible to use the same ones as the emulsifier used when polymerizing the rubber latex as the emulsifier used in the polymerization of the rubber-like graft polymer latex, and the used amount thereof is preferably set to usually from 0.05 to 3 parts by mass and particularly about from 0.1 to 2 parts by mass with respect to 100 parts by mass of the monomer.

(Collection of rubber-like graft polymer)

The rubber-like graft polymer of the invention is obtained from the rubber-like graft polymer latex obtained as described above through spray collection or through coagulation and collection. In the invention, one kind of the rubber-like graft polymer used in order to obtain a powder can be used singly or two or more kinds thereof can be used in combination.

Examples of the method for coagulating the rubber-like graft polymer latex may include a method in which the latex is brought into contact with hot water containing a coagulant dissolved therein, the polymer is coagulated while stirring to obtain a slurry, and the precipitate thus produced is dewatered, washed, and dried.

In a case in which the rubber-like graft polymer of the invention is the rubber polymer (A), when the coagulant at the time of coagulating rubber-like graft polymer latex is a strong acid or a salt of a strong acid and a strong base, it is concerned that a trace amount of the strong acid or salt derived from the coagulant remains in the rubber-like graft polymer to be obtained and thus the butadiene rubber contained in the rubber part is subjected to oxidative deterioration by the strongly acidic ion released from this strong acid or salt. Moreover, it is concerned that the strongly acidic ion decomposes the polycarbonate resin when this polymer is blended into the polycarbonate resin, and this is not preferable. Hence, it is preferable to use a salt of a weak acid and a strong base and it is more preferable to use an alkali (earth) metal salt of a weak acid as a coagulant in the case of producing the rubber polymer (A) of the invention.

Examples of the coagulant that is a salt of a weak acid and a strong base may include the following ones. An alkali (earth) metal salt of an organic acid such as sodium acetate, potassium acetate, calcium acetate, magnesium acetate, or barium acetate; and an alkali (earth) metal salt of an inorganic acid other than sulfuric acid such as sodium phosphate, potassium phosphate, or calcium phosphate. These coagulants may be used singly or two or more kinds thereof may be used concurrently. It is preferable that these coagulants are highly water soluble since they are used as

an aqueous solution. In addition, it is preferable that the coagulant is those which form a hardly dissociative salt with the emulsifier contained in the latex containing a rubber-like graft polymer at the time of coagulation. This is because such a coagulant hardly decreases the thermal stability of the resin composition obtained by blending the polymer into a polycarbonate resin even if a trace amount of the coagulant remains in the rubber-like graft polymer.

From two points of view described above, an alkaline earth metal salt of an organic acid or an alkaline earth metal salt of an inorganic acid other than sulfuric acid is preferable among the above coagulants, and among them, a calcium salt and a magnesium salt are more preferable and calcium acetate is even more preferable.

The method for washing the coagulate obtained by the coagulation and collection method is not particularly limited, but it is preferable to wash the coagulate with water or an alcohol having 4 or less carbon atoms such as methanol, ethanol, or isopropyl alcohol and it is even more preferable to wash the coagulate with water and/or methanol in order to increase the washing efficiency.

The collection of the rubber polymer (A) from the rubber-like graft polymer latex can be conducted through spray collection but not by coagulation. This is because it is not required to use a strong acid or a salt of a strong acid and a strong base as the coagulant in the case of spray collection. However, the coagulation and collection method using a coagulant that is a salt of a weak acid and a strong base is preferable to the spray collection method as the method for collecting the rubber polymer (A). This is because the coagulation and collection includes a washing step and thus the amount of the ion remaining in the rubber can be further decreased.

In a case in which the rubber-like graft polymer of the invention is the rubber polymer (A'), it is possible to use an inorganic acid such as sulfuric acid, hydrochloric acid, phosphoric acid, or nitric acid; an organic acid such as acetic acid; a salt of sodium, potassium, calcium, magnesium, or aluminum and an inorganic acid or an organic acid, and the like as the coagulant when coagulating the rubber-like graft polymer latex. These coagulants can be used singly or two or more kinds thereof can be used in combination. Among them, an alkaline earth metal salt is preferable, an alkaline earth metal salt which does not contain sulfuric acid is more preferable, and calcium acetate is particularly preferable from the viewpoint of being able to prevent the yellowing of the polycarbonate resin composition to be obtained. These coagulants are used as an aqueous solution, and the added amount thereof is not particularly limited but an amount by which the latex is sufficiently coagulated is used.

In a case in which the rubber-like graft polymer of the invention is the rubber polymer (A) or the rubber polymer (A'), the amount of the coagulant used when coagulating the rubber-like graft polymer latex is not particularly limited as long as an amount by which the latex is sufficiently coagulated is used, but it is preferably from 0.1 to 20 parts by mass, more preferably from 0.1 to 12 parts by mass, even more preferably from 0.5 to 10 parts by mass, and particularly preferably from 0.5 to 8 parts by mass with respect to 100 parts by mass of the resin solid content in the latex containing a rubber-like graft polymer. The powder collecting property and powder handling property of the rubber-like graft polymer are favorable when the amount of the coagulant used is 0.1 parts by mass or more. The resin composition in which the rubber-like graft polymer obtained is blended into a polycarbonate resin exhibits favorable thermal stability when the amount of the coagulant used is 20 parts by mass or less.

It is possible to add an additive such as an antioxidant to the rubber-like graft polymer latex if necessary when collecting the rubber-like graft polymer latex of the invention through spray. The "spray collection" refers to that the rubber-like graft polymer latex is sprayed in the form of a fine droplet in a spray collecting apparatus and then dried by blowing hot air.

Examples of the method for spraying the rubber-like graft polymer latex in the form of a fine droplet in a spray collecting apparatus may include a method such as a rotary disk type, a pressure nozzle type, a two-fluid nozzle type, or a pressurized two-fluid nozzle type. The capacity of the spray collecting apparatus may be any of from a small capacity as used in the laboratory to a large capacity as industrially used. The structure of the supply portion of the heated gas for drying and the structure of the discharge portion of the heated gas for drying and dry powder in the spray collecting apparatus may be appropriately selected according to the purpose. The temperature of the heated gas for drying is preferably 200°C or lower and more preferably from 120 to 180°C.

In the invention, it is possible to add inorganic fine particles such as silica to the rubber-like graft polymer latex and then to spray collect it in order to prevent the powder from being blocked at the time of spray collecting or to improve the properties of powder such as an increase in bulk specific gravity.

It is preferable that the method for producing the reinforcing agent for polycarbonate resin composed of a rubber-like graft polymer of the invention is a method which includes the following step (1) and step (2).

Step (1): a step of obtaining a rubber-like graft polymer latex through emulsion polymerization of a vinyl monomer (g) in the presence of a rubber latex containing an emulsifier of a salt of a weak acid and a strong base.

Step (2): a step of spray collecting the rubber-like graft polymer latex or coagulating and collecting the rubber-like graft polymer latex using a coagulant of a salt of a weak acid and a strong base.

(Amount of sulfate ion ($SO_4^{2-}$) and sulfite ion ($SO_3^{2-}$))

In the invention, the total amount (g/g) of a sulfate ion ($SO_4^{2-}$) and a sulfite ion ($SO_3^{2-}$) that are contained in the rubber-like graft polymer and obtained by immersing 20.0 g of the rubber-like graft polymer in 200 ml of hot water having a temperature of 95°C or higher for 20 hours and then measuring the concentrations (amounts) of the sulfate ion ($SO_4^{2-}$) and the sulfite ion ($SO_3^{2-}$) that are extracted into the hot water is preferably 3.5 ppm or less, more preferably 3 ppm or less, and even more preferably 2.5 ppm or less. It is not preferable that the total amount of both of these ions is more than 3.5 ppm since a sulfate salt derived from the emulsifier or coagulant remains in the powder of the rubber-like graft polymer and the butadiene rubber contained in the rubber-like graft polymer is subjected to the oxidative deterioration by the ion released from this sulfate salt. Moreover, the released ion decomposes the polycarbonate resin when this rubber-like graft copolymer is blended into the polycarbonate resin and thus the resistance to thermal coloration and the resistance to moist heat of the polycarbonate resin decrease, and this is not preferable.

It is preferable to set the use amount of the emulsifier or coagulant which contains the ion with respect to 100 parts by mass of the rubber-like graft polymer to 1.0 part by mass or less, it is more preferable to set the use amount to 0.5 part by mass or less, and it is even more preferable not to use the emulsifier or coagulant which contains the ion in order to set the total amount of the two ions to 3.5 ppm or less.

(Amount of chlorine ion ($Cl^-$))

In the invention, the amount (g/g) of a chlorine ion ($Cl^-$) contained in the rubber-like graft polymer is preferably 150 ppm or less, more preferably 100 ppm or less, and even more preferably 50 ppm or less. It is not preferable that the amount of the chlorine ion ($Cl^-$) is more than 150 ppm since the chlorine ion corrodes the metal pipe of the production line or the mold of the molding machine when producing the rubber-like graft polymer of the invention or when blending the rubber-like graft polymer into a polycarbonate resin and conducting injection molding. It is preferable to set the use amount of the emulsifier or coagulant which contains the ion with respect to 100 parts by mass of the rubber-like graft polymer to 1.0 part by mass or less, it is more preferable to set the use amount to 0.5 part by mass or less, and it is even more preferable not to use the emulsifier or coagulant which contains the ion in order to set the amount of the chlorine ion ($Cl^-$) to 150 ppm or less.

(Antioxidant)

It is possible to add one kind or two or more kinds of commonly known antioxidants to the rubber-like graft polymer of the invention for the purpose of preventing oxidation. The method for adding the antioxidant to the rubber-like graft polymer is not particularly limited, but examples thereof may include a method in which the antioxidant is added in the form of a powder or a tablet having a particle size of few hundred μm or in a state (dispersion) of being dispersed in water, and the like. In the invention, a method in which an antioxidant is added to the latex containing a rubber-like graft polymer as a dispersion is even more preferable. The antioxidant can be added more uniformly and near the rubber-like graft polymer by adding the antioxidant as a dispersion, and thus the oxidative deterioration of the rubber part such as the butadiene rubber is suppressed and excellent resistance to thermal coloration is obtained.

In the case of using an antioxidant, the amount thereof is usually 0.0001 part by mass or more and 10 parts by mass or less with respect to 100 parts by mass of the rubber-like graft polymer of the invention, and the lower limit amount thereof is preferably 0.001 part by mass or more and more preferably 0.01 part by mass or more. The upper limit amount thereof is preferably 6 parts by mass or less and more preferably 3 parts by mass or less. There is a tendency that the effect of suppressing coloration at the time of molding is favorable when the content of the antioxidant is equal to or more than the lower limit value. It is possible to obtain a product which has a favorable surface appearance as the attachment of substances onto the mold at the time of injection molding is suppressed when the content of the antioxidant is equal to or less than the upper limit value.

The antioxidant is preferably at least one kind selected from the group consisting of a phenolic antioxidant, a thioether-based antioxidant, and a phosphate-based antioxidant and even more preferably a phenolic antioxidant and/or a thioether-based antioxidant.

Examples of the phenolic antioxidant may include the following ones. Pentaerythritol tetrakis(3-mercaptopropionate), pentaerythritol tetrakis(3-laurylthiopropionate), glycerol-3-stearylthiopropionate, triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-tert-hhydroxybenzyl)benzene, N,N-hexamethylene bis(3,5-di-tert-butyl-4-hydroxyhydrocinnamicamide), diethyl 3,5-di-tert-butyl-4-hydroxybenzylphosphonate, tris(3,5 -di-tert-butyl-4-hydroxybenzyl)isocyanurate, tetrakis(2,4-di-tert-butylphenyl) 4,4'-biphenylenephosphinate, 3,9-bis {1,1-dimethyl-2-[β-(3-tert-butyl-4-hydroxy-5-methylphenyl)propionyloxy]ethyl}-2,4,8,10-tetraoxaspiro(5,5)undecane, and the like.

Among these compounds, an aromatic monohydroxy compound substituted with one or more alkyl groups having 5 or more carbon atoms is preferable, and specific examples thereof may include the following ones. Octadecyl-3-(3,5-di-tert-butyl-4-hydroxyphenyl)propionate, pentaerythritol tetrakis{3-(3,5-di-tert-butyl-4-hydroxyphenyl)propionate}, 1,6-hexanediol-bis[3-(3,5-di-tert-butyl-4-hydroxyphenyl)propionate], 1,3,5-trimethyl-2,4,6-tris(3,5-di-tert-butyl-4-hydroxybenzyl)benzene, and the like. Among the above ones, pentaerythritol tetrakis{3-(3,5-di-tert-butyl-4-hydroxyphenyl)propionate} is particularly preferable.

Examples of the thioether-based antioxidant may include the following ones. Dilauryl 3,3'-thiodipropionate, ditridecyl 3,3'-thiodipropionate, dimyristyl 3,3'-thiodipropionate, distearyl 3,3'-thiodipropionate, laurylstearyl 3,3'-thiodipropionate, pentaerythritol tetrakis(3-laurylthiopropionate), bis[2-methyl-4-(3-laurylthiopropionyloxy)-5-tert-butylphenyl] sulfide, octadecyl disulfide, mercaptobenzimidazole, 2-mercapto-6-methylbenzimidazole, 1,1'-thiobis(2-naphthol)(bis[3-(dodecylthio)propionic acid] 2,2-bis[[3-(dodecylthio)-1-oxopropyloxy]methyl]-1,3-propanediyl), and the like. Among the above ones, (bis[3-(dodecylthio)propionate]-2,2-bis[[3-(dodecylthio)-1-oxopropyloxy]methyl]-1,3-propanediyl) is preferable.

As the thioether-based antioxidant, those which have a molecular weight of 700 or more are preferable. It is less volatile when the molecular weight is 700 or more, and thus excellent resistance to thermal coloration is exhibited at the time of molding the polycarbonate resin composition at high temperature.

Examples of the phosphate-based antioxidant may include the following ones. Triphenyl phosphite, trisnonylphenyl phosphite, tris(2,4-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl)pentaerythritol diphosphite, 2,2-methylenebis(4,6-di-tert-butylphenyl)octyl phosphite, bis(nonylphenyl)pentaerythritol diphosphite, bis(2,4-di-tert-butylphenyl)pentaerythritol diphosphite, distearylpentaerythritol diphosphite, and the like.

Among these, trisnonylphenyl phosphite, triphenyl phosphite, tris(2,4-di-tert-butylphenyl) phosphite, bis(2,4-di-tert-butylphenyl)pentaerythritol diphosphite, and bis(2,6-di-tert-butyl-4-methylphenyl)pentaerythritol diphosphite are preferable and tris(2,4-di-tert-butylphenyl) phosphite is even more preferable.

[Polycarbonate resin composition]

The polycarbonate resin composition of the invention is a resin composition that contains a polycarbonate resin and the rubber-like graft polymer (namely, the rubber polymer (A)) of the invention. It is preferable that this polycarbonate resin is a polycarbonate resin that contains a structural unit derived from a dihydroxy compound having a moiety represented by Formula (1) above at a part of the structure.

In addition, the polycarbonate resin composition of the invention is a polycarbonate resin composition that contains a polycarbonate resin (namely, the PC resin (B)) containing a structural unit derived from a dihydroxy compound having a moiety represented by Formula (1) above at a part of the structure and the rubber-like graft polymer of the invention, and it is preferable that a difference in refractive index between the rubber-like graft polymer and the polycarbonate resin is 0.005 or less and the rubber-like graft polymer is a polymer (namely, the rubber polymer (A')) having a butadiene structural unit and an alkyl acrylate structural unit.

The polycarbonate resin of the invention which has a glass transition temperature of lower than 145°C is a resin that is hardly colored and balanced in heat resistance and impact resistance, but there is a case in which the impact resistance of the polycarbonate resin is required to be further improved in practical use. Hence, the drawback described above is improved and an improvement in the YI value, the total light transmittance, the haze, and the like are achieved by containing the rubber-like graft polymer of the invention together with the polycarbonate resin containing the structural unit (1) in the polycarbonate resin composition of the invention. Furthermore, it is possible to achieve a high reduced viscosity while maintaining a low melt viscosity when the glass transition temperature of the polycarbonate resin is set to be lower than 145°C. In addition, it is possible to synergistically improve the impact resistance as compared to the case of a polycarbonate resin having a glass transition temperature of 145°C or higher by combining the polycarbonate resin and the rubber-like graft polymer of the invention. Moreover, the compatibility of moldability and impact resistance is facilitated in the polycarbonate resin composition of the invention by increasing the reduced viscosity while suppressing the melt viscosity. The transparency of the polycarbonate resin composition of the invention is not significantly impaired although the rubber-like graft polymer is contained therein.

<Refractive index>

In the polycarbonate resin composition of the invention, it is preferable that a difference between the refractive index of the rubber polymer (A') and the refractive index of the PC resin (B) is 0.005 or less. The polycarbonate resin composition to be obtained exhibits excellent transparency when this difference in refractive index is 0.005 or less. This difference in refractive index is preferably 0.003 or less and more preferably 0.001 or less in consideration of the applicability to a transparent member or the sharpness at the time of coloring a clear pale color. The lower limit value of the difference in refractive index is not particularly limited, but it is preferably 0 or more for the same reason. It is preferable that the refractive index of the rubber polymer (A) is from 1.49 to 1.52 since the refractive index of the PC resin (B) having the structural unit (1) is usually from 1.49 to 1.52. Incidentally, the method for measuring the refractive index of the polycarbonate resin and rubber-like graft polymer will be described later.

It is preferable to set the refractive index of the polymer constituting the rubber part and the refractive index of the polymer constituting the graft part to from 1.49 to 1.52, respectively, in order to set the refractive index of the rubber-like graft polymer to from 1.49 to 1.52. Examples of the method for setting the refractive index of the polymer constituting the rubber part of the rubber-like graft polymer to from 1.49 to 1.52 may include a method to adjust the proportion of the butadiene monomer to the alkyl acrylate monomer used upon the production of the rubber latex described above. In other words, the refractive index of polybutadiene is approximately 1.52 and the refractive index of the polyalkyl acrylate is approximately 1.49, and thus the refractive index of the polymer constituting the rubber part approaches to 1.52 when a greater amount of the butadiene monomer is used and the refractive index of the polymer constituting the rubber part approaches to 1.49 when a greater amount of the alkyl acrylate monomer is used.

<Composition ratio of resin>

In the polycarbonate resin composition of the invention, it is preferable that the amount of rubber-like graft polymer of the invention blended with respect to 100 parts by mass of the polycarbonate resin is 0.1 part by mass or more and 30 parts by mass or less. The amount of the rubber-like graft polymer blended is more preferably 0.5 part by mass or more and even more preferably 1 part by mass or more. The amount of the rubber-like graft polymer blended is more preferably 20 parts by mass or less, even more preferably 15 parts by mass or less, even more preferably 12.5 parts by mass or less, and even more preferably 10 parts by mass or less.

It is concerned that a sufficient effect of modifying the impact strength is not obtained and the molded member is fractured in a case in which the amount of the rubber-like graft polymer of the invention blended is less than the range described above. On the other hand, it is concerned that favorable moldability is impaired and thus resin burning occurs at the time of molding or color developing property is impaired when the amount is more than the range described above.

[Method for producing polycarbonate resin composition]

The polycarbonate resin composition of the invention can be produced by mixing a polycarbonate resin and the rubber-like graft polymer of the invention. Specifically, the polycarbonate resin composition of the invention can be obtained, for example, by mixing a pellet-shaped polycarbonate resin and the rubber-like graft polymer of the invention using an extruder, and extruding the mixture thus obtained into a strand shape, and cutting it into a pellet shape using a rotary cutter or the like.

<Additive>

It is possible to appropriately add the additives such as an antioxidant and a mold releasing agent to be described below at the time of mixing a polycarbonate resin and the rubber-like graft polymer of the invention if necessary.

(Antioxidant)

It is possible to blend one kind or two or more kinds of a commonly known antioxidants to the polycarbonate resin composition of the invention when mixing a polycarbonate resin and the rubber-like graft polymer of the invention for the purpose of preventing oxidation. The amount of the antioxidant used is usually 0.0001 part by mass or more and 1 part by mass or less, preferably 0.001 part by mass or more, and more preferably 0.01 part by mass or more and usually 1 part by mass or less, preferably 0.5 parts by mass or less, and more preferably 0.3 part by mass or less with respect to 100 parts by mass of the polycarbonate resin. The effect of suppressing coloration at the time of molding tends to be favorable when the content of the antioxidant is equal to or more than the lower limit, but it is concerned that the substances attached onto the mold increase at the time of injection molding or the substances attached onto the roll increase when forming a film by extrusion molding and thus the surface appearance of the product is impaired when the content of the antioxidant is more than the upper limit.

The antioxidant is preferably at least one kind selected from the group consisting of a phenolic antioxidant, a phosphate-based antioxidant, and a sulfur-based antioxidant and more preferably a phenolic antioxidant and/or a phosphate-based antioxidant.

Examples of the phenolic antioxidant and the phosphate-based antioxidant may include the same ones as those described in the section of the rubber-like graft polymer, and the preferred antioxidant also include the same ones.

Examples of the sulfur-based antioxidant may include the following ones. Dilauryl 3,3'-thiodipropionate, ditridecyl 3,3'-thiodipropionate, dimyristyl 3,3'-thiodipropionate, distearyl 3,3'-thiodipropionate, laurylstearyl 3,3'-thiodipropionate, pentaerythritol tetrakis(3-laurylthiopropionate), bis[2-methyl-4-(3-laurylthiopropionyloxy)-5-tert-butylphenyl] sulfide, octadecyl disulfide, mercaptobenzimidazole, 2-mercapto-6-methylbenzimidazole, 1,1'-thiobis(2-naphthol), and the like. Among the above ones, pentaerythritol tetrakis(3-laurylthiopropionate) is preferable.

(Mold releasing agent)

In the polycarbonate resin composition of the invention, a mold releasing agent may be blended in a range in which the object of the invention is not impaired in order to further improve the separation of roll from the cooling roll at the time of sheet molding or the releasability from the mold at the time of injection molding. Examples of such a mold releasing agent may include the following ones. A higher fatty acid ester of a monohydric or polyhydric alcohol, a higher fatty acid, paraffin wax, beeswax, olefin-based wax, olefin-based wax containing a carboxyl group and/or a carboxylic acid anhydride group, silicone oil, organopolysiloxane, and the like. One kind of the mold releasing agent can be used singly or two or more kinds thereof can be used in combination.

As the higher fatty acid ester, a partial ester or complete ester of a monohydric or polyhydric alcohol having from 1 to 20 carbon atoms and a saturated fatty acid having from 10 to 30 carbon atoms is preferable. Examples of such a partial ester or complete ester of a monohydric or polyhydric alcohol and a saturated fatty acid may include the following ones. Monoglyceride stearate, diglyceride stearate, triglyceride stearate, monosorbitate stearate, stearyl stearate, monoglyceride behenate, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate sorbitan monostearate, 2-ethylhexyl stearate, and the like. Among them, monoglyceride stearate, triglyceride stearate, pentaerythritol tetrastearate, and behenyl behenate are preferably used. An ester of stearic acid is more preferable as the mold releasing agent from the viewpoint of mold releasability and transparency.

As the ester of stearic acid, a partial ester or complete ester of a substituted or unsubstituted monohydric or polyhydric alcohol having from 1 to 20 carbon atoms and stearic acid is preferable. More preferred examples of such a partial or complete ester of a monohydric or polyhydric alcohol and stearic acid may include the following ones. Ethylene glycol distearate, monoglyceride stearate, diglyceride stearate, triglyceride stearate, monosorbitate stearate, stearyl stearate, pentaerythritol monostearate, pentaerythritol tetrastearate, propylene glycol monostearate, stearyl stearate, butyl stearate, sorbitan monostearate, 2-ethylhexyl stearate, and the like. Among them, monoglyceride stearate, triglyceride stearate, pentaerythritol tetrastearate, and stearyl stearate are even more preferable and ethylene glycol distearate and monoglyceride stearate are particularly preferable.

As the higher fatty acid, a substituted or unsubstituted saturated fatty acid having from 10 to 30 carbon atoms is preferable. Among them, an unsubstituted saturated fatty acid having from 10 to 30 carbon atoms is more preferable, and examples of such a higher fatty acid may include myristic acid, lauric acid, palmitic acid, stearic acid, and behenic acid. Among them, a saturated fatty acid having from 16 to 18 carbon atoms is even more preferable, and examples of such a saturated fatty acid may include palmitic acid and stearic acid, and stearic acid is particularly preferable.

In the case of using a mold releasing agent, the blended amount thereof is usually 0.001 part by mass or more, preferably 0.01 part by mass or more, more preferably 0.1 part by mass or more and usually 2 parts by mass or less, preferably 1 part by mass or less, more preferably 0.5 part by mass or less with respect to 100 parts by mass of the polycarbonate resin. There is a case in which the substances attached onto the mold increases at the time of molding, there is a possibility that labor is required for the maintenance of the mold in the case of carrying out molding in large quantities, and there is also a possibility that an appearance defect of the molded article to be obtained is caused when the content of the mold releasing agent is excessively high. There is an advantage that the molded article is easily released from the mold and the molded article is easily acquired at the time of molding when the content of the mold releasing agent in the polycarbonate resin composition is equal to or more than the above lower limit.

(Ultraviolet absorber and light stabilizer)

The discoloration of the polycarbonate resin composition of the invention by ultraviolet light is significantly small as compared to a polycarbonate resin composition of the prior art, but one kind or two or more kinds of ultraviolet absorbers and light stabilizers may be blended into the polycarbonate resin composition in a range in which the object of the invention is not impaired for the purpose of further improvement. Here, the ultraviolet absorber is not particularly limited as long as it is a compound having ultraviolet absorbing ability. Examples of the compound having ultraviolet absorbing ability may include an organic compound and an inorganic compound. Among them, an organic compound is preferable since the affinity thereof for the polycarbonate resin is easily secured and it is likely to be uniformly dispersed.

The molecular weight of the organic compound having ultraviolet absorbing ability is not particularly limited,

but it is usually 200 or more and preferably 250 or more. In addition, the molecular weight is usually 600 or less, preferably 450 or less, and more preferably 400 or less. There is a possibility that a decrease in ultraviolet resistant performance is caused in a long-term use when the molecular weight is excessively small. There is a possibility that a decrease in transparency of the resin composition is caused in a long-term use when the molecular weight is excessively great.

Preferred examples of the ultraviolet absorber may include a benzotriazole-based compound, a benzophenone-based compound, a triazine-based compound, a benzoate-based compound, a salicylic acid phenyl ester-based compound, a cyanoacrylate-based compound, an ester of malonic acid-based compound, and an anilide oxalate-based compound. Among them, a benzotriazole-based compound, a hydroxybenzophenone-based compound, and an ester of malonic acid-based compound are preferably used. These may be used singly or two or more kinds thereof may be used concurrently.

More specific examples of the benzotriazole-based compound may include the following ones. 2-(2'-hydroxy-3'-methyl-5'-hexylphenyl)benzotriazole, 2-(2'-hydroxy-3'-t-butyl-5'-hexylphenyl)benzotriazole, 2-(2'-hydroxy-3',5'-di-t-butylphenyl)benzotriazole, 2-(2'-hydroxy-3'-methyl-5'-t-octylphenyl)benzotriazole, 2-(2'-hydroxy-5'-t-dodecylphenyl)benzotriazole, 2-(2'-hydroxy-3'-methyl-5'-t-dodecylphenyl)benzotriazole, 2-(2'-hydroxy-5'-t-butylphenyl)benzotriazole, methyl-3 - (3-(2H-benzotriazol-2-yl)-5-t-butyl-4-hydroxyphenyl) propionate, and the like.

Examples of the benzophenone-based compound may include a hydroxybenzophenone-based compound such as 2,2'-dihydroxybenzophenone, 2,2',4,4'-tetrahydroxybenzophenone, or 2-hydroxy-4-octoxybenzophenone.

Examples of the ester of malonic acid-based compound may include an ester of 2-(1-arylalkylidene)malonic acid and tetraethyl 2,2'-(1,4-phenylene-dimethylidene)bismalonate.

Examples of the triazine-based compound may include the following ones. 2-[4-[(2-hydroxy-3-dodecyloxypropyl)oxy]-2-hydroxyphenyl]-4,6-bis(2,4-dimethylphenyl)-1,3,5-triazine, 2,4-bis(2,4-dimethylphenyl)-6-(2-hydroxy-4-isooctyloxyphenyl)-s-triazine, 2-(4,6-diphenyl-1,3,5-triazin-2-yl)-5-[(hexyl)oxy]-phenol (Tinuvin1577FF manufactured by Ciba-Geigy), and the like.

Examples of the cyanoacrylate-based compound may include ethyl 2-cyano-3,3-diphenyl acrylate and 2'-ethylhexyl 2-cyano-3,3-diphenylacrylate.

Examples of the anilide oxalate-based compound may include 2-ethyl-2'-ethoxy-oxalanilide (SanduvorVSU manufactured by Clariant).

The content of such an ultraviolet absorber and light stabilizer can be appropriately selected depending on the kind of the ultraviolet absorber and light stabilizer, but it is preferable to contain the ultraviolet absorber and light stabilizer at from 0.001 to 5% by mass in 100% by mass of the polycarbonate resin composition, and the added amount thereof with respect to 100 parts by mass of the polycarbonate resin is preferably from 0.01 to 2 parts by mass.

(Bluing agent)

In the polycarbonate resin composition of the invention, one kind or two or more kinds of bluing agents may be blended in order to cancel the yellow tint. As the bluing agent, those which are used in a polycarbonate resin of the prior art can be used particularly without any trouble. In general, an anthraquinone-based dye is easily available and thus preferable.

Specific examples of the bluing agent may include the following ones. The generic name of Solvent Violet 13 [CA. No. (Color Index No.) 60725], the generic name of Solvent Violet 31 [CA. No. 68210], the generic name of Solvent Violet 33 [CA. No. 60725], the generic name of Solvent Blue 94 [CA. No. 61500], the general name of Solvent Violet 36 [CA. No. 68210], the generic name of Solvent Blue 97 ["macro Rex Violet RR" manufacture by Bayer AG], the generic name of Solvent Blue 45 [CA. No. 61110], and the like.

The content of these bluing agents in the polycarbonate resin composition of the invention is usually preferably from $0.1 \times 10^{-4}$ to $2 \times 10^{-4}$ part by mass with respect to 100 parts by mass of the polycarbonate resin.

(Other additives)

The polycarbonate resin composition of the invention can contain known various additives, for example, a flame retardant, a flame retardant auxiliary, a hydrolysis inhibitor, an antistatic agent, a foaming agent, and a dye and a pigment in addition to the above additives in a range in which the object of the invention is not impaired. In addition, the polycarbonate resin composition of the invention may be a resin composition in which, for example, a synthetic resin such as an aromatic polycarbonate resin, aromatic polyester, a polyamide, polystyrene, a polyolefin, an acrylic resin, or an amorphous polyolefin and a biodegradable resin such as polylactic acid or polybutylene succinate are mixed.

<Blending method>

As the method for blending various kinds of additives as described above into the polycarbonate resin composition of the invention, any method may be used as long as it is a commonly used blending method. Examples thereof may include a method to mix and knead the additives using a tumbler, a V-type blender, a super mixer, the Nauta mixer, the Banbury mixer, a kneading roll, an extruder, or the like or a solution blending method to mix the additives, for example, in a state of being dissolved in a common good solvent such as methylene chloride, but the method is not particularly limited.

The polycarbonate resin composition of the invention thus obtained is once formed into a pellet shape directly or using a melt extruder after to which various additives are added and then can be molded into a desired shape by a commonly known molding method such as extrusion molding, injection molding, or compression molding.

[Physical properties of polycarbonate resin composition]

Hereinafter, the preferred physical properties of the polycarbonate resin composition of the invention will be described.

<YI value>

In the polycarbonate resin composition of the invention, the YI value of a 3 mm thick molded article obtained by melt molding at 240°C measured in conformity with JIS K7105 is preferably 30 or less and more preferably 10 or less in consideration of the brightness at the time of coloring a clear pale color. The lower limit value of this YI value is preferably -5 or more and more preferably 0 or more for the same reason. This YI value can be controlled by the kind and added amount of the polymerization catalyst or the kind and added amount of the catalyst deactivator. Incidentally, the YI value is measured by the method described in the section of Examples to be more specifically described later.

<Total light transmittance>

It is concerned that it is difficult to suitably use the polycarbonate resin composition of the invention in the building material field, the electric and electronic field, the motor vehicle field, the optical part field, and the like in a case in which the total light transmittance thereof is less than 60%. The total light transmittance of the polycarbonate resin composition of the invention is preferably 70% or more and more preferably 80% or more. In addition, the upper limit of the total light transmittance is 94% from the viewpoint of difficulty in achievement. The total light transmittance of the polycarbonate resin composition of the invention can be controlled by adjusting the kind and molar ratio of the dihydroxy compound used in the production of the polycarbonate resin of the invention, the kind and content of the rubber-like graft polymer of the invention, and the like. Incidentally, the method for measuring the total light transmittance will be described later.

<Charpy notched impact strength>

The Charpy notched impact strength of the polycarbonate resin composition of the invention is preferably 15 $kJ/m^2$ or more, more preferably 20 $kJ/m^2$ or more, even more preferably 25 $kJ/m^2$ or more, even more preferably 40 $kJ/m^2$ or more, and particularly preferably 49 $kJ/m^2$ or more. In addition, the upper limit of the Charpy notched impact strength of the polycarbonate resin composition of the invention is 200 $kJ/m^2$ from the viewpoint of difficulty in achievement. The Charpy notched impact strength can be controlled by adjusting the molecular weight (reduced viscosity) of the polycarbonate resin, the kind and molar ratio of the dihydroxy compound used in the production of the polycarbonate resin, the kind and content of the rubber-like graft polymer of the invention, and the like. The method for measuring the Charpy notched impact strength will be described later.

<Melt viscosity>

The melt viscosity of the polycarbonate resin composition of the invention is preferably 100 Pa·s or more. It is concerned that the mechanical strength of the polycarbonate resin composition is insufficient and thus the molded article is broken when being taken out from the mold after molding such as injection molding or the molded article cracks at the time of use in a case in which the melt viscosity is excessively lower than the above lower limit. The melt viscosity of the polycarbonate resin composition of the invention is more preferably 200 Pa·s or more and even more preferably 500 Pa·s or more. In addition, the melt viscosity of the polycarbonate resin composition of the invention is preferably 800 Pa·s or less. It is concerned that it is difficult to industrially produce a molded article having a high strength in a case in which the melt viscosity is excessively higher than the above upper limit. In addition, in this case, it is concerned that coloration, a decrease in molecular weight, the generation of decomposition gas, and the like are likely to be caused by worsening (deterioration) in fluidity or an increase in molding temperature. The melt viscosity of the polycarbonate resin

composition of the invention is more preferably 700 Pa·s or less and even more preferably 640 Pa·s or less.

The melt viscosity of the polycarbonate resin composition of the invention can be controlled by adjusting the temperature, pressure, and polymerization time of the polymerization reaction. The "melt viscosity" of the polycarbonate resin composition is measured using a capillograph and measured at a temperature of 240°C and a shear rate of 912 $sec^{-1}$.

[Polycarbonate resin molded article]

It is possible to obtain the polycarbonate resin molded article of the invention by molding the polycarbonate resin composition of the invention. Preferably, the polycarbonate resin molded article of the invention is one that is molded by an injection molding method. In this case, it is possible to fabricate the polycarbonate resin molded article of the invention having a complicated shape. Moreover, the stress concentration zone is likely to be formed in the molded article when a molded article is molded into a complicated shape, but the effect of improving the impact strength is obtained in the polycarbonate resin composition of the invention as described above and thus the fracture of the molded article due to stress concentration can be suppressed.

The polycarbonate resin molded article of the invention may also be one obtained by molding the polycarbonate resin composition of the invention into a film or sheet by an extrusion molding method and the like. In addition, the polycarbonate resin molded article of the invention may be a plate which is molded by an injection molding method, an extrusion molding method, or the like.

EXAMPLES

Hereinafter, the invention will be described in more detailed with reference to Examples. Examples 1 to 5 are an example related to the first invention group (the invention group using the rubber polymer (A)), Examples 11 to 14 and 21 to 25 are an example related to the second invention group (the invention group using the PC Resin (B) and the rubber polymer (A')). First, the evaluating method will be described. The evaluations (1) to (9) are a method for evaluating the first invention group, and the evaluations (10) to (18) are a method for evaluating the second invention group.

[Method for evaluating first invention group]

(1) Amount of sulfate ion and sulfite ion contained in rubber-like graft polymer

Into a pressure proof glass vessel, 20.0 g of the rubber-like graft polymer is weighed and introduced, 200 ml of deionized water is added to this, and an extraction treatment by hot water is conducted for 20 hours at 95°C in a gear oven. This liquid is cooled to room temperature and filtered through a cellulose mixed ester membrane filter having a sieve opening of 0.2 μm, and the filtrate is used as the sample liquid.

The amounts of the sulfate ion ($SO_4^{2-}$) and the sulfite ion ($SO_3^{2-}$) in the sample liquid are measured using an ion chromatograph (trade name; Model IC-20 and separation column: IonPac AS12A manufactured by Nippon Dionex K.K.), respectively. The calibration curve is created at one point of 20 ppm for each of $SO_4^{2-}$ and $SO_3^{2-}$ using a standard solution of sodium sulfate (manufactured by Kishida Chemical Co., Ltd., sulfate ion standard solution ($SO_4^{2-}$) for ion chromatography: 1000 mg/L) and a standard solution of sodium sulfite (manufactured by Kishida Chemical Co., Ltd., sulfite ion standard solution ($SO_3^{2-}$) for ion chromatography: 1000 mg/L), respectively. The total amount (g/g) of the sulfate ion amount and the sulfite ion amount contained in the rubber-like graft polymer is calculated from the concentrations determined by ion chromatography.

(2) Amount of chlorine ion in rubber-like graft polymer powder

In a sample combustion device (trade name; QF-02 manufactured by Mitsubishi Chemical Corporation), 0.05 g of the rubber-like graft polymer is completely burned, the gas thus generated is absorbed by 20 ml of 0.3% hydrogen peroxide, and this is used as the sample liquid. The amount of chlorine ion ($Cl^-$) in the sample liquid is measured using an ion chromatograph (trade name; Model IC-20 and separation column: IonPac AS12A manufactured by Nippon Dionex K.K.). The calibration curve is created at one point of 20 ppm for $Cl^-$ using the chloride ion standard solution ($Cl^-$) for ion chromatography: 1000 mg/L manufactured by Kishida Chemical Co., Ltd. The content (g/g) of the chlorine contained in the rubber-like graft polymer is calculated from the concentration determined by ion chromatography.

(3) Resistance to metal corrosion

Into a heat resistant glass vessel, 10 g of the powder of the rubber-like graft polymer is weighed and introduced, 10 g of deionized water is added thereto, a clip made of alloy tool steel is put therein. The corroded state of the clip

made of alloy tool steel is visually confirmed after holding for 10 days at room temperature (23°C).

a: it is not corroded
c: it is corroded (it is rusted)

(4) Method for fabricating pellet and test piece

The "pellet" is obtained by blending 3 parts by mass of the rubber-like graft polymer and 97 parts by mass of an aromatic polycarbonate resin (Iupilon S-2000F manufactured by Mitsubishi Engineering-Plastics Corporation) having a viscosity average molecular weight of 24,000 and kneading the mixture thus obtained using a devolatilization type extruder (PCM-30 manufactured by Ikegai Corp.) heated to have a barrel temperature of 280°C under a condition of a screw rotation speed of 150 rpm. This pellet is dried for 6 hours at 80°C using a hot air dryer and then molded using a 100 t injection molding machine (SE-100DU manufactured by Sumitomo Heavy Industries, Ltd.) under a condition of a cylinder temperature of 280°C and a mold temperature of 90°C to obtain the "test piece 1" having a plate shape (length: 100 mm, width: 50 mm, thickness: 2 mm) and the "test piece 2" having a plate shape (length: 80 mm, width: 8 mm, thickness: 4 mm).

(5) ΔYI value (resistance to thermal coloration)

The YI value of the "test piece 1" is measured in conformity with JIS K7105 by a reflected light measuring method using a spectral color difference meter (model name "SE2000" manufactured by NIPPON DENSHOKU INDUSTRIES Co., LTD.) under a condition of a C light source and a 2 degree field of view. First, the YI value ($YI_B$) of the test piece before being heat aged is measured. Subsequently, the YI value ($YI_A$) of the test piece after being heat aged for 12 hours at a temperature of 140°C using a high temperature oven (model name "PMS-B" manufactured by ESPEC CORP.) is measured. The ΔYI value is calculated by the following Equation.

$$\Delta YI = YI_A - YI_B.$$

Incidentally, it is acceptable when ΔYI is 36 or less.

(6) ΔMFR value (resistance to moist heat)

The melt mass flow rate (MFR) value of the "pellet" is measured at a cylinder temperature of 300°C and a load of 1.2 kg in conformity with ISO1133 using a melt indexer (model name "S-111" manufactured by TOYO SEIKI SEISAKUSHO LTD.). First, the MFR value ($MFR_B$) of a pellet before being heat aged is measured. Subsequently, the MFR value ($MFR_A$) of another pellet after being heat aged for 60 hours under a condition of a temperature of 120°C and a relative humidity of 100% using a pressure cooker (model name "unsaturated type highly accelerated life test equipment PC-422R" manufactured by HIRAYAMA MANUFACTURING CORPORATION). The ΔMFR value is calculated by the following Equation.

$$\Delta MFR = MFR_A - MFR_B$$

Incidentally, it is acceptable when ΔMFR is 3 or less.

(7) Charpy notched impact strength

It is measured in conformity with JIS K7111 using the "test piece 2" at a measurement temperature of -30°C and 23°C.

(8) Volume average particle size of rubber particles in rubber latex

The rubber latex is diluted with deionized water, and the volume average particle size of the rubber particles is measured using a laser diffraction and scattering particle size distribution analyzer (SALD-7100 manufactured by Shimadzu Corporation). The volume average particle size is calculated by adopting 1.50 as the refractive index of the rubber particles.

(9) Volume average particle size of rubber-like graft polymer

The rubber-like graft polymer latex is diluted with deionized water, and the volume average particle size of the rubber-like graft polymer is measured using a laser diffraction and scattering particle size distribution analyzer (SALD-7100 manufactured by Shimadzu Corporation). The volume average particle size is calculated by adopting 1.50 as the refractive index of the rubber-like graft polymer.

[Method for evaluating second invention group]

(10) Refractive index of polycarbonate resin

A polycarbonate resin is pressed using a press molding machine (manufactured by Shoji Tekko Co., Ltd.) heated to have a heater temperature of 300°C under a condition of 10 MPa to obtain the "press sheet 3" of polycarbonate resin having a thickness of 0.5 mm. The refractive index, nD, of the press sheet 3 is measured using the Abbe refractometer ("DR-M4" manufacture by ATAGO CO., LTD.) and an interference filter at 589 nm (D line).

(11) Glass transition temperature of polycarbonate resin

The glass transition temperature of the polycarbonate resin is measured using a differential scanning calorimeter (DSC6220 manufactured by Hitachi High-Tech Science Corporation). About 10 mg of the resin sample is put and sealed in the aluminum pan manufactured by the same company, and the temperature thereof is raised from room temperature to 250°C at a rate of temperature rise of 20°C/min under a nitrogen gas stream at 50 mL/min. This temperature is maintained for 3 minutes, and it is then cooled to 30°C at a rate of 20°C/min. It is maintained for 3 minutes at 30°C, the temperature is raised again to 200°C at a rate of 20°C/min. The value of the peak top of DSC of the measurement data obtained in the second temperature rise is adopted as Tg.

(12) Method for fabricating test piece

The pallet is obtained by blending 5 parts by mass or 10 parts by mass of the rubber-like graft polymer with respect to 100 parts by mass of a polycarbonate resin and kneading the mixture thus obtained using a devolatilization type extruder (PCM-30 manufactured by Ikegai Corp.) heated to have a barrel temperature of 240°C under a condition of a screw rotation speed of 150 rpm. This pellet of the polycarbonate resin composition is dried for 6 hours at 80°C using a hot air dryer. Next, the pellet of the polycarbonate resin composition thus dried is supplied to an injection molding machine (Model J75EII manufactured by The Japan Steel Works, Ltd.), and the "injection molding plate 4" (length: 60 mm × width: 60 mm × thickness: 3 mm), the "injection molded sheet 5" (length: 100 mm × width: 100 mm × thickness: 2 mm), and the ISO "test piece 6" for mechanical properties are molded under the condition of a resin temperature of 240°C, a mold temperature of 60°C, and a molding cycle of 40 seconds.

(13) Total light transmittance and haze

The total light transmittance and haze value of the "Injection molded plate 4" is measured in conformity with JIS K7105 (year of 1981) using a haze meter (NDH2000 manufactured NIPPON DENSHOKU INDUSTRIES Co., LTD.) and a D65 light source. Incidentally, it is acceptable when the total light transmittance is 85% or more, and it is acceptable when the haze value is 20% or less.

(14) Hue

The yellow index (YI) value of the "Injection molded plate 4" is measured in conformity with JIS K7105 (year of 1981) by a C light source transmission method using a spectral color difference meter (model name "SE2000" manufactured by NIPPON DENSHOKU INDUSTRIES Co., LTD.). It indicates that the quality is superior without yellow tint as the YI value is smaller, and it is acceptable when the YI value is 10 or less.

(15) Surface impact brittle fracture rate

The impact energy of the "injection molded sheet 5" is measured in conformity with ISO 6603-2 using a high speed puncture impact testing machine (HYDRO-SHOT HITS-P10 manufactured by Shimadzu Corporation) and the fracture morphology thereof is observed. Incidentally, the test speed is 4.4 m/s, and a testing machine having a punching striker diameter of 20 mm, a hemispherical tip shape, a load cell capacity of 10 kN, a hole diameter of the pressing jig

of 40 mm is used.

The injection molded sheet is left for 1 hour or longer under each environment of 23°C to measure the brittle fracture rate. The number of test is five times, it is regarded that it is fractured when one sheet is fractured into multiple pieces, and the surface impact brittle fracture rate (%) is determined by dividing the number of the sheet fractured by the number of test. It indicates that it is more hardly fractured as this value lower, and 0% indicates that even one sheet is not fractured during the test.

(16) Charpy notched impact strength

The "test piece 6" is subjected to the Charpy notched impact test in conformity with ISO179 (year of 2000). Incidentally, it is acceptable when the Charpy notched impact strength is 20 $kJ/m^2$ or more.

(17) Refractive index of rubber-like graft polymer

The rubber-like graft polymer is pressed by a press molding machine (manufactured by Shoji Tekko Co., Ltd.) heated to have a heater temperature of 180°C under a condition of 10 MPa to obtain the "press sheet 7" of rubber-like graft polymer having a thickness of 0.5 mm. The refractive index, nD, of this press sheet 7 is measured using the Abbe refractometer ("DR-M4" manufacture by ATAGO CO., LTD.) and an interference filter at 589 nm (D line).

(18) Volume average particle size of rubber particles in rubber latex

It is measured and calculated in the same manner as in (8) above.

[Materials]

In addition, the abbreviations of the compounds used in the following Examples and Comparative Examples are as follows.

[Table 1]

Table 1

| | Abbreviations, trade names | Compound name, company name |
|---|---|---|
| Monomer | Bd | 1,3-butadiene |
| | BA | n-butyl acrylate |
| | St | Styrene |
| | MMA | Methyl methacrylate |
| Raw material of polycarbonate resin | ISB | Isosorbide (trade name: POLYSORB manufactured by Roquette Pharma) |
| | CHDM | 1,4-cyclohexanedimethanol (manufactured by Eastman Chemical Company) |
| | DPC | Diphenyl carbonate (manufactured by Mitsubishi Chemical Corporation) |
| Rubber-like graft polymer | C-223A | Butadiene-alkyl methacrylate-styrene copolymer (trade name: METABLEN C-223A manufactured by Mitsubishi Rayon Co., Ltd.) |
| | EXL-2603 | Butadiene-alkyl acrylate-alkyl methacrylate copolymer (trade name: PARALOID EXL2603 manufactured by The Dow Chemical Company) |

(continued)

| | Abbreviations, trade names | Compound name, company name |
|---|---|---|
| Antioxidant | Irg1076 | Phenolic antioxidant, n-octadecyl-3-(3',5'-di-t-butyl-4'-hydroxyphenyl) propionate (trade name: IRGANOX 1076 manufactured by BASF Japan Ltd.) |
| | Irg245 | Phenolic antioxidant, triethylene glycol-bis[3-(3-t-butyl-5-methyl-4-hydroxyphenyl) propionate] (trade name: IRGANOX 245 manufactured by BASF SE) |
| | A0-412S | Thioether-based antioxidant, bis[3-(dodecylthio)propionate]2,2-bi[[3 (dodecylthio)-1-oxopropyloxy]methyl]-1,3-propanediyl (trade name: ADK STAB AO-412S manufactured by ADEKA CORPORATION), molecular weight: 1162 |
| | DLDTP | Thioether-based antioxidant, didodecyl 3,3'-thiodipropionate (trade name: DLDTP manufactured by Bayer AG), molecular weight: 515 |
| | ADK2112 | Phosphite-based antioxidant, tris(2,4-di-tert-butyl-phenyl) phosphite (trade name: ADK STAB 2112 manufactured by ADEKA CORPORATION) |
| | Irgl010 | Phenolic antioxidant, pentaerythritol tetrakis[3-(3,5-di-tert-butyl-4-hydroxyphenyl) propionate] (trade name: IRGANOX 1010 manufactured by BASF Japan Ltd.) |
| Mold releasing agent | UNISTER E-275 | Glycol distearate (trade name: UNISTER E-275 manufactured by NOF Corporation) |

Incidentally, each of the METABLEN C-223A and the PARALOID EXL2603 was press-molded at 200°C and the refractive index thereof was measured using the an Abbe refractometer, and the refractive index of the METABLEN C-223A was 1.5210 and the refractive index of the PARALOID EXL2603 was 1.5080.

In addition, 1 to 2 g of the METABLEN C-223A was incinerated by a dry incineration method, the ash was dissolved in an aqueous solution of hydrochloric acid, the solution thus obtained was diluted with water and subjected to a measurement using an ICP emission spectrophotometer (IRIS IntrepidII XSP manufactured by Themo Fisher Scientific Inc.), and as a result, Ca of an alkaline earth metal component was not detected in the METABLEN C-223A.

In addition, 0.2 g of the PARALOID EXL2603 was subjected to the methyl esterification using a boron trifluoride methanol solution and to the measurement using a capillary gas chromatograph (6890 manufactured by Agilent Technologies, capillary column: HP-5, length 30 m × inner diameter: 0.32 mm × thickness: 0.25 μm, detector: FID), and as a result, a component derived from a fatty acid was not detected in the PARALOID EXL2603.

[Example 1]

<1. Production of rubber latex (H-1)>

Into an autoclave having a volume of 70 L, the six kinds of materials presented in the column of the component (1) in Table 2 were introduced, the temperature thereof was raised, a redox initiator composed of the four kinds of materials presented in the column of the component (2) in Table 2 was added into the autoclave at the time point at which the temperature reached 43°C, the polymerization was started, and the temperature was then further raised to 60°C. The reaction was conducted for 8 hours from the start of polymerization, thereby obtaining the butadiene-based rubber polymer latex (H-1). The volume average particle size of the butadiene-based rubber polymer in the butadiene-based rubber polymer latex (H-1) thus obtained was 90 nm.

[Table 2]

Table 2

| | Material | Parts by mass |
|---|---|---|
| Component (1) | 1,3-butadiene | 100 |
| | t-dodecyl mercaptan | 0.4 |
| | Mixed fatty acid potassium (trade name: NONSOUL TK-1 manufactured by NOF Corporation) (emulsifier) | 1.25 |
| | Potassium rosinate (trade name: DIPUROJIN K-25 manufactured by TOHO Chemical Industry Co., Ltd.) (emulsifier) | 1.25 |
| | Diisopropylbenzene peroxide | 0.24 |
| | Deionized water | 70 |
| Component (2) | Ferrous sulfate | 0.003 |
| | Dextrose | 0.3 |
| | Sodium pyrophosphate | 0.3 |
| | Deionized water | 5 |

<2. Production of acid group-containing copolymer latex (K-1) for enlargement>

Into a reaction vessel, the six kinds of materials presented in the column of the component (3) in Table 3 were introduced, the internal temperature was raised to 60°C, and a mixture composed of the three kinds of materials presented in the column of the component (4) in Table 3 was then continuously added thereto dropwise over 2 hours to conduct the polymerization. The stirring was continued for further 2 hours, thereby obtaining the acid group-containing copolymer latex (K-1) having a monomer conversion of 97% or more.

[Table 3]

Table 3

| | Material | Parts by mass |
|---|---|---|
| Component (3) | Ferrous sulfate | 0.003 |
| | Sodium ethylenediaminetetraacetate | 0.009 |
| | Sodium formaldehyde sulfoxylate | 0.3 |
| | Tallow acid potassium sah | 1.725 |
| | Sodium dialkyl sulfosuccinate | 2.5 |
| | Deionized water | 200 |
| Component (4) | Butyl acrylate | 85 |
| | Methacrylic acid | 15 |
| | Cumene hydroperoxide | 0.5 |

<3. Production of enlarged rubber latex (H-1')>

Into a glass flask, 75 parts by mass of the rubber latex (H-1) as the polymer solid content of the rubber latex (H-1) thus produced was introduced, 2 parts by mass of acid group-containing copolymer latex (K-1) as the polymer solid content was added thereto at an internal temperature of 50°C and held for 30 minutes. The volume average particle size of the rubber particles of the enlarged rubber latex (H-1') thus obtained was 200 nm.

<4. Production of rubber-like graft polymer (A-1)>

To the reaction vessel containing of the enlarged rubber latex (H-1'), the five kinds of materials presented in the column of the "initial introduction" in Table 4 were added, and the temperature thereof was raised to 65°C. Subsequently, a mixture composed of the three kinds of materials presented in the column of the "first stage grafting" in Table 4 was added thereto dropwise over 25 minutes so that the polymerization proceeded, and the resultant was then held for 40 minutes to conduct the first graft polymerization step.

Thereafter, a mixture composed of the two kinds of materials presented in the column of the "second stage grafting" in Table 4 was added thereto dropwise over 30 minutes in the presence of the polymer and then held for 1 hour to conduct the second graft polymerization step.

Thereafter, a mixture composed of the two kinds of materials presented in the column of the "third stage grafting" in Table 4 was added thereto dropwise over 10 minutes in the presence of the polymer and then held for 2 hours to conduct the third graft polymerization step, thereby obtaining a rubber-like graft polymer latex.

[Table 4]

Table 4

| | Material | Parts by mass |
|---|---|---|
| Initial introduction | Solid content of rubber latex (H-1) | 75 |
| | Solid content of acid group-containing copolymer latex (K-1) | 2 |
| | Deionized water | 40 |
| | Sodium formaldehyde sulfoxylate | 0.32 |
| | Potassium alkenylsuccinate | 0.54 |
| First stage grafting | MMA | 9 |
| | BA | 1 |
| | tert-butyl peroxide (amount to be 0.38 part with respect to 100 parts of sum of MMA and BA) | 0.04 |
| Second stage grafting | St | 12.5 |
| | tert-butyl peroxide (amount to be 0.4 part with respect to 100 parts of St) | 0.05 |
| Third stage grafting | MMA | 2.5 |
| | tert-butyl peroxide (amount to be 0.4 part with respect to 100 parts of MMA) | 0.01 |

To the rubber-like graft polymer latex thus obtained, 0.25 parts by mass of Irg1076 (n-octadecyl-3-(3',5'-di-t-butyl-4'-hydroxyphenyl) propionate) of a phenolic antioxidant and 0.75 part by mass of AO-412S (bis[3-(dodecylthio)propionic acid] 2,2-bis[[3-(dodecylthio)-1-oxopropyloxy]methyl]-1,3-propanediyl) of a thioether-based antioxidant were added. Subsequently, the resultant was added to 460 parts by mass of deionized water containing 5 parts by mass of calcium acetate to coagulate the polymer, and the coagulate thus formed was washed with water, dewatered, and dried, thereby obtaining the rubber-like graft polymer (A-1).

<5. Evaluation of rubber-like graft polymer (A-1)>

The volume average particle size of the rubber particles in the rubber latex, the volume average particle size of the rubber-like graft polymer, the amount of the sulfate ion, the amount of the sulfite ion, and the amount of chlorine ion in the rubber-like graft polymer powder, and the metal corrosivity by the rubber-like graft polymer powder were measured in accordance with the evaluating methods, respectively. In addition, the ΔYI value of the test piece 1 obtained from the rubber-like graft polymer (A-1) and an aromatic polycarbonate resin, ΔMFR of the pellet composed of the rubber-like graft polymer (A-1) and an aromatic polycarbonate resin, and the Charpy impact strength of the test piece 2 obtained from the rubber-like graft polymer (A-1) and an aromatic polycarbonate resin were measured in accordance with the evaluating methods (1) to (9), respectively. The evaluation results presented in Table 6 were obtained.

[Examples 2 to 5]

The rubber-like graft polymer (A-2) to (A-5) were obtained in the same manner as in Example 1 except that the kind and/or amount of the antioxidant was changed to the conditions presented in Table 5. In addition, the evaluation results presented in Table 6 were obtained.

[Comparative Example 1]

The rubber-like graft polymer (A"-1) was obtained in the same manner as in Example 5 except that calcium acetate of the coagulant was changed to 1.3 parts by mass of sulfuric acid. In addition, the evaluation results presented in Table 6 were obtained.

[Comparative Example 2]

The rubber-like graft polymer (A"-2) was obtained in the same manner as in Example 5 except that the emulsifier used in the production of the rubber latex (H-1) was changed to 1.5 parts by mass of sodium alkyl diphenyl ether disulfonate (trade name: PELEX SSL manufactured by Kao Corporation). In addition, the evaluation results presented in Table 6 were obtained.

[Comparative Example 3]

The rubber-like graft polymer (A"-3) was obtained in the same manner as in Example 5 except that calcium acetate of the coagulant was changed to 5 parts of calcium chloride. In addition, the evaluation results presented in Table 6 were obtained.

[Table 5]

Table 5

| | Phenolic antioxidant | | Thioether-based antioxidant | | Calcium acetate | Sulfuric acid | Calcium chloride |
|---|---|---|---|---|---|---|---|
| | Irg1076 | Irg245 | A0-412S | DLDTP | | | |
| | Parts by mass | Parts by mass | Parts by mass | Parts by mass | Parts by mass | Parts by mass | Parts by mass |
| Example 1 | 0.25 | - | 0.75 | - | 5 | - | - |
| Example 2 | 2.5 | - | 0.75 | - | 5 | - | - |
| Example 3 | - | 0.25 | 0.75 | - | 5 | - | - |
| Example 4 | - | 2.5 | 0.75 | - | 5 | - | - |
| Example 5 | - | 0.25 | - | 0.75 | 5 | - | - |
| Comparative Example 1 | - | 0.25 | - | 0.75 | - | 1.3 | - |
| Comparative Example 2 | - | 0.25 | - | 0.75 | 5 | - | - |
| Comparative Example 3 | - | 0.25 | - | 0.75 | - | - | 5 |

[Table 6]

Table 6

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Rubber-like part | Bd | (phr) | 75.0 | 75.0 | 75.0 | 75.0 | 75.0 | 75.0 | 75.0 | 75.0 |
| | BA | (phr) | - | - | - | - | - | - | - | - |
| | St | (phr) | - | - | - | - | - | - | - | - |
| Volume average particle size of rubber particles | | (mn) | 200 | 200 | 200 | 200 | 200 | 200 | 180 | 200 |
| Graft part | MMA | (phr) | 11.5 | 11.5 | 11.5 | 11.5 | 11.5 | 11.5 | 11.5 | 11.5 |
| | BA | (phr) | 1.0 | 1.0 | 1.0 | 1.0 | 1.0 | 1.0 | 1.0 | 1.0 |
| | MA | (phr) | - | - | - | - | - | - | - | - |
| | St | (phr) | 12.5 | 12.5 | 12.5 | 12.5 | 12.5 | 12.5 | 12.5 | 12.5 |
| Volume average particle size of rubber-like graft polymer | | (mn) | 250 | 250 | 250 | 250 | 250 | 250 | 230 | 250 |
| An tioxidant | Irg245 | (phr) | - | - | 0.25 | 2.5 | 0.25 | 0.25 | 0.25 | 0.25 |
| | Irg1076 | (phr) | 0.25 | 2.5 | - | - | - | - | - | - |
| | DLDTP | (phr) | - | - | - | - | 0.75 | 0.75 | 0.75 | 0.75 |
| | A0-412S | (phr) | 0.75 | 0.75 | 0.75 | 0.75 | - | - | - | - |
| Emulsifier | | (-) | -ROOK | -ROOK | -ROOK | -ROOK | -ROONa | -ROOK | -SO3Na | -ROOK |
| Coagulant | | (-) | $(CH_3COO)_2Ca$ | $(CH_3COO)_2Ca$ | $(CH_3COO)_2Ca$ | $(CH_3COO)_2Ca$ | $(CH_3COO)_2Ca$ | $H_2SO_4$ | $(CH_3COO)_2Ca$ | $CaCl_2$ |

(continued)

| | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Content of ion | Sulfate ion ($SO_4^{2-}$) | (ppm) | 1.5 | 1.8 | 2.5 | 2.4 | 2.5 | 6.9 | 3.6 | 2.8 |
| | Sulfite ion ($SO_3^{2-}$) | (ppm) | 0.1 | 0.2 | 0.1 | 0.2 | 0.2 | 0.4 | 1.0 | 0.3 |
| | Total amount of $SO_4^{2-}$ and $SO_3^{2-}$ | (ppm) | 1.6 | 2.0 | 2.6 | 2.6 | 2.7 | 7.3 | 4.6 | 3.1 |
| | Chlorine ion (Cl-) | (ppm) | 10 | 13 | 15 | 18 | 12 | 19 | 16 | 260 |
| Metal corrosivity | | | a | a | a | a | a | a | a | c |
| Charpy impact strength | 23°C | ($kJ/m^2$) | 73 | 74 | 74 | 75 | 74 | 73 | 71 | 71 |
| | -30°C | ($kJ/m^2$) | 24 | 24 | 24 | 24 | 25 | 26 | 19 | 26 |
| $MFR_B$ | | (g/10 min) | 12.7 | 12.4 | 12.0 | 11.3 | 12.3 | 10.5 | 12.5 | 10.9 |
| DMFR | | (g/10 min) | 1.7 | 1.9 | 1.7 | 2.0 | 1.8 | 8.3 | 1.4 | 1.3 |
| $YI_B$ | 0 hr | (-) | -12.2 | -12.1 | -11.6 | -11.3 | -12.6 | -10.4 | -12.2 | -13.9 |
| DYI | 140°C×12 hr | (-) | 23 | 16 | 28 | 25 | 35 | 82 | 61 | 55 |

[Performance comparison of resin composition]

It was found that the resin composition of Example 5 was superior in resistance to thermal coloration (ΔYI) and resistance to moist heat (ΔMFR) to the resin compositions of Comparative Examples 1, 2 and 3. In addition, it was found that the resin compositions of Examples 1 to 4 containing a thioether-based antioxidant of sulfur having a molecular weight of 700 exhibits superior resistance to thermal coloration to the resin composition of Example 5.

The resin composition of Comparative Example 1 used sulfuric acid (strong acid) as a coagulant and thus contained a great amount of sulfate ($SO_4^{2-}$) ion and was inferior in resistance to thermal coloration or resistance to moist heat. The resin composition of Comparative Example 2 used a sulfonate salt (salt of strong acid and strong base) as an emulsifier and thus contained a great amount of sulfate ($SO_4^{2-}$) ion and sulfite ion ($SO_3^{2-}$) in total and was inferior in resistance to thermal coloration. The resin composition of Comparative Example 3 used calcium chloride (salt of strong acid and strong base) as a coagulant and thus contained a great amount of chlorine ($Cl^-$) ion and was inferior in resistance to thermal coloration or resistance to metal corrosion.

Incidentally, in the case of the emulsifier that is a sulfonate salt (salt having an $R\text{-}SO_3^-$ structure) and has been used in Comparative Example 2, a sulfate ($SO_4^{2-}$) ion and a sulfite ion ($SO_3^{2-}$) are contained as impurities in the emulsifier and thus it is possible to confirm the presence or absence of a salt having an $R\text{-}SO_3^-$ structure by detecting the two ions.

As can be seen from Table 6, the polycarbonate resin compositions containing the reinforcing agent for polycarbonate resin of the invention exhibit higher resistance to thermal coloration, and higher resistance to moist heat, resistance to metal corrosion as compared to the polycarbonate resin compositions of Comparative Examples. Hence, the molded article obtained from the polycarbonate resin composition obtained by blending the reinforcing agent for polycarbonate resin of the invention has both excellent resistance to thermal coloration and resistance to moist heat and can be suitably used in the motor vehicle field, the OA equipment field such as a printer, the electric and electronic field such as a mobile phone, and the like.

[Example 11]

<1. Production of rubber latex (H-11)>

The nine kinds of materials presented in the column of the component (11) in Table 7 were prepared. The nitrogen gas was injected to the materials other than 1,3-butadiene so as to put them in a state of substantially not containing oxygen which inhibited the polymerization reaction. Thereafter, these materials were introduced into an autoclave so as to be 100 parts by mass as the polymer solid content. The polymerization was conducted over 9 hours at 50°C. As a result, the rubber latex (H-11) having a percent monomer conversion of approximately 97% and a volume average particle size of 0.08 μm was obtained.

[Table 7]

Table 7

| | Material | Parts by mass |
|---|---|---|
| Component (11) | Butyl acrylate | 55 |
| | 1,3-Butadiene | 45 |
| | Diisopropylbenzene peroxide | 0.2 |
| | Tallow acid potassium sah | 1 |
| | Sodium N-lauroyl sarcosinate (emulsifier) | 0.5 |
| | Sodium pyrophosphate | 0.5 |
| | Ferrous sulfate | 0.005 |
| | Dextrose | 0.3 |
| | Deionized water | 200 |

<2. Production of acid group-containing copolymer latex (K-11) for enlargement>

Into a reaction vessel, the six kinds of materials presented in the column of the component (12) in Table 8 were introduced, the internal temperature thereof was raised to 60°C, and a mixture composed of the three kinds of materials presented in the column of the component (13) in Table 8 was then continuously added thereto dropwise over 2 hours to conduct the polymerization. The stirring was continued for further 2 hours, thereby obtaining the acid group-containing copolymer latex (K-11) having a monomer conversion of 97% or more.

[Table 8]

Table, 8

| | Material | Parts by mass |
|---|---|---|
| Component (12) | Ferrous sulfate | 0.003 |
| | Sodium ethylenediaminetetraacetate | 0.009 |
| | Sodium formaldehyde sulfoxylate | 0.3 |
| | Tallow acid potassium sah | 1.725 |
| | Sodium dialkyl sulfosuccinate | 2.5 |
| | Deionized water | 200 |
| Component (13) | Butyl acrylate | 85 |
| | Methacrylic acid | 15 |
| | Cumene hydroperoxide | 0.5 |

<3. Production of enlarged rubber latex (H-11')>

Into a glass flask, 70 parts by mass of the rubber latex (H-11) as the polymer solid content of the rubber latex (H-11) thus produced was introduced, 2 parts by mass of the acid group-containing copolymer latex (K-11) as the polymer solid content was added thereto at an internal temperature of 50°C and held for 30 minutes. The volume average particle size of the rubber particles of the enlarged rubber latex (H-11') thus obtained was 0.15 μm.

<4. Production of rubber-like graft polymer (A-1)>

To the reaction vessel containing the enlarged rubber latex (H-11'), the five kinds of materials presented in the column of the "initial introduction" in Table 9 were added, and the temperature thereof was raised to 80°C. Subsequently, a mixture composed of the three kinds of materials presented in the column of the "first stage grafting" in Table 9 was added thereto dropwise over 20 minutes so that the polymerization proceeded. The resultant was held for 30 minutes, and a mixture composed of the three kinds of materials presented in the column of the "second stage grafting" in Table 9 was then added thereto dropwise over 70 minutes so that the polymerization proceeded. The resultant was further held for 60 minutes, and a mixture composed of the four kinds of materials presented in the column of the "third stage grafting" in Table 9 was added once again thereto dropwise over 30 minutes so that the polymerization proceeded. The resultant was held for 120 minutes, thereby obtaining a rubber-like graft polymer latex.

[Table 9]

Table 9

| | Material | Example 11 | Example 12 | Example 13 | Example 14 |
|---|---|---|---|---|---|
| | | Parts by mass | Parts by mass | Parts by mass | Parts by mass |
| Initial introduction | Solid content of rubber latex (H-11) | 70.0 | 70.0 | 70.0 | 70.0 |
| | Solid content of acid group-containing copolymer latex (K-11) | 1.4 | 1.4 | 0 | 0 |
| | Deionized water | 45.0 | 45.0 | 45.0 | 45.0 |
| | Sodium formaldehyde sulfoxylate | 0.09 | 0.09 | 0.09 | 0.09 |
| | Sodium N-lauroyl sarcosinate | 0.5 | 0.5 | 0.5 | 0.5 |
| First stage grafting | MMA | 4 | 3.5 | 4 | 3.5 |
| | BA | 1 | 0.5 | 1 | 0.5 |
| | tert-butyl peroxide | 0.02 | 0.02 | 0.02 | 0.02 |
| Second stage grafting | MMA | 10.8 | 5.0 | 10.8 | 5.0 |
| | St | 7.2 | 7.0 | 7.2 | 7.0 |
| | tert-butyl peroxide | 0.07 | 0.07 | 0.07 | 0.07 |
| Third stage grafting | MMA | 6 | 12.9 | 6 | 12.9 |
| | BA | 1 | 0.5 | 1 | 0.5 |
| | 2-hydroxyethyl methacrylate | - | 0.6 | - | 0.6 |
| | tert-butyl peroxide | 0.03 | 0.03 | 0.03 | 0.03 |
| Particle size of rubber (mm) | | 0.15 | 0.15 | 0.08 | 0.08 |
| Refractive index of rubber-like graft polymer | | 1.4975 | 1.5000 | 1.4975 | 1.5000 |

The rubber-like graft polymer latex thus obtained was coagulated by adding to 460 parts by mass of deionized water containing 5 parts by mass of calcium acetate, thereby obtaining the rubber-like graft polymer (A'-11).

<5. Evaluation of rubber-like graft polymer>

The refractive index of the rubber-like graft polymer (A'-11) was measured in accordance with the evaluating method (17). The result was 1.4975.

[Example 12]

The enlarged rubber latex (H-11') was produced in the same manner as in Example 11. Thereafter, the five kinds of materials presented in the column of the "initial introduction" in Table 9 were added to the reaction vessel containing the enlarged rubber latex (H-11'), and the temperature thereof was raised to 80°C. Subsequently, the rubber-like graft copolymer (A'-12) was obtained in the same manner as in Example 11 except that the amounts of the material used from the first graft polymerization step to the third graft polymerization step were changed to the conditions presented in Table 9. The refractive index of the rubber-like graft polymer (A'-12) was 1.5000.

[Example 13]

In the present Example, the rubber-like graft polymer was produced without enlarging the rubber particles of the rubber latex. The rubber latex (H-11) was produced in the same manner as in Example 11. Into a reaction vessel, 70 parts by mass of the rubber latex (H-11) as the polymer solid content of the rubber latex (H-11) thus produced was introduced. Subsequently, the five kinds of materials presented in the column of the "initial introduction" in Table 9 were added into this reaction vessel in the same manner as in Example 11, and the temperature thereof was raised to 80°C. Subsequently, the rubber-like graft copolymer (A'-13) was obtained by conducting from the first graft polymerization step to the third graft polymerization step and the coagulating treatment in the same manner as in Example 11. The refractive

index of the rubber-like graft polymer (A'-13) was 1.4975.

[Example 14]

In the present Example, the rubber-like graft polymer was produced without enlarging the rubber particles of the rubber latex. The rubber latex (H-11) was produced in the same manner as in Example 11. Into a reaction vessel, 70 parts by mass of the rubber latex (H-11) as the polymer solid content of the rubber latex (H-11) thus produced was introduced. Subsequently, the five kinds of materials presented in the column of the "initial introduction" in Table 9 were added into this reaction vessel in the same manner as in Example 12, and the temperature thereof was raised to 80°C. Subsequently, the rubber-like graft copolymer (A'-14) was obtained by conducting from the first graft polymerization step to the third graft polymerization step and the coagulating treatment in the same manner as in Example 12. The refractive index of the rubber-like graft polymer (A'-14) was 1.5000.

[Example 21]

The ISB, the CHDM, the DPC purified by distillation so as to have the concentration of chloride ion of 10 ppb or less, and calcium acetate monohydrate were introduced into an apparatus for polymerization reaction equipped with a stirring blade and a reflux condenser controlled to 100°C so as to have a molar ratio of ISB/CHDM/DPC/calcium acetate monohydrate = $0.70/0.30/1.00/1.3 \times 10^{-6}$, and the inside of the apparatus was sufficiently purged with nitrogen (oxygen concentration: 0.0005 to 0.001% by volume).
Subsequently, heating was conducted by a heat medium, stirring was started at the time point at which the internal temperature reached 100°C, and the contents was melted while controlling the internal temperature to be 100°C. Thereafter, the reduction of pressure was started at the time point at which the internal temperature reached to 210°C in 40 minutes after starting the temperature rise while maintaining the temperature. The pressure was controlled to 13.3 kPa (absolute pressure, the same applies hereinafter) over 90 minutes after reaching 210°C, and this temperature was further maintained for 60 minutes while maintaining the pressure.
The phenol vapor as a byproduct produced along with the polymerization reaction was led to the reflux condenser using steam controlled to 100°C as the temperature of inlet to the reflux condenser as the refrigerant, a small amount of the monomer component contained in the phenol vapor was returned to the apparatus for polymerization reaction, and the phenol vapor that was not condensed was continuously led to a condenser using warm water at 45°C as a refrigerant and recovered.
The pressure of the contents obtained through oligomerization in this manner was temporarily restored to the atmospheric pressure, and the contents were transferred to another apparatus for polymerization reaction equipped with a stirring blade and a reflux condenser that was controlled in the same manner as above, the heating and reduction of pressure were started, and the internal temperature and the pressure were controlled to 220°C and 200 Pa over 60 minutes, respectively. Thereafter, the internal temperature and the pressure were controlled to 230°C and 133 Pa over 20 minutes, respectively, the pressure was restored at the time point at which a predetermined stirring power achieved, and the contents were withdrawn in the form of a strand and formed into a pellet (polycarbonate resin 1) using a rotary cutter.
The glass transition temperature and refractive index of the polycarbonate resin 1 measured by the evaluating methods (10) and (11) were 121°C and 1.4990, respectively.
Next, a resin composition was obtained in which the pellet of the polycarbonate resin 1, the rubber-like graft polymer (A'-11) (refractive index: 1.4975) as an impact strength modifier, UNISTER E-275 as a mold releasing agent, and further IRGANOX 1010 and ADK STAB 2112 as an antioxidant were blended in the composition presented in Table 10. This resin composition was supplied to a biaxial extruder (LABOTEX30HSS-32) with two vent ports manufactured by The Japan Steel Works, Ltd. and extruded into a strand shape so that the resin temperature at the outlet of the extruder reached 250°C, the strand was cooled and solidified in water and pelletized using a rotary cutter. At this time, the vent port was connected to a vacuum pump, and the pressure at the vent port was controlled to be 500 Pa. The pellet-shaped polycarbonate resin composition thus obtained was evaluated by the evaluating methods (12) to (16), and the evaluation results presented in Table 10 were obtained.

[Examples 22 to 24]

The production and evaluation of the polycarbonate resin compositions were conducted in the same manner as in example 21 except that the rubber-like graft polymer (A'-12) (refractive index: 1.5000), the rubber-like graft polymer (A'-13) (refractive index: 1.4975), or the rubber-like graft copolymer (A'-14) (refractive index: 1.5000) was used instead of the rubber-like graft polymer (A'-11), and the evaluation results presented in Table 10 were obtained.

[Comparative Example 11]

The production and evaluation of the polycarbonate resin composition were conducted in the same manner as in example 21 except that the rubber-like graft polymer (A'-11) was not added, and the evaluation results presented in Table 10 were obtained.

[Comparative Examples 12 and 13]

The production and evaluation of the polycarbonate resin compositions were conducted in the same manner as in example 21 except that the METABLEN C-223A (refractive index: 1.5210) or the PARALOID EXL2603 (refractive index: 1.5080) was used instead of the rubber-like graft polymer (A'-11), and the evaluation results presented in Table 10 were obtained.

[Table 10]

Table 10

| | | | Example 21 | Example 22 | Example 23 | Example 24 | Comparative Example 11 | Comparative Example 12 | Comparative Example 13 |
|---|---|---|---|---|---|---|---|---|---|
| Amount blended in resin composition (parts by mass) | Polycarbonate resin (ISB : CHDM = 70 : 30 (% by mole)) | | 100 | 100 | 100 | 100 | 100 | 100 | 100 |
| | Impact strength modifier | Rubber-like graft polymer (A'-11) | 10.0 | - | - | - | - | - | - |
| | | Rubber-like graft polymer (A'-12) | - | 10.0 | - | - | - | - | - |
| | | Rubber-like graft polymer (A'-13) | - | - | 10.0 | - | - | - | - |
| | | Rubber-like graft polymer (A'-14) | - | - | - | 10.0 | - | - | - |
| | | METABLEN C-223A | - | - | - | - | - | 10.0 | - |
| | | PARALOID EXL2603 | - | - | - | - | - | - | 10.0 |
| | Mold releasing agent | UNISTER E-275 | 0.3 | 0.3 | 0.3 | 0.3 | 0.3 | 0.3 | 0.3 |
| | Antioxidant | Irgl010 (phenolic) | 0.1 | 0.1 | 0.1 | 0.1 | 0.1 | 0.1 | 0.1 |
| | | ADK2112 (phosphite-based) | 0.05 | 0.05 | 0.05 | 0.05 | 0.05 | 0.05 | 0.05 |

(continued)

| | | Example 21 | Example 22 | Example 23 | Example 24 | Comparative Example 11 | Comparative Example 12 | Comparative Example 13 |
|---|---|---|---|---|---|---|---|---|
| Evaluation result | Total light transmittance (%) | 88 | 86 | 87 | 87 | 91 | 63 | 77 |
| | Haze (%) | 14 | 5 | 8 | 15 | 1 | 84 | 22 |
| | YI | 1 | 8 | 5 | 3 | 3 | 135 | 58 |
| | Charpy impact strength (kJ/m $^2$) | 32 | 27 | 31 | 34 | 9 | 49 | 40 |
| | Surface impact brittle fracture rate (%) | 100 | 0 | - | - | 10 | 10 | 0 |
| Difference in refractive index between PC resin and rubber-like graft polymer | | 0.0015 | -0.0010 | 0.0015 | -0.0010 | - | -0.0220 | -0.0090 |

[Example 25]

The "polycarbonate resin 2" was obtained in the same manner as in Example 21 except that the ISB, the CHDM, the DPC purified by distillation so as to have the concentration of chloride ion of 10 ppb or less, and calcium acetate monohydrate were introduced into an apparatus for polymerization reaction equipped with a stirring blade and a reflux condenser controlled to 100°C so as to have a molar ratio of ISB/CHDM/DPC/calcium acetate monohydrate = 0.50/0.50/1.00/1.3 $\times$ $10^{-6}$. The glass transition temperature of the polycarbonate resin 2 was 99°C and the refractive index measured using the Abbe refractometer was 1.4985.

The production and evaluation of the polycarbonate resin composition were conducted in the same manner as in example 21 except that the polycarbonate resin 2 was used instead of the polycarbonate resin 1 and the amount of rubber-like graft polymer (A'-11) blended with respect to 100 parts by mass of the polycarbonate resin 2 was 5.0 parts by mass, and the evaluation results presented in Table 11 were obtained.

[Comparative Example 14]

The production and evaluation of the polycarbonate resin composition were conducted in the same manner as in example 25 except that the rubber-like graft polymer (A'-11) was not added, and the evaluation results presented in Table 11 were obtained.

[Comparative Examples 15 and 16]

The production and evaluation of the polycarbonate resin compositions were conducted in the same manner as in example 25 except that the METABLEN C-223A (refractive index: 1.5210) or the PARALOID EXL2603 (refractive index: 1.5080) was used instead of the rubber-like graft polymer (A'-11), and the evaluation results presented in Table 11 were obtained.

[Table 11]

Table 11

| | | | Example 25 | Comparative Example 14 | Comparative Example 15 | Comparative Example 16 |
|---|---|---|---|---|---|---|
| Amount blended in resin composition (parts by mass) | Polycarbonate resin (ISB : CHDM = 50 : 50 (% by mole)) | | 100 | 100 | 100 | 100 |
| | Impact strength modifier | Rubber-like graft polymer (A'-11) | 5.0 | - | - | - |
| | | METABLEN C-223A | - | - | 5.0 | - |
| | | PARALOID EXL2603 | - | - | - | 5.0 |
| | Mold releasing agent | UNISTER E-275 | 0.3 | 0.3 | 0.3 | 0.3 |
| | Antioxidant | IRGANOX 1010 (phenolic) | 0.1 | 0.1 | 0.1 | 0.1 |
| | | ADK STAB 2112 (phosphite-based) | 0.05 | 0.05 | 0.05 | 0.05 |

(continued)

| | | Example 25 | Comparative Example 14 | Comparative Example 15 | Comparative Example 16 |
|---|---|---|---|---|---|
| Evaluation result | Total light transmittance (%) | 89 | 90 | 72 | 83 |
| | Haze (%) | 3 | 2 | 59 | 9 |
| | YI | 4 | 3 | 100 | 33 |
| | Charpy impact strength (kJ/m$^2$) | 120 | 10 | 144 | 29 |
| Difference in refractive index between PC resin and rubber-like graft polymer | | 0.0010 | - | -0.0225 | -0.0095 |

As can be seen from Tables 10 and 11, the polycarbonate resin compositions of the invention had a higher total light transmittance and a higher Charpy notched impact strength as compared to the polycarbonate resin compositions of Comparative Examples. Hence, it can be seen that the polycarbonate resin molded article of the invention has both excellent transparency and impact strength and can be suitably used in the building material field, the electric and electronic field, the motor vehicle field, the optical part field, and the like.

## Claims

**1.** A reinforcing agent for polycarbonate resin comprising a rubber-like graft polymer,
wherein a rubber part of the rubber-like graft polymer contains a butadiene structural unit,
and wherein a graft part of the rubber-like graft polymer contains a methyl methacrylate structural unit, and wherein
a ΔYI value of a test piece fabricated by molding a polycarbonate resin composition containing the rubber-like graft polymer at 3 parts by mass and an aromatic polycarbonate resin having a viscosity average molecular weight of 24,000 at 97 parts by mass under the following conditions is 36 or less, and
a ΔMFR value of a pellet of the polycarbonate resin composition is 3 or less:

["Condition 1" condition for fabricating pellet and test piece:
The polycarbonate resin composition is kneaded using a devolatilization type extruder (PCM-30 manufactured by Ikegai Corp.) heated to have a barrel temperature of 280°C under a condition of a screw rotation speed of 150 rpm to obtain a pellet. This pellet is molded using a 100 t injection molding machine (SE-100DU manufactured by Sumitomo Heavy Industries, Ltd.) under a condition of a cylinder temperature of 280°C and a mold temperature of 90°C to obtain a test piece (length: 100 mm, width: 50 mm, thickness: 2 mm) having a flat plate shape.
"Condition 2" condition for measuring ΔYI value:
A YI value of the test piece is measured in conformity with JIS K7105 by a reflected light measuring method using a spectral color difference meter (model name "SE2000" manufactured by NIPPON DENSHOKU INDUSTRIES Co., LTD.) under a condition of a C light source and a 2 degree field of view. First, a YI value ($YI_B$) of the test piece before being heat aged is measured. Subsequently, a YI value ($YI_A$) of the test piece after being heat aged for 12 hours at a temperature of 140°C using a high temperature oven (model name "PMS-B" manufactured by ESPEC CORP.) is measured. A ΔYI value is calculated by the following Equation.

$$\Delta YI = YI_A - YI_B$$

"Condition 3" condition for measuring ΔMFR value:
A melt mass flow rate (MFR) value of the pellet is measured at a cylinder temperature of 300°C and a load of 1.2 kg in conformity with ISO1133 using a melt indexer (model name "S-111" manufactured by TOYO SEIKI SEISAKU-SHO LTD.), First, a MFR value ($MFR_B$) of a pellet before being heat aged is measured. Subsequently, a MFR value ($MFR_A$) of another pellet after being heat aged for 60 hours under a condition of a temperature of

120°C and a relative humidity of 100% using a pressure cooker (model name "unsaturated type highly accelerated life test equipment PC-422R" manufactured by HIRAYAMA MANUFACTURING CORPORATION). A ΔMFR value is calculated by the following Equation.

$$\Delta MFR = MFR_A - MFR_B],$$

wherein a total amount (g/g) of a sulfate ion ($SO_4^{2-}$) and a sulfite ion ($SO_3^{2-}$) that are contained in the rubber-like graft polymer and measured through the following extraction treatment by hot water is 3.5 ppm or less:
[condition for hot water extraction:
into a pressure proof glass vessel, 20.0 g of the rubber-like graft polymer is weighed and introduced, 200 ml of deionized water is added to this, and an extraction treatment by hot water is conducted for 20 hours at 95°C in a gear oven],

**2.** The reinforcing agent for polycarbonate resin according to claim 1, wherein a content (g/g) of a chlorine ion ($Cl^-$) contained in the rubber-like graft polymer is 150 ppm or less.

**3.** The reinforcing agent for polycarbonate resin according to any one of claims 1 to 2, wherein the rubber-like graft polymer contains a thioether-based antioxidant having a molecular weight of 700 or more.

**4.** The reinforcing agent for polycarbonate resin according to any one of claims 1 to 3, wherein a rubber part of the rubber-like graft polymer contains a butadiene structural unit at 70% by mass or more.

**5.** A polycarbonate resin composition comprising the reinforcing agent for polycarbonate resin according to any one of claims 1 to 4 and a polycarbonate resin.

**6.** The polycarbonate resin composition according to claim 5, wherein the polycarbonate resin is a polycarbonate resin containing a structural unit derived from a dihydroxy compound having a moiety represented by the following Formula (1) at a part of the structure:
[Chem. 1]

$$\left( CH_2\text{-}O \right) \qquad (1)$$

[however, a case in which the moiety represented by Formula (1) is a part of $-CH_2-O-H$ is excluded].

**7.** The polycarbonate resin composition according to claim 5 or 6, in which the polycarbonate resin composition further comprises a thioether-based antioxidant having a molecular weight of 700 or more.

**8.** A molded article obtained by molding the polycarbonate resin composition according to any one of claims 5 to 7.

**9.** A method for producing a reinforcing agent for polycarbonate resin containing a rubber-like graft polymer, the method comprising the following step (1) and step (2):

[step (1): a step of obtaining a rubber-like graft polymer latex through emulsion polymerization of a vinyl monomer (g) in the presence of a rubber latex containing an emulsifier of a salt of a weak acid and a strong base, and
step (2): a step of spray collecting the rubber-like graft polymer latex or coagulating and collecting the rubber-like graft polymer latex using a coagulant of a salt of a weak acid and a strong base].

**10.** The method according to claim 9, wherein a volume average particle size of rubber particles in the rubber latex is from 0.01 to 1 μm, wherein volume average particle size of the rubber particles in the rubber latex means the 50% volume average particle size of the rubber particles in the rubber latex measured using a light scattering particle analyzer.

**11.** A polycarbonate resin composition comprising a polycarbonate resin containing a structural unit derived from a dihydroxy compound having a moiety represented by the following Formula (1) at a part of the structure and a rubber-like graft polymer, wherein
a difference between a refractive index of the rubber-like graft polymer and a refractive index of the polycarbonate resin is 0.005 or less, and a rubber part of the rubber-like graft polymer has a butadiene structural unit and an alkyl

acrylate structural unit:
[Chem. 2]

$$-(CH_2-O)- \quad (1)$$

[a case in which the moiety represented by Formula (1) is a part of $-CH_2-O-H$ is excluded].

**12.** The polycarbonate resin composition according to claim 11, wherein the rubber-like graft polymer is a polymer obtained by coagulating and collecting a rubber-like graft polymer latex obtained through emulsion polymerization using an aliphatic emulsifier using an alkaline earth metal salt.

**13.** The polycarbonate resin composition according to claim 12, wherein the rubber-like graft polymer latex is one obtained by polymerizing a vinyl monomer (g') in the presence of a rubber latex, and the vinyl monomer (g') contains a vinyl monomer (p) having a polar group.

**14.** The polycarbonate resin composition according to claim 13, wherein a volume average particle size of rubber particles in the rubber latex is from 0.1 to 1 μm, wherein volume average particle size of the rubber particles in the rubber latex means the 50% volume average particle size of the rubber particles in the rubber latex measured using a light scattering particle analyzer.

**15.** A polycarbonate resin molded article obtained by molding the polycarbonate resin composition according to any one of claims 11 to 14.

**Patentansprüche**

**1.** Verstärkungsmittel für Polycarbonatharz, umfassend ein kautschukartiges Pfropfpolymer,
wobei ein Kautschukteil des kautschukartigen Pfropfpolymers eine Butadien-Struktureinheit enthält und wobei ein Pfropfteil des kautschukartigen Pfropfpolymers eine Methylmethacrylat-Struktureinheit enthält und
wobei
ein ΔYI-Wert eines Probestücks, das durch Formen einer Polycarbonatharz-Zusammensetzung hergestellt ist, die das kautschukartige Pfropfpolymer zu 3 Massenteilen und ein aromatisches Polycarbonatharz, das ein viskositätsmittleres Molekulargewicht von 24.000 aufweist, zu 97 Massenteilen enthält, unter den folgenden Bedingungen 36 oder weniger beträgt und
ein AMFR-Wert eines Pellets der Polycarbonatharz-Zusammensetzung 3 oder weniger beträgt:

["Bedingung 1", Bedingung zum Herstellen eines Pellets und Probestücks:
Die Polycarbonatharz-Zusammensetzung wird unter Benutzen eines Extruders vom Entgasungstyp (PCM-30, hergestellt von der Ikegai Corp.), der auf eine Trommeltemperatur von 280 °C erhitzt wird, unter einer Bedingung einer Schneckendrehzahl von 150 U/min geknetet, um ein Pellet zu gewinnen. Dieses Pellet wird unter Benutzen einer 100-t-Spritzgießmaschine (SE-100DU, hergestellt von Sumitomo Heavy Industries, Ltd.) unter einer Bedingung einer Zylindertemperatur von 280 °C und einer Formtemperatur von 90 °C geformt, um ein Probestück (Länge: 100 mm, Breite: 50 mm, Dicke: 2 mm) zu gewinnen, das eine flache Plattengestalt aufweist.
"Bedingung 2", Bedingung zum Messen des ΔYI-Wertes:
Ein YI-Wert des Probestücks wird in Übereinstimmung mit JIS K7105 mithilfe eines Reflexionslicht-Messverfahrens unter Benutzen eines Spektralfarbdifferenz-Messgerätes (Modellname "SE2000", hergestellt von NIPPON DENSHOKU INDUSTRIES Co., LTD.) unter einer Bedingung einer C-Lichtquelle und eines Sichtfeldes von 2 Grad gemessen. Zuerst wird ein YI-Wert ($YI_B$) des Probestücks vor Wärmealtern gemessen. Nachfolgend wird ein YI-Wert ($YI_A$) des Probestücks gemessen, nachdem es 12 Stunden lang bei einer Temperatur von 140 °C unter Benutzen eines Hochtemperaturofens (Modellname "PMS-B", hergestellt von der ESPEC CORP.) wärmegealtert wurde. Ein ΔYI-Wert wird durch die folgende Gleichung berechnet:

$$\Delta YI = YI_A - YI_B$$

"Bedingung 3", Bedingung zum Messen des AMFR-Wertes:
Ein Schmelz-Massendurchfluss-(MFR)-Wert des Pellets wird bei einer Zylindertemperatur von 300 °C und einer Beladung von 1,2 kg in Übereinstimmung mit ISO 1133 unter Benutzen eines Schmelzindex-Prüfgerätes (Modellname "S-111", hergestellt von TOYO SEIKI SEISAKU-SHO LTD.) gemessen. Zuerst wird ein MFR-Wert ($MFR_B$) eines Pellets vor Wärmealtern gemessen. Nachfolgend wird ein MFR-Wert ($MFR_A$) eines anderen Pellets gemessen, nachdem es 60 Stunden lang unter einer Bedingung einer Temperatur von 120 °C und einer relativen Luftfeuchtigkeit von 100 % unter Benutzen eines Druckkochers (Modellname "hochbeschleunigte Lebensprüfausrüstung vom ungesättigten Typ PC-422R", hergestellt von der HIRAYAMA MANUFACTURING CORPORATION) wärmegealtert wurde. Ein AMFR-Wert wird durch die folgende Gleichung berechnet:

$$\Delta MFR = MFR_A - MFR_B,$$

wobei eine Gesamtmenge (g/g) eines Sulfations ($SO_4^{2-}$) und eines Sulfitions ($SO_3^{2-}$), die in dem kautschukartigen Pfropfpolymer enthalten sind und durch die folgende Extraktionsbehandlung mittels heißen Wassers gemessen werden, 3,5 ppm oder weniger beträgt:

[Bedingung für Heißwasserextraktion:

In ein druckfestes Glasgefäß werden 20,0 g des kautschukartigen Pfropfpolymers gewogen und eingefüllt, 200 ml entionisiertes Wasser werden dazugegeben, und eine Extraktionsbehandlung mittels heißen Wassers wird 20 Stunden lang bei 95 °C in einem Geer-Ofen durchgeführt].

**2.** Verstärkungsmittel für Polycarbonatharz nach Anspruch 1, wobei ein Gehalt (g/g) eines Chlorions ($Cl^-$), das in dem kautschukartigen Pfropfpolymer enthalten ist, 150 ppm oder weniger beträgt.

**3.** Verstärkungsmittel für Polycarbonatharz nach einem von Anspruch 1 bis 2, wobei das kautschukartige Pfropfpolymer ein Thioether-basiertes Antioxidans enthält, das ein Molekulargewicht von 700 oder mehr aufweist.

**4.** Verstärkungsmittel für Polycarbonatharz nach einem von Anspruch 1 bis 3, wobei ein Kautschukteil des kautschukartigen Pfropfpolymers eine Butadien-Struktureinheit zu 70 Masse-% oder mehr enthält.

**5.** Polycarbonatharz-Zusammensetzung, umfassend das Verstärkungsmittel für Polycarbonatharz nach einem von Anspruch 1 bis 4 und ein Polycarbonatharz.

**6.** Polycarbonatharz-Zusammensetzung nach Anspruch 5, wobei das Polycarbonatharz ein Polycarbonatharz ist, das eine Struktureinheit enthält, die von einer Dihydroxyverbindung abkommt, die einen Molekülteil, der durch die folgende Formel (1) dargestellt ist, an einem Teil der Struktur aufweist:
[Chem. 1]

$$\left( CH_2\text{-}O \right) \qquad (1)$$

[ein Fall, in dem der Molekülteil, der durch Formel (1) dargestellt ist, ein Teil von $-CH_2-O-H$ ist, ist jedoch ausgeschlossen].

**7.** Polycarbonatharz-Zusammensetzung nach Anspruch 5 oder 6, wobei die Polycarbonatharz-Zusammensetzung ferner ein Thioether-basiertes Antioxidans umfasst, das ein Molekulargewicht von 700 oder mehr aufweist.

**8.** Formgegenstand, der durch Formen der Polycarbonatharz-Zusammensetzung nach einem von Anspruch 5 bis 7 erhalten wurde.

**9.** Verfahren zum Herstellen eines Verstärkungsmittels für Polycarbonatharz, das ein kautschukartiges Pfropfpolymer enthält, wobei das Verfahren den folgenden Schritt (1) und (2) umfasst:

[Schritt (1) : ein Schritt des Gewinnens eines kautschukartigen Pfropfpolymerlatex durch Emulsionspolymerisation eines Vinylmonomers (g) in Gegenwart eines Kautschuklatex, der einen Emulgator aus einem Salz einer schwachen Säure und einer starken Base enthält, und
Schritt (2): ein Schritt des Sprühnebelauffangens des kautschukartigen Pfropfpolymerlatex oder des Koagulierens und Auffangens des kautschukartigen Pfropfpolymerlatex unter Benutzen eines Koagulans aus einem Salz einer schwachen Säure und einer starken Base].

**10.** Verfahren nach Anspruch 9, wobei eine volumenmittlere Teilchengröße von Kautschukteilchen in dem Kautschuklatex 0,01 bis 1 μm beträgt, wobei die volumenmittlere Teilchengröße der Kautschukteilchen in dem Kautschuklatex die volumenmittlere Teilchengröße von 50 % der Kautschukteilchen in dem Kautschuklatex, gemessen unter Benutzen eines lichtstreuenden Teilchenanalysators, bedeutet.

**11.** Polycarbonatharz-Zusammensetzung, umfassend ein Polycarbonatharz, das eine Struktureinheit enthält, die von einer Dihydroxyverbindung abkommt, die einen Molekülteil, der durch die folgende Formel (1) dargestellt ist, an einem Teil der Struktur aufweist, und ein kautschukartiges Pfropfpolymer,
wobei
eine Differenz zwischen einem Brechungsindex des kautschukartigen Pfropfpolymers und einem Brechungsindex des Polycarbonatharzes 0,005 oder weniger beträgt und ein Kautschukteil des kautschukartigen Pfropfpolymers eine Butadien-Struktureinheit und eine Alkylacrylat-Struktureinheit aufweist:
[Chem. 2]

$$\text{-}(CH_2\text{-}O)\text{-} \qquad (1)$$

[ein Fall, in dem der Molekülteil, der durch Formel (1) dargestellt ist, ein Teil von $-CH_2-O-H$ ist, ist ausgeschlossen].

**12.** Polycarbonatharz-Zusammensetzung nach Anspruch 11, wobei das kautschukartige Pfropfpolymer ein Polymer ist, das durch Koagulieren und Auffangen eines kautschukartigen Pfropfpolymerlatex gewonnen wurde, der durch Emulsionspolymerisation unter Benutzen eines aliphatischen Emulgators unter Benutzen eines Erdalkalimetallsalzes gewonnen wurde.

**13.** Polycarbonatharz-Zusammensetzung nach Anspruch 12, wobei der kautschukartige Pfropfpolymerlatex einer ist, der durch Polymerisieren eines Vinylmonomers (g') in Gegenwart eines Kautschuklatex gewonnen wurde und das Vinylmonomer (g') ein Vinylmonomer (p) enthält, das eine polare Gruppe aufweist.

**14.** Polycarbonatharz-Zusammensetzung nach Anspruch 13, wobei eine volumenmittlere Teilchengröße von Kautschukteilchen in dem Kautschuklatex 0,1 bis 1 μm beträgt, wobei die volumenmittlere Teilchengröße der Kautschukteilchen in dem Kautschuklatex die volumenmittlere Teilchengröße von 50 % der Kautschukteilchen in dem Kautschuklatex, gemessen unter Benutzen eines lichtstreuenden Teilchenanalysators, bedeutet.

**15.** Formgegenstand aus Polycarbonatharz, der durch Formen der Polycarbonatharz-Zusammensetzung nach einem von Anspruch 11 bis 14 erhalten wurde.

## Revendications

**1.** Un agent de renforcement pour une résine de polycarbonate comprenant un polymère greffé de type caoutchouc, dans lequel une partie de caoutchouc du polymère greffé de type caoutchouc contient une unité de structure de butadiène,
et dans lequel un partie greffée du polymère greffé de type caoutchouc contient une unité de structure de méthacrylate de méthyle, et
dans lequel
une valeur ΔYI d'une éprouvette fabriquée par moulage d'une composition de résine de polycarbonate contenant le polymère greffé de type caoutchouc à 3 parties en masse et une résine de polycarbonate aromatique ayant un poids moléculaire moyen en viscosité de 24.000 à 97 parties en masse dans les conditions suivantes est de 36 ou moins :

[« Condition 1 » condition pour la fabrication de boulette et d'éprouvette :
la composition de résine de polycarbonate est malaxée en utilisant un extrudeur du type de dévolatilisation (PCM30 fabriqué par Ikegai Corp.) chauffé pour avoir une température du baril de 280 °C sous une condition de vitesse de rotation de la vis de 150 tours par minute pour obtenir une boulette. Cette boulette est moulue en utilisant une machine à moulage par injection à 100 t (SE-100DU fabriqué par Sumitomo Heavy Industries, Ltd.) sous la condition d'une température de cylindre de 280 °C et d'une température de moule de 90 °C afin d'obtenir une éprouvette (longueur : 100 mm, largeur : 50 mm, épaisseur : 2 mm) ayant une forme de plaque plate.
« Condition 2 » condition pour mesurer la valeur ΔYI :

Une valeur YI de l'éprouvette est mesurée en conformité avec JIS K7105 par un procédé de mesure de lumière reflétée en utilisant un mètre de différence de couleur spectrale (modèle du nom « SE2000 » fabriqué par NIPPON DENSHOKU INDUSTRIES Co. LTD) sous une condition d'une source de lumière C et d'un champ de vue de 2 degrés. D'abord, une valeur YI ($YI_B$) de l'éprouvette avant d'être vieillie thermiquement est mesurée. Ensuite, une valeur YI ($YI_A$) de l'éprouvette après avoir été vieillie thermiquement durant 12 h à une température de 140 °C en utilisant un four à haute température (modèle du nom « PMS-B » fabriqué par ESPEC CORP.) est mesurée. Une valeur ΔYI est calculée par le moyen de l'équation suivante.

$$\Delta YI = YI_A - YI_B$$

« Condition 3 » condition pour la mesure de la valeur ΔMFR :
Une vitesse de flux de masse fusionnée (MFR) de la boulette est mesurée à une température de cylindre de 300 °C et une charge de 1,2 kg en conformité avec ISO1133 en utilisant un indexeur de fusion (modèle du nom « S-111» fabriqué par TOYO SEIKI SEISAKU-SHO LTD.). D'abord, une valeur MFR ($MFR_B$) d'une boulette avant d'être vieillie thermiquement est mesurée. Ensuite, une valeur MFR ($MFR_A$) d'une autre boulette après avoir été vieillie thermiquement durant 60 h à une température de 120 °C et une humidité relative de 100% en utilisant un cuiseur à pression (modèle du nom « unsaturated type highly accelerated life test equipment » fabriqué par HIRAYAMA MANUFACTURING CORPORATION). Une valeur ΔMFR est calculée par le moyen de l'équation suivante.

$$\Delta MFR = MFR_A - MFR_B],$$

dans laquelle une quantité totale (g / g) d'un ion de sulfate ($SO_4^{2-}$) et d'un ion de sulfite ($SO_3^{2-}$) qui est contenue dans le polymère greffé de type caoutchouc et qui est mesurée par le moyen de traitement suivant d'extraction à l'eau chaude est de 3,5 ppm ou moins.
[Condition pour l'extraction à l'eau chaude :
Dans un récipient en verre résistant à la pression, 20,0 g du polymère greffé de type caoutchouc sont pesés et introduits, 200 ml d'eau dé-ionisé y sont ajouté et on effectue un traitement d'extraction à l'eau chaude pendant 20 heures à 95 °C dans un four pour équipement].

**2.** L'agent de renforcement pour une résine de polycarbonate selon la revendication 1, dans lequel une teneur (g / g) d'un ion de chlorure ($Cl^-$) contenue dans le polymère greffé de type caoutchouc est de 150 ppm ou moins.

**3.** L'agent de renforcement pour une résine de polycarbonate selon l'une quelconque des revendications 1 à 2, dans lequel le polymère greffé de type caoutchouc contient un antioxydant à base de thioéther ayant un poids moléculaire de 700 ou plus.

**4.** L'agent de renforcement pour une résine de polycarbonate selon l'une quelconque des revendications 1 à 3, dans lequel une partie en caoutchouc du polymère greffé de type caoutchouc contient une unité de structure de butadiène à 70% en masse ou plus.

**5.** Une composition de résine de polycarbonate comprenant l'agent de renforcement pour une résine de polycarbonate selon l'une quelconque des revendications 1 à 4 et une résine de polycarbonate.

**6.** La composition de résine de polycarbonate selon la revendication 5, dans laquelle la résine de polycarbonate est une résine de polycarbonate contenant une unité de structure dérivée d'un composé dihydroxy ayant un groupement représenté par la formule (1) suivante sur une partie de la structure:
[Chim. 1]

$$\left( CH_2\text{-}O \right) \qquad (1)$$

[cependant, un cas dans lequel le fragment représenté par la formule (1) fait partie de $-CH_2-O-H$ est exclu].

**7.** La composition de résine de polycarbonate selon la revendication 5 ou 6, dans laquelle la composition de résine de polycarbonate comprend en outre un antioxydant à base de thioéther ayant un poids moléculaire de 700 ou plus.

**8.** Un article moulé obtenu par moulage de la composition de résine de polycarbonate selon l'une quelconque des revendications 5 à 7.

**9.** Un procédé pour produire un agent de renforcement pour résine de polycarbonate contenant un polymère greffé de type caoutchouc, le procédé comprenant l'étape (1) et l'étape (2) suivantes:

[étape (1): une étape d'obtention d'un latex de polymère greffé de type caoutchouc par polymérisation en émulsion d'un monomère vinylique (g) en la présence d'un latex de caoutchouc contenant un émulsifiant d'un sel d'un acide faible et d'une base forte, et
étape (2): une étape de recueil par pulvérisation du latex de polymère greffé de type caoutchouc ou de coagulation et de recueil du latex de polymère greffé de type caoutchouc en utilisant un coagulant d'un sel d'un acide faible et d'une base forte].

**10.** Le procédé selon la revendication 9, dans lequel une taille de particule moyenne en volume de particules de caoutchouc dans le latex de caoutchouc est de 0,01 à 1 $\mu$m, dans lequel taille de particule moyenne en volume de particules de caoutchouc dans le latex de caoutchouc signifie taille de particule moyenne en volume à 50% des particules de caoutchouc dans le latex de caoutchouc tel que mesuré en utilisant un analyseur de particules à diffusion de lumière.

**11.** Une composition de résine de polycarbonate comprenant une résine de polycarbonate contenant une unité structurale dérivée d'un composé dihydroxy ayant un fragment représenté par la formule (1) suivante sur une partie de la structure et un polymère greffé de type caoutchouc, dans lequel
une différence entre un indice de réfraction du polymère greffé de type caoutchouc et un indice de réfraction de la résine de polycarbonate est de 0,005 ou moins, et une partie caoutchouc du polymère greffé de type caoutchouc a une unité de structure de butadiène et une unité de structure d'acrylate d'alkyle:
[Chim. 2]

$$\left\{ CH_2\text{-}O \right\} \qquad (1)$$

[un cas dans lequel le fragment représenté par la formule (1) fait partie de $-CH_2-O-H$ est exclu].

**12.** La composition de résine de polycarbonate selon la revendication 11, dans laquelle le polymère greffé de type caoutchouc est un polymère obtenu en coagulant et en recueillant un latex de polymère greffé de type caoutchouc obtenu par polymérisation en émulsion en utilisant un émulsifiant aliphatique en utilisant un sel de métal alcalino-terreux.

**13.** La composition de résine de polycarbonate selon la revendication 12, dans laquelle le latex de polymère greffé de type caoutchouc est un latex obtenu en polymérisant un monomère vinylique (g') en la présence d'un latex de caoutchouc, et le monomère vinylique (g') contient un monomère vinylique (p) ayant un groupe polaire.

**14.** La composition de résine de polycarbonate selon la revendication 13, dans laquelle une taille de particule moyenne en volume de particules de caoutchouc dans le latex de caoutchouc est de 0,1 à 1 $\mu$m, dans lequel taille de particule moyenne en volume de particules de caoutchouc dans le latex de caoutchouc signifie taille de particule moyenne en volume à 50% des particules de caoutchouc dans le latex de caoutchouc tel que mesuré en utilisant un analyseur de particules à diffusion de lumière.

**15.** Un article moulé en résine de polycarbonate obtenu par moulage de la composition de résine de polycarbonate selon l'une quelconque des revendications 11 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11343380 B
- GB 1079686 A
- JP 56055425 A
- WO 04111106 A
- JP 6145336 A
- JP 63012896 B
- WO 08146719 A
- JP 2007070438 A
- WO 2012008344 A
- JP 11158365 A
- JP 2010275449 A